(19)

**Europäisches Patentamt**

**European Patent Office**

**Office européen des brevets**

(11)  **EP 3 633 614 B1**

(12) **EUROPEAN PATENT SPECIFICATION**

(45) Date of publication and mention
of the grant of the patent:
**20.11.2024  Bulletin 2024/47**

(21) Application number: **18198399.0**

(22) Date of filing: **03.10.2018**

(51) International Patent Classification (IPC):
**G06T 7/246** *(2017.01)*

(52) Cooperative Patent Classification (CPC):
**G06T 7/248;** G06T 2207/10056; H01J 2237/221

(54) **OBJECT TRACKING USING IMAGE SEGMENTATION**

OBJEKTVERFOLGUNG MITTELS BILDSEGMENTIERUNG

SUIVI D'OBJETS UTILISANT UNE SEGMENTATION D'IMAGES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**08.04.2020  Bulletin 2020/15**

(73) Proprietor: **FEI Company
Hillsboro, OR 97124-5793 (US)**

(72) Inventors:
• **Potocek, Pavel
5654 PX Eindhoven Noord-Brabant (NL)**

• **Korkmaz, Ms. Emine
5508 VP Veldhoven Noord-Brabant (NL)**
• **Schoenmakers, Remco
5685 HE Best Noord-Brabant (NL)**

(74) Representative: **Janssen, Francis-Paul
FEI Company
Patent Department
P.O.Box 1745
5602 BS Eindhoven (NL)**

(56) References cited:
**EP-A1- 2 796 917          WO-A1-2006/134444
WO-A2-2008/153836      US-A1- 2009 091 566
US-A1- 2014 192 178**

EP 3 633 614 B1

## Description

TECHNICAL FIELD

The present disclosure relates to specimen image acquisition. In particular, the present disclosure relates to object tracking using image segmentation.

BACKGROUND

Microscopy is the technical field of using microscopes to better view objects that are difficult to see with the naked eye. Different branches of microscopy include, for example: optical microscopy, charged particle (electron and/or ion) microscopy, and scanning probe microscopy.

Charged particle microscopy involves using a beam of accelerated charged particles as a source of illumination. Types of electron microscopy include, for example: transmission electron microscopy, scanning electron microscopy, scanning transmission electron microscopy, and focused ion beam microscopy.

Components of a transmission electron microscope (TEM) include: an electron optical column, a vacuum system, the necessary electronics (lens supplies for focusing and deflecting the beam and the high voltage generator for the electron source), and control software. An electron optical column includes an electron gun on one end and a viewing device (such as a camera) on the other end. An electron beam emerges from the electron gun, and passes through a thin specimen, transmitting electrons which are collected, focused, and projected onto the viewing device. The entire electron path from gun to camera is under vacuum.

Similar to a TEM, components of a scanning electron microscope (SEM) include: an electron optical column, a vacuum system, the necessary electronics (lens supplies for focusing and deflecting the beam and the high voltage generator for the electron source), and control software. An electron gun is positioned on one end of the electron optical column. A specimen is positioned on the other end of the electron column. An electron beam from the electron gun is focused into a fine spot on the specimen surface. The electron beam is scanned in a rectangular raster over the specimen. The intensities of various signals created by interactions between the beam electrons and the specimen are measured and stored in computer memory. The stored values are then mapped as variations in brightness on the image display.

A scanning transmission electron microscope (STEM) is similar to a TEM in that images are formed by electrons passing through a sufficiently thin specimen. However, unlike TEM, a STEM focuses the electron beam on a fine spot, which is then scanned over the sample in a raster illumination system.

A focused ion beam microscope (FIB microscope) is similar to a SEM, however a FIB microscope uses a beam of ions instead of a beam of electrons. Examples of ion beam sources include liquid metal ion sources (LMIS), such as gallium ion sources.

A microscope is associated with a variety of configurable microscopy parameters. Examples of microscopy parameters of a SEM include: an accelerating voltage (a voltage at which electrons are being accelerated as the electrons travel through an electron optical column); a convergence angle of the electron beam; a beam current; a spot size (a diameter of the beam spot on the specimen); a dwell time; and a resolution. Different values for the various microscopy parameters result in images of different qualities and attributes. For example, higher magnification requires a smaller spot size. Higher signal-to-noise ratio and contrast resolution requires greater beam current. However, reducing the spot size also decreases the beam current.

Various methods may be used for obtaining a three-dimensional (3D) rendering of a specimen. As an example, block face scanning electron microscopy involves mounting a specimen in a vacuum chamber of a microscope; capturing an image of the block face of the specimen using the microscope; cutting off a thin slice from the face of the block; raising the specimen such that the new block face returns to the focal plane of the microscope; and capturing another image of the new block face. The process iterates until the entire 3D volume has been captured. As another example, serial section scanning electron microscopy involves cutting a specimen into thin slices; mounting a first slice in a vacuum chamber of a microscope; capturing an image of the surface of the first slice; mounting the next slice in the vacuum chamber of the microscope; capturing another image of the surface of the current slice. This process iterates until images for all slices have been captured. The term "section surface" as used herein refers to a portion of a specimen captured in each 2D image, such as a block face in the block face scanning electron microcopy method, or the surface of a slice in the serial section scanning electron microscopy method. The 2D images of the section surfaces are stacked together to generate a 3D rendering of the specimen. The 3D rendering may be presented at a user interface, printed onto paper, and/or otherwise provided to a user and/or another application. The 3D rendering may be presented as a 3D model and/or an animation showing section surfaces of the specimen from the top to the bottom of the specimen. The 3D rendering may be interactive, for example, a user may rotate the 3D model, and/or rewind, stop, fast-forward the animation.

Various methods may be used for obtaining successive images of a specimen that changes over time. In situ electron microscopy is an investigatory technique where an electron microscope is used to observe a specimen's response to a stimulus. A specimen is mounted within a field of view of a microscope. A stimulus is activated, which causes the specimen to react. The microscope may capture images of the specimen at periodic time intervals, for example, every 0.1 seconds. The captured images are gathered together to form an animation. The animation shows the changes occurring within the specimen over time.

One of the drawbacks associated with obtaining 3D renderings of a specimen is that the field of view of a microscope is limited. A target object (an object that a user desires to observe) may appear in different positions through different section surfaces of a specimen. While a target object may appear in the field of view for a particular section surface, the target object may be outside of the field of view for another section surface. Hence, a target object would not be fully captured through the depth of specimen in the 3D rendering.

One of the drawbacks associated with obtaining successive images of a specimen that changes over time is that the field of view of a microscope is limited. A target object may move to different positions through an time period of interest. While a target object may appear in the field of view for a particular time interval, the target object may be outside of the field of view for another time interval. Hence, a target object would not be fully captured through the time period of interest.

Another drawback associated with obtaining 3D renderings of a specimen, and with obtaining successive images of a specimen that changes over time, is that tracking a target object is very difficult. Multiple objects of interest may appear on a section surface. Other miscellaneous objects may also appear on the section surface. Noise may also be involved in capturing a specimen image. Hence it is very difficult to determine which of the objects of interest, shown in a specimen image, is the target object. As an example, multiple mitochondria may appear on a section surface of a brain tissue. However, a user may be particularly interested in one of the mitochondria. Due to the similarity in the mitochondria, it is very difficult to distinguish the mitochondria that the user is particularly interested in from the other mitochondria and the other objects and noise shown in a captured image. As another example, multiple bubbles may move within a specimen due to a stimulus. However, a user may be particularly interested in a certain set of bubbles. Due to the similarity in the bubbles, it is very difficult to identify the certain set of bubbles that the user is particularly interested in.

US 2014/192178 A1 discloses a method of collecting liquid sample images containing one or more microscopic objects, wherein the images are analyzed to track the motion of the microscopic objects within the liquid sample.

WO 2008/153836 A2 discloses a real-time target-locking confocal microscope that follows an object along an arbitrary path, even as it simultaneously changes its shape, size and orientation.

US 2009/091566 A1 discloses systems and methods that facilitate imaging and sectioning of a thick specimen that allow for 3D image reconstruction.

It is an object of the invention to improve the process of obtaining 3D renderings of a specimen. In particular, it is an object to provide an improved method of obtaining 3D renderings that better tracks a target object.

To this end, the invention provides a method as defined in claim 1. The method of claim 1 includes the step of obtaining a first image corresponding to a specimen, the first image showing a first section surface of the specimen. A first position in the first image corresponding to a target object is identified. Then a second image (captured by a microscope) corresponding to the specimen is obtained, the second image showing a second section surface of the specimen. An image segmentation technique is applied to the second image to obtain a segmented image. The segmented image includes (a) a first set of segments corresponding to objects of interest and (b) a second set of segments not corresponding to any objects of interest. A particular object of interest, of the objects of interest shown in the segmented image, that is associated with a highest similarlity score with the target object shown in the first image is determined as the target object shown in the segmented image. A second position in the segmented image corresponding to the target object is identified. A movement vector from the first position in the first image to the second position in the segmented image is determined. A field of view of the microscope is moved, with respect to the specimen, according to the movement vector to capture a third image corresponding to the specimen. The method may in an embodiment be performed by at least one device including a hardware processor. With the above method, it is possible to accurately identify and track a target object through different section surfaces of a specimen. The accuracy is increased because the target object is not directly identified from a captured image; rather the target object is identified from a segmented image generated based on the captured image. The segmented image serves to filter out objects, shown in the captured image, that are not of interest. The segmented image thus involves less "noise" for the process of identifying the target object. Based on the above method, the target object remains in the field of view of the microscope.

This way, the method is applied to different section surfaces of the specimen, and a 3D rendering of a specimen is obtained. The target object is tracked through the 3D rendering of the specimen.

In an embodiment, subsequent to moving the field of view of the microscope, with respect to the specimen, according to the movement vector, the third image corresponding to the specime is captured. The third image shows the second section surface of the specimen. This way, two images are captured from the second section surface. The "second image" is captured for the purposes of identifying the target object and determining the movement vector. The "third image" is captured after centering the target object based on the movement vector. Hence, an image that accurately centers on the target object is captured.

In an embodiment, the third image, corresponding to the specimen, is obtained. The third image shows the second section surface of the specimen. The third image is captured by the microscope after the field of view of the microscope has moved, with respect to the specimen, according to the movement vector. A set of images that track the target object is compiled. The set of images includes the third image but not the second image. This way, two images are captured from the second section surface. The "second image" is captured for the purposes of identifying the target object and determining the movement vector. The "third image" is captured after centering the target object based on the movement vector. In compiling a set of images that track the target object, only the image that centers on the target object is included; the image that is taken for the purposes of determining the movement vector (and that does not necessarily center on the target object) is not included. Hence the set of images that track the target object includes only images that center on the target object.

In an embodiment, subsequent to moving the field of view of the microscope, with respect to the specimen, according to the movement vector, the third image corresponding to the specimen is captured. The third image shows a third section surface of the specimen. This way, only one image is captured from the second section surface. Any deviation of the target object from the center, shown in the second image, is accepted. The change in position of the target object from one section surface to the next section surface is assumed to be insignificant, or small enough that it can be conveniently corrected in an image postprocessing step. Hence, the field of view for capturing the third section surface is moved based on centering the position of the target object shown in the second image. Without repeating image acquisition for the same section surface, image acquisition for all section surfaces across the specimen are captured more efficiently.

In an embodiment, the third image, corresponding to the specimen, is obtained. The third image shows a third section surface of the specimen. The third image is captured by the microscope after the field of view of the microscope has moved, with respect to the specimen, according to the movement vector. A set of images that track the target object is compiled. The set of images includes the second image and the third image. This way, each section surface is captured once. A set of images tracking the object includes every image that was captured. Even though each image may not ncessarily center on the target object, assuming the change in position of the target object across section surfaces is not large, the target object should remain in the field of view. Without repeating image acquisition for the same section surface, image acquisition for all section surfaces across the specimen are captured more efficiently.

In an embodiment, which does not form part of the invention, the first image, corresponding to the specimen, shows the specimen at a first time interval. The second image, corresponding to the specimen, shows the specimen at a second time interval subsequent to the first time interval. This way, the method is applied to the specimen at different time intervals, and successive images of a specimen are obtained. While the specimen may change through time, the target object is tracked through the successive images of the specimen.

In an embodiment, determining the particular object of interest, of the objects of interest shown in the segmented image, that is associated with the highest similarity score with the target object shown in the first image as the target object shown in the segmented image comprises determining the particular object of interest is closest to the first position in the first image. Additionally or alternatively, determining the particular object of interest, of the objects of interest shown in the segmented image, that is associated with the highest similarity score with the target object shown in the first image as the target object shown in the segmented image comprises determining a first shape of the particular object of interest is most similar to a second shape of the target object shown in the first image. This way, a similarlity score between an object of interest shown in a segmented image and a target object shown in another image may be determined based on one or more factors, such as object positions and/or object shapes.

It is noted that the first image may be captured by the microscope. Alternatively, the first image may be a segmented version of another image captured by the microscope. It is further noted that the image segmentation technique may use an artificial neural network (ANN).

Moreover, to achieve the objects described above, the invention provides a method as defined in claim 11. The method of claim 11 includes the step of obtaining a first image corresponding to a specimen, the first image showing a first section surface of the specimen. A first set of vectors connecting a plurality of target objects shown in the first image are identified. A first position in the first image corresponding to the plurality of target objects is identified. Then a second image (captured by a microscope) corresponding to the specimen is obtained, the second image showing a second section surface of the specimen. An image segmentation technique is applied to the second image to obtain a segmented image. The segmented image indicates (a) a first set of segments corresponding to objects of interest and (b) a second set of segments not corresponding to any objects of interest. Subgroups of the objects of interest shown in the segmented image are identified. Sets of vectors corresponding respectively to the subgroups of the objects of interest shown in the segmented image are determined. A particular set of vectors, of the sets of vectors, that is associated with a least difference from the first set of vectors is determined. A particular subgroup of the objects of interest, of the subgroups of the objects of interest, connected by the particular set of vectors are determined as the plurality of target objects. A second position in the segmented image corresponding to the plurality of target objects is identified. A movement vector from the first position in the first image to the second position in the segmented image is determined. A field of view of the microscope is moved, with respect to the specimen, according to the movement vector to capture a third image corresponding to the specimen. The method may in an embodiment be performed by at least one device including a hardware processor. With the above method, it is possible to accurately identify and track target objects through different section surfaces of a specimen. The accuracy is increased because the target objects are not directly identified from a captured image; rather the target objects are identified from a segmented image generated based on the captured image. The segmented image serves to filter out objects, shown in the captured image, that are not of interest. The segmented image thus involves less "noise" for the process of identifying the target objects. Based on the above method, the target objects remain in the field of view of the microscope.

In an embodiment, not forming part of the present invention, the first image, corresponding to the specimen, shows the specimen at a first time interval. The second image, corresponding to the specimen, shows the specimen at a second time interval subsequent to the first time interval. This way, the method is applied to the specimen at different time intervals, and successive images of a specimen are obtained. While the specimen may change through time, the target object is tracked through the successive images of the specimen.

In an embodiment, not forming part of the present invention, subsequent to moving the field of view of the microscope, with respect to the specimen, according to the movement vector, a third image corresponding to the specimen is captured. The third image shows the specimen at a third time interval subsequent to the second time interval. This way, an image corresponding to the specimen is obtained for each time interval. The target object is tracked through the successive images of the specimen.

In an embodiment, not forming part of the present invention, a third image, corresponding to the specimen, is obtained. The third image shows the specimen at a third time interval subsequent to the second time interval. The third image is captured by the microscope after the field of view of the microscope has moved, with respect to the specimen, according to the movement vector. A set of images that track the plurality of target objects is compiled. The set of images including the second image and the third image. This way, an image corresponding to the specimen is obtained for each time interval. The target object is tracked through the successive images of the specimen. A set of images that track the plurality of target objects includes every image that was captured at each time interval.

According to an aspect of the invention, a non-transitory computer readable medium is provided according to claim 12. The non-transitory computer readable medium comprises instructions which, when executed by one or more hardware processors, cause performance of operations as recited in any of the embodiments above. Advantages have been discussed already above.

According to a further aspect of the invention, a system is provided according to claim 13. The system comprises at least one device including a hardware processor. The system is configured to perform operations as recited with respect to the method according to the invention as described above. The system may, in embodiments, comprise one or more means for performing operations as recited in the description above.

The approaches described in this section are approaches that could be pursued, but not necessarily approaches that have been previously conceived or pursued. Therefore, unless otherwise indicated, it should not be assumed that any of the approaches described in this section qualify as prior art merely by virtue of their inclusion in this section.

BRIEF DESCRIPTION OF THE DRAWINGS

The embodiments are illustrated by way of example and not by way of limitation in the figures of the accompanying drawings. It should be noted that references to "an" or "one" embodiment in this disclosure are not necessarily to the same embodiment, and they mean at least one. In the drawings:

Figure 1A illustrates an example object tracking image acquisition system, in accordance with one or more embodiments;
Figure 1B illustrates an example process flow for an object tracking image acquisition system, in accordance with one or more embodiments;
Figure 1C illustrates an example specimen, in accordance with one or more embodiments;
Figures 2A-2B illustrate an example set of operations for obtaining a 3D specimen rendering that tracks a target object, in accordance with one or more embodiments;
Figures 3A-3B illustrate an example set of operations for obtaining successive specimen images that track a target object, in accordance with one or more embodiments;
Figures 4 illustrates an example cross-section of a specimen, in accordance with one or more embodiments;
Figures 5A-5J illustrate an example for obtaining a 3D specimen rendering that tracks a target object, in accordance with one or more embodiments;
Figure 6 illustrates an example specimen that changes over time, in accordance with one or more embodiments not forming part of the invention;
Figures 7A-7H illustrate an example for obtaining successive specimen images that track a target object, in accordance with one or more embodiments;

Figures 8A-8C illustrate an example set of operations for obtaining a 3D specimen rendering that tracks a plurality of target objects, in accordance with one or more embodiments;

Figures 9A-9C illustrate an example set of operations for obtaining successive specimen images that track a plurality of target objects, in accordance with one or more embodiments;

Figures 10A-10N illustrate an example for obtaining successive specimen images that track a plurality of target objects, in accordance with one or more embodiments; and

Figure 11 shows a block diagram that illustrates a computer system in accordance with one or more embodiments.

## DETAILED DESCRIPTION

In the following description, for the purposes of explanation, numerous specific details are set forth in order to provide a thorough understanding. One or more embodiments may be practiced without these specific details. Features described in one embodiment may be combined with features described in a different embodiment. In some examples, well-known structures and devices are described with reference to a block diagram form in order to avoid unnecessarily obscuring the present invention.

1. GENERAL OVERVIEW
2. OBJECT TRACKING IMAGE ACQUISITION SYSTEM ARCHITECTURE
3. OBJECT TRACKING BASED ON COMPARATIVE DISTANCES ASSOCIATED WITH OBJECTS OF INTEREST IN A SEGMENTED IMAGE
4. EXAMPLE EMBODIMENTS
5. OBJECT TRACKING BASED ON COMPARATIVE CONNECTING VECTORS ASSOCIATED WITH OBJECTS OF INTEREST IN A SEGMENTED IMAGE
6. EXAMPLE EMBODIMENTS
7. HARDWARE OVERVIEW
8. MISCELLANEOUS; EXTENSIONS

## 1. GENERAL OVERVIEW

One or more target objects are tracked through a set of specimen images. The set of images may include images of section surfaces through a specimen. Alternatively, and not part of the present invention, the set of images may include images successively taken of a specimen that changes through time.

One or more embodiments include tracking a target object based on comparative distances associated with objects of interest in a segmented image. A first image corresponding to a specimen is obtained, the first image showing a first section surface of the specimen. A first position in the first image corresponding to a target object is identified. Then a second image (captured by a microscope) corresponding to the specimen is obtained, the second image showing a second section surface of the specimen.

An image segmentation technique is applied to the second image to obtain a segmented image. The segmented image includes (a) a first set of segments corresponding to objects of interest and (b) a second set of segments not corresponding to any objects of interest. A particular object of interest, of the objects of interest shown in the segmented image, that is associated with a highest similarity score with the target object shown in the first image is determined as the target object shown in the segmented image. A second position in the segmented image corresponding to the target object is identified. A movement vector from the first position in the first image to the second position in the segmented image is determined. A field of view of the microscope is moved, with respect to the specimen, according to the movement vector to capture a third image corresponding to the specimen.

One or more embodiments include tracking target objects based on comparative connecting vectors associated with objects of interest in a segmented image. A first image corresponding to a specimen is obtained, the first image showing a first section surface of the specimen. A first set of vectors connecting a plurality of target objects shown in the first image are identified. A first position in the first image corresponding to the plurality of target objects is identified. Then a second image (captured by a microscope) corresponding to the specimen is obtained, the second image showing a second section surface of the specimen. An image segmentation technique is applied to the second image to obtain a segmented image. The segmented image indicates (a) a first set of segments corresponding to objects of interest and (b) a second set of segments not corresponding to any objects of interest. Subgroups of the objects of interest shown in the segmented image are identified. Sets of vectors corresponding respectively to the subgroups of the objects of interest shown in the segmented image are determined. A particular set of vectors, of the sets of vectors, that is associated with a least difference from the first set of vectors is determined. A particular subgroup of the objects of interest, of the subgroups of the objects of interest, connected by the particular set of vectors are determined as the plurality of target objects. A second position in the segmented image corresponding to the plurality of target objects is identified. A movement vector from the first position in the first image to the second position in the segmented image is determined. A field of view of the microscope is moved, with respect to the specimen, according to the movement vector to capture a third image corresponding to the specimen.

One or more embodiments described in this Specification and/or recited in the claims may not be included in this General Overview section.

## 2. OBJECT TRACKING IMAGE ACQUISITION SYSTEM ARCHITECTURE

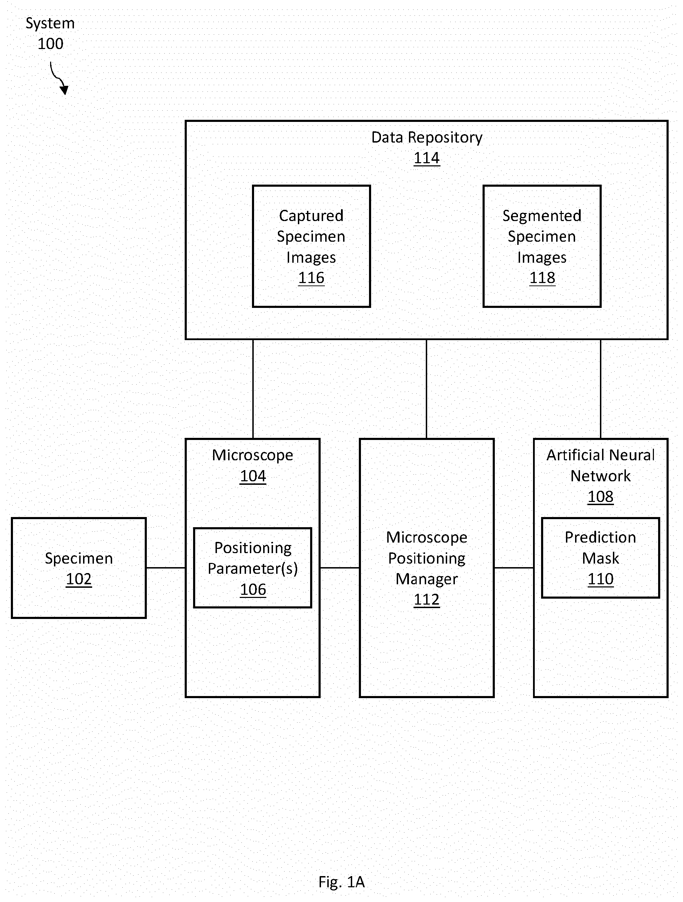

Figure 1A illustrates an example object tracking image acquisition system, in accordance with one or more embodiments. As illustrated in Figure 1A, a system 100 includes a specimen 102, a microscope 104, an artificial neural network (ANN) 108, a microscope positioning manager 114, and a data repository 116. In one or more embodiments, the system 100 may include more or fewer components than the components illustrated in Figure 1A. The components illustrated in Figure 1A may be local to or remote from each other. The components illustrated in Figure 1A may be implemented in software and/or hardware. Each component may be distributed over multiple applications and/or machines. Multiple components may be combined into one application and/or machine. Operations described with respect to one component may instead be performed by another component.

In one or more embodiments, a specimen 102 is an object (or a part of an object) to be studied and/or analyzed. In the field of life sciences, examples of specimens include tissues, cells, protein structures, and viruses. In the field of natural resources, examples of specimens include oil, gas, organic materials, and rocks. In the field of semiconductors, examples of specimens include crystalline materials, and semiconductor materials. Specimens in additional and/or alternative fields may be used.

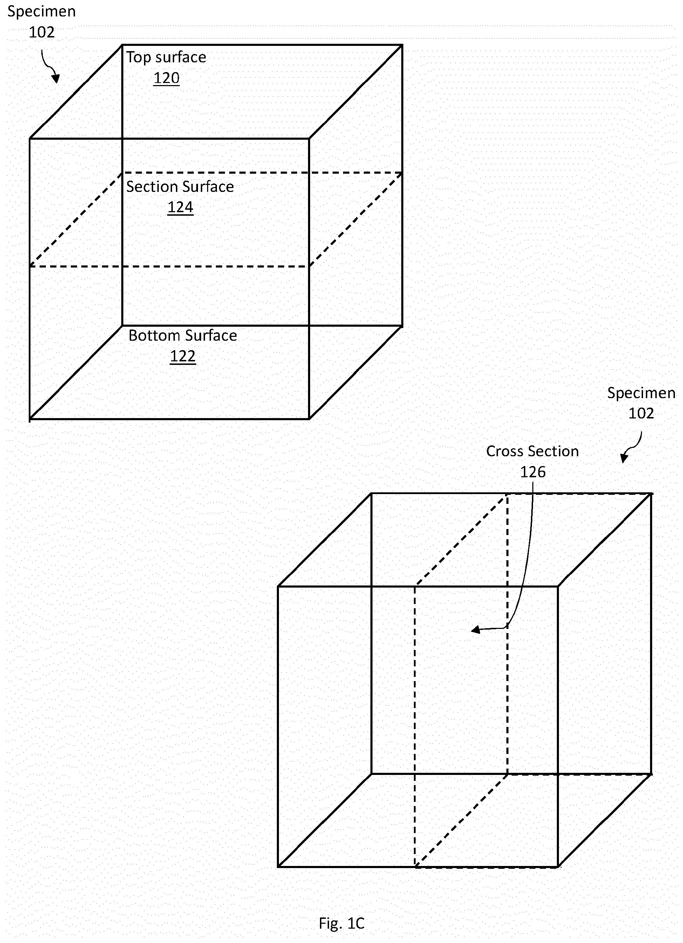

A specimen 102 may have a certain depth. Referring to Figure 1C, a "depth" of a specimen refers to the distance from a top surface 120 to a bottom surface 122. A section surface 124 (also referred to as a "block face") is a plane of the specimen 102 that is created by slicing the specimen 102 from one side of the specimen 102 to the opposite side of the specimen 102. A cross section 126 is a plane of the specimen 102 that is created by slicing the specimen 102 from the top of the specimen 102 to the bottom of the specimen 102. A microscope 104 may start capture images of section surfaces 124 starting from a top surface 120 of the specimen to a bottom surface 122 of the specimen.

A specimen 102 may change over time. The change may be caused by a stimulus. As an example, various objects inside a specimen may change size, shape, and/or position over time. Various objects may be generated in a specimen over time. Various objects may disappear from a specimen over time.

A specimen 102 includes one or more objects of interest. An object of interest is associated with an object type that is under study. The remaining portions of the specimen provide context for an object of interest. As an example, a specimen may a brain structure, which include cell membranes and other structures. The cell membranes may be a type of object that is under study. Hence, the cell membranes may be referred to as objects of interest. Meanwhile, the other structures are not objects of interest. Other examples of objects of interest include mitochondria, particular neuronal structures, other parts of biological structures, defects within crystalline structures, borders of crystalline structures, structures within nanowires, and bubbles within a liquid.

A specimen 102 includes one or more target objects. A target object is a particular object of interest. In the scenario where a 3D rendering of a specimen is being generated, a target object is an object of interest that is to be observed through a cross section of a specimen 102. Additionally or alternatively, in the scenario where successive images of a changing specimen are being generated, a target object is an object of interest that is to be observed through a particular time period. Hence, target objects may be a subset of the objects of interest. As an example, a specimen may include ten cell membranes. Cell membranes may be an object type that is under study. Hence, all ten cell membranes may be objects of interest. However, only one of the ten cell membranes may need to be tracked through a cross section of the specimen. The object of interest that is tracked is referred to as a target object.

Referring back to Figure 1A, in one or more embodiments, a microscope 104 is an optical instrument to better view objects that are difficult to see with the naked eye. Types of microscopes include transmission electron microscope (TEM), scanning electron microscope (SEM), scanning transmission electron microscope (STEM), focused ion beam microscope (FIB microscope), and scanning optical microscope. As used herein, the term "microscope" may also encompass detection systems such as Energy Dispersive Spectroscopy (EDS), and/or Electron Backscatter Diffraction (EBSD), Wavelength Dispersive Spectrometry (WDS), Micro X-ray Fluorescence (Micro-XRF), and/or X-ray Metrology.

In one or more embodiments, a field of view of a microscope 104 refers to a portion of a specimen 102 that is viewable through the lens of the microscope 104. A microscope 104 is associated with one or more positioning parameters 106 to position a field of view of the microscope 104. A field of view of a microscope 104 may be moved, with respect to the specimen 102, in various ways. A positioning parameter 106 may be, for example, a position of an electron beam within the microscope 104. Additionally or alternatively, a positioning parameter 106 may be a position of a specimen stage with respect to the microscope 104. The specimen stage on which the specimen 102 is mounted may be moved. Additionally or alternatively, a positioning parameter 106 may be a position of the specimen 102 with respect to the specimen stage. The specimen 102 may be mounted in a different position on the specimen stage. Additionally or alternatively, a positioning parameter 106 may be a position of a lens of the microscope with respect to the microscope 102. Additional or alternative positioning parameters 106 may also be used.

In one or more embodiments, a microscope 104 is associated with one or more microscopy parameters.

A microscopy parameter is a configurable attribute of a microscope 104. Examples of microscopy parameters of a SEM include: an accelerating voltage (a voltage at which electrons are being accelerated as the electrons travel through an electron optical column); a convergence angle of the electron beam; a beam current; a spot size (a diameter of the beam spot on the specimen); a dwell time; and a resolution.

Different values for the various microscopy parameters result in images of different qualities and attributes. For example, higher magnification requires a smaller spot size. Higher signal-to-noise ratio and contrast resolution requires greater beam current. However, reducing the spot size also decreases the beam current.

In one or more embodiments, a data repository 116 is any type of storage unit and/or device (e.g., a file system, database, collection of tables, or any other storage mechanism) for storing data. Further, a data repository 116 may include multiple different storage units and/or devices. The multiple different storage units and/or devices may or may not be of the same type or located at the same physical site. Further, a data repository 116 may be implemented or may execute on the same computing system as a microscope 104, ANN 108, and/or merging module 114. Alternatively or additionally, a data repository 104 may be implemented or executed on a computing system separate from a microscope 104, ANN 108, and/or merging module 114. The data repository 104 may be communicatively coupled to the microscope 104, ANN 108, and/or merging module 114 via a direct connection or via a network.

Information describing a captured specimen image 116, and a segmented specimen image 118 may be implemented across any of components within a system 100. However, this information is illustrated within a data repository 116 for purposes of clarity and explanation.

In one or more embodiments, a captured specimen image 116 (also referred to herein as a "specimen image" or "image") is an image of a specimen 102 that is produced by a microscope 104. The captured specimen image 116 shows an area of the specimen 102 that is within a field of view of the microscope 104. A captured specimen image 116 may be associated with a particular level of image quality. Image quality may be defined by, for example, resolution, magnification, number of pixels in the specimen image, size of pixels in the specimen image, and/or other attributes.

In an embodiment, a set of captured specimen images 116 corresponding to a specimen 102 are obtained. A set of captured specimen images 116 may constitute a 3D rendering that tracks one or more target objects within a specimen 102. Additionally or alternatively, a set of captured specimen images 116 may constitute successive images that track one or more target objects changing and/or moving within a specimen 102. A set of captured specimen images 116 may be compiled to generate an animation and/or video.

In one or more embodiments, a segmented specimen image 118 (also referred to herein as a "segmented image) is a simplified version of a captured specimen image 116. A segmented specimen image 118 divides a captured specimen image 116 into a plurality of segments. Every pixel or position within the segmented specimen image belongs to one of the plurality of segments. Each segment is associated with one of a defined set of labels. Any number of labels may be included in the defined set of labels.

As an example, a segmented specimen image may include two types of segments: segments showing objects of interest, and segments not showing any objects of interest. Every pixel or position within the segmented specimen image may belong to one of the segments. Hence, the segmented specimen image may also be referred to as a binary image, wherein each pixel or position of the segmented specimen image is labeled with one of two possible values.

In an embodiment, a segmented specimen image 116 includes a plurality of segments, each showing one or more objects of interest. As described above, each object of interest is associated with an object type that is under study. However, only a subset of the plurality of objects of interest may be identified as target objects. Not all objects of interest are tracked in a 3D rendering of a specimen, or in successive specimen images taken over time. Only the target objects are tracked in a 3D rendering of a specimen, or in successive specimen images taken over time.

In one or more embodiments, an ANN 108 (also referred to as a deep learning system) is a machine-learning computing system. An ANN 108 includes a collection of connected units or nodes, which are called artificial neurons. Each connection transmits a signal from one artificial neuron to another. An artificial neuron that processes a received signal to transmit another signal to another artificial neuron. Artificial neurons may be aggregated into layers. Different layers may perform different kinds of transformations on their inputs.

One type of ANN is a convolutional neural network. Convolutional neural networks are designed to process data that come in the form of multiple arrays, such as a color image composed of three two-dimensional arrays containing pixel intensities in three color channels. An example architecture of a conventional neural network is structured as a series of stages. The first few stages are composed of two types of layers: convolutional layers and pooling layers. A convolutional layer applies a convolution operation to the input, passing the result to the next layer. The convolution emulates the response of an individual neuron to visual stimuli. A pooling layer combines the outputs of neuron clusters at one layer into a single neuron in the next layer. For example, *max pooling* uses the maximum value from each of a cluster of neurons at the prior layer. An example of a conventional neural network is the u-net. The u-net is described in Ronneberger et al., U-Net: Convolutional Networks for Biomedical Image Segmentation, MEDICAL IMAGE COMPUTING AND COMPUTER-ASSISTED INTERVENTION- MICCAI 2015, at 234-241 (2015), which is hereby incorporated by reference.

In one or more embodiments, an ANN 108 is configured to detect and/or identify objects of interest shown in a specimen image. For each position within a specimen image, an ANN 108 determines a probability that the position shows an object of interest. The probability may also be referred to as a "prediction value." A prediction mask 110 indicates a prediction value for each position of a specimen image. Each position of the prediction mask 110 maps to a corresponding position within the specimen image.

Based on the prediction mask 110, a segmented specimen image 118 may be generated. As an example, a prediction mask may be thresholded. Positions with prediction values above a threshold value may be associated with one label (for example, segments corresponding to objects of interest). Positions with prediction values below the threshold value may be associated with another label (for example, segments not corresponding to objects of interest). Hence, an ANN 108 may be configured to perform image segmentation on a captured specimen image 116 to generate a segmented specimen image 118.

In one or more embodiments, additional or alternative methods for performing image segmentation on the captured specimen image 116 to generate a segmented specimen image 118 may be used. As an example, a thresholding method may be applied on a gray-scale image. Values in the gray-scale image within a certain range may be classified as being associated with a particular label. Values in the gray-scale image within another range may be classified as being associated with another label. As another example, a clustering method may be used. A K-means algorithm is an iterative technique that is used to partition an image into K clusters. As another example, an edge detection method may be used. As another example, a graph partitioning method may be used. As another example, a watershed transformation method may be used.

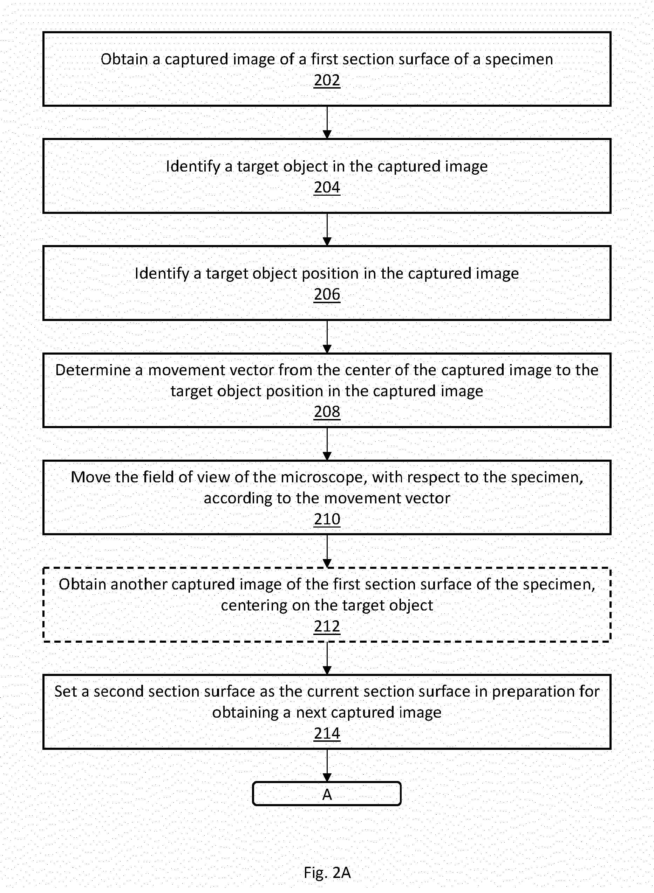

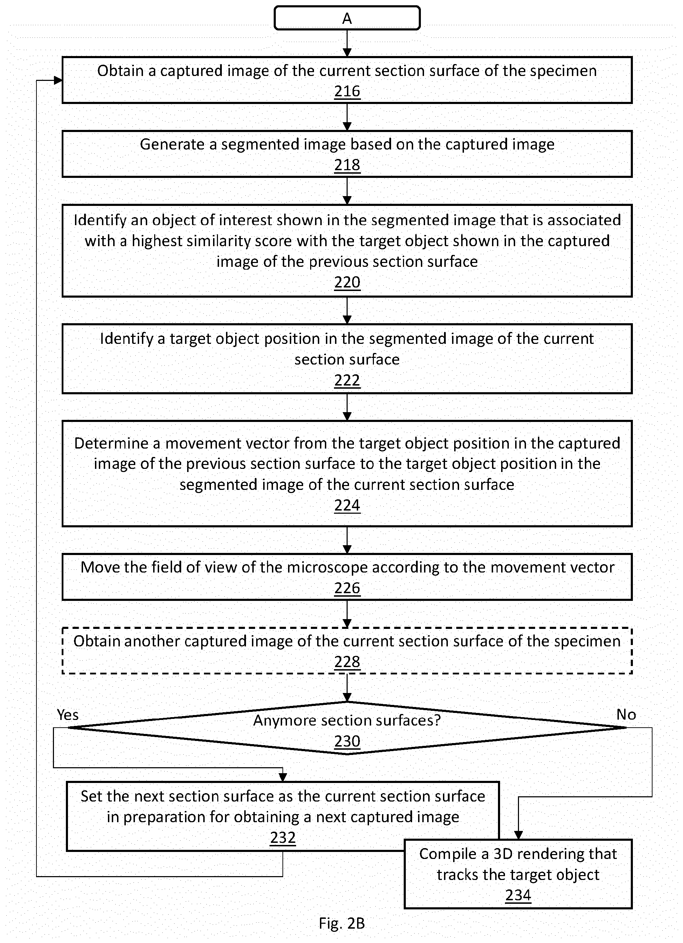

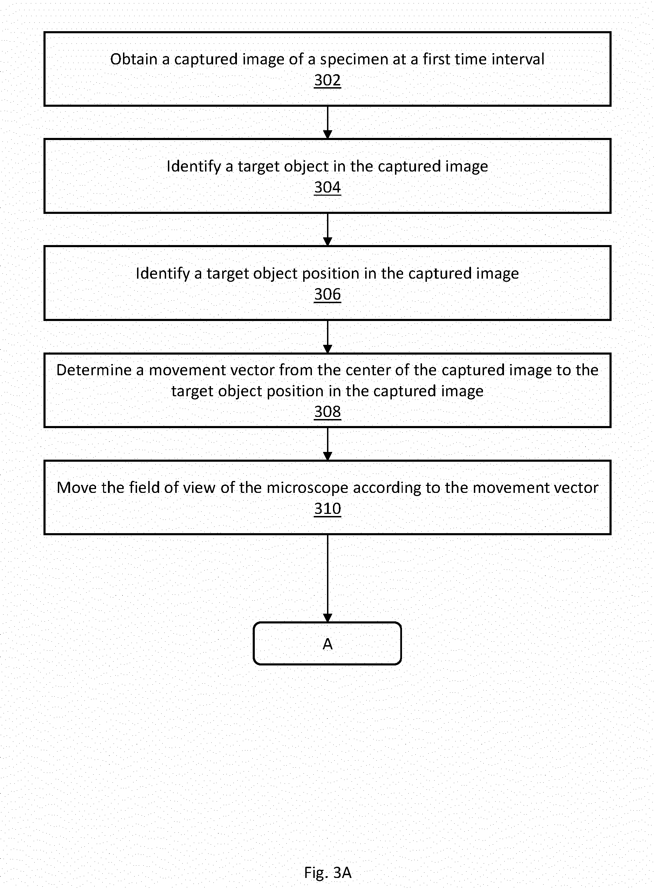

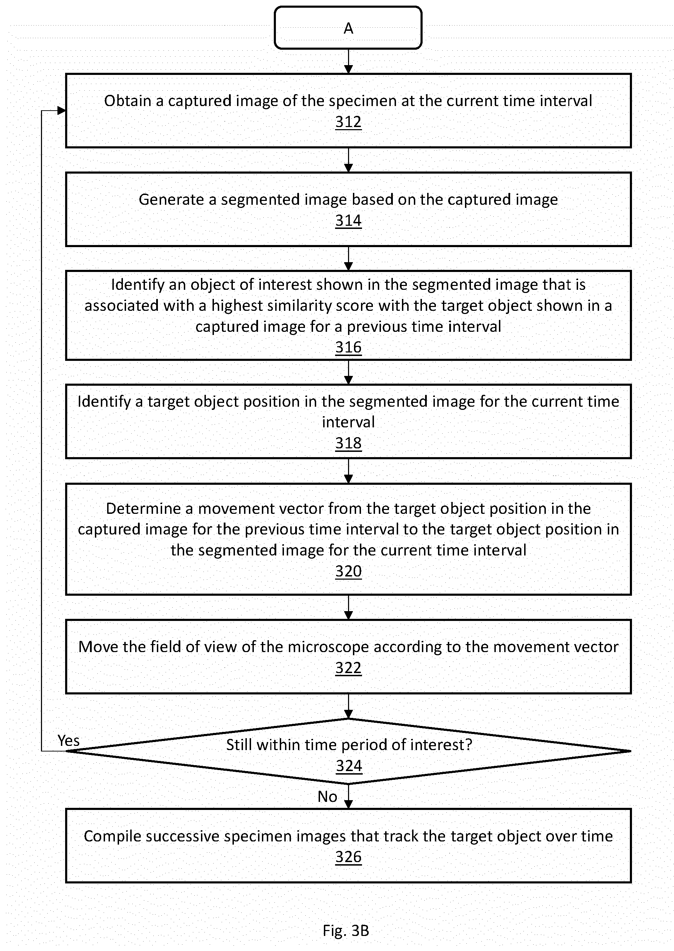

In one or more embodiments, a microscope positioning manager 112 refers to hardware and/or software configured to move a field of view of a microscope 104, with respect to a specimen 102, to track one or more target objects in the specimen 102. The target objects may be identified from a plurality of objects of interest shown in a segmented specimen image 118. Examples of operations for tracking target objects are described below with reference to Figures 2A-2B and Figures 3A-3B.

In an embodiment, a microscope positioning manager 112 is implemented on one or more digital devices. The term "digital device" generally refers to any hardware device that includes a processor. A digital device may refer to a physical device executing an application or a virtual machine. Examples of digital devices include a computer, a tablet, a laptop, a desktop, a netbook, a server, a web server, a network policy server, a proxy server, a generic machine, a function-specific hardware device, a mainframe, a television, a content receiver, a printer, a mobile handset, a smartphone, and/or a personal digital assistant (PDA).

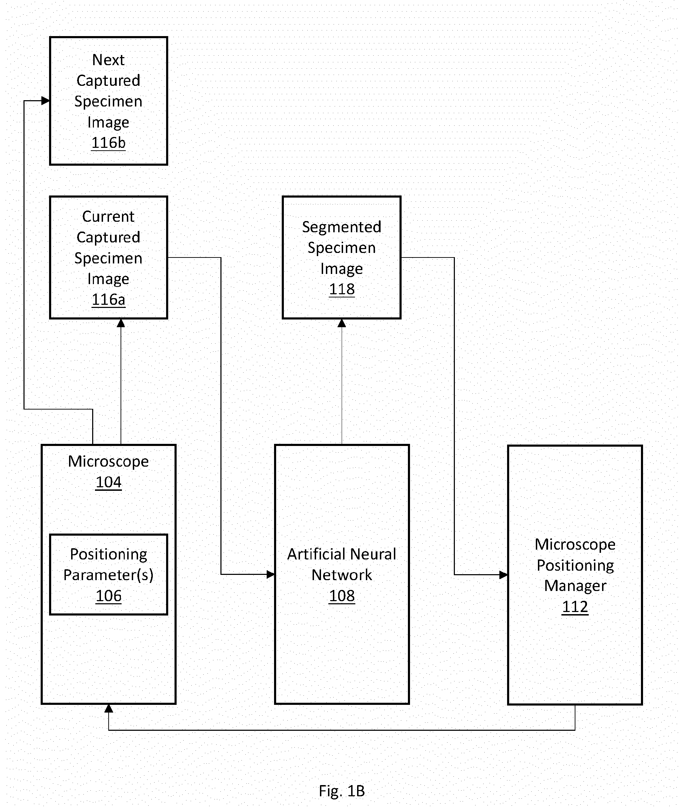

Figure 1B illustrates an example process flow for an object tracking image acquisition system, in accordance with one or more embodiments. Components labeled with the same numerals across Figures 1A-1B refer to similar components.

As illustrated, a microscope 104 is configured with a first set of values for a set of one or more positioning parameters 106. The microscope 104 is used to observe a specimen 102 using the first set of values for the positioning parameters 106. The microscope 104 produces a current captured specimen image 116a of the specimen 102.

The current captured specimen image 116a is input to an ANN 108. The ANN 108 identifies objects of interest within the current captured specimen image 116a. A segmented specimen image 118 is generated based on the current captured specimen image 116a. The segmented specimen image 118 indicates segments of the current captured specimen image 116a corresponding to the objects of interest and segments of the current captured specimen image 116a not corresponding to any objects of interest.

The segmented specimen image 118 is input to a microscope positioning manager 112. The microscope positioning manager 112 identifies one or more target objects from the objects of interest indicated in the segmented specimen image 118. The microscope positioning manger 112 determines a movement vector from (a) a position of the target objects in a previous captured specimen image to (b) a position of the target objects in the segmented specimen image 118. The microscope positioning manger 112 configures a second set of values for the positioning parameters 106 of the microscope 104 to move the field of view according to the movement vector. The field of view is moved, with respect to the specimen 102, according to the movement vector.

The microscope 104 is used to observe the specimen 102 using the second set of values for the positioning parameters 106. The microscope 104 produces a next captured specimen image 116b of the specimen 102.

The current captured specimen image 116a and the next captured specimen image 116b may be of different section surfaces of the specimen 102. Additionally or alternatively, the current captured specimen image 116a and the next captured specimen image 116b may be of a specimen that changes over time 102 at different time intervals.

Optionally, a repeat captured specimen image (not illustrated) may be taken between the current captured specimen image 116a and the next captured specimen image 116b. The repeat captured specimen image and the current captured specimen image 116a are of the same section surface of the specimen 102, taken with different values for the positioning parameters 106. The repeat captured specimen image is taken after the field of view is moved according to the movement vector. The field of view is not moved between taking the repeat captured specimen image and the next captured specimen image 116b.

In an embodiment, the repeat captured specimen image may be taken with reduced quality parameters, such as, reduced resolution, or reduced dwell time, as compared to the current captured specimen image 116a. Alternatively, the current captured specimen image 116a may be taken with reduced quality parameters, as compared to the repeat captured specimen image. Using reduced quality parameters may speed up the process and/or reduce sample damage.

The process may be iterated with the next captured specimen image 116b. The next captured specimen image 116b is then input to the ANN 108. The ANN generates a segmented specimen image based on the next captured specimen image 116b, as described above.

The segmented specimen image based on the next captured specimen image 116b is input to the microscope positioning manager 112. The microscope positioning manager 112 identifies one or more target objects from the objects of interest indicated in the segmented specimen image based on the next captured specimen image 116b. The microscope positioning manger 112 determines a movement vector from (a) a position of the target objects in the current captured specimen image 116a to (b) a position of the target objects in the segmented specimen image based on the next captured specimen image 116b. The microscope positioning manger 112 configures a third set of values for the positioning parameters 106 of the microscope 104 to move the field of view according to the movement vector. The field of view is moved, with respect to the specimen 102, according to the movement vector.

Hence, multiple specimen images are produced by the microscope 104. Information about the position of the target objects in the current captured specimen image 116a is fed back into the system to generate the next captured specimen image 116b. The positioning parameters 106 of the microscope 104 are configured to track the target objects.

## 3. OBJECT TRACKING BASED ON COMPARATIVE DISTANCES ASSOCIATED WITH OBJECTS OF INTEREST IN A SEGMENTED IMAGE

Figures 2A-2B illustrate an example set of operations for obtaining a 3D specimen rendering that tracks a target object, in accordance with one or more embodiments. One or more operations illustrated in Figures 2A-2B may be modified, rearranged, or omitted all together. Accordingly, the particular sequence of operations illustrated in Figures 2A-2B should not be construed as limiting the scope of one or more embodiments.

One or more embodiments include obtaining a captured image of a first section surface of a specimen (Operation 202). A microscope is configured using a first set of values for one or more positioning parameters. A specimen is mounted to a stage for observation under the microscope. A first section surface of the specimen is observed using the microscope. A captured image is generated showing a particular area of the first section surface that is within the field of view of the microscope. An object tracking image acquisition system obtains the captured image of the first section surface from the microscope.

One or more embodiments include identifying a target object in the captured image (Operation 204). The object tracking image acquisition system obtains information identifying a target object in the captured image. The information identifying the target object in the captured image may be entered by a user. Additionally or alternatively, the information identifying the target object in the captured image may be generated by another application.

One or more embodiments include identifying a target object position in the captured image (Operation 206). The object tracking image acquisition system identifies a position in the captured image corresponding to the target object. A position in an image corresponding to a target object may also be referred to herein as a "target object position in the image." A target object position in a particular image may be expressed as a pair of coordinates. As an example, a target object position of (3, 2) may indicate that the target object position is located at 3 units to the right of the lower-left corner of the image and 2 units above the lower-left corner of the image.

A target object position in a particular image may be determined based on various rules. As an example, a rule may specify that a center of a target object shown in an image is deemed the target object position in the image. As another example, a rule may specify that an upper-right point of a target object shown in an image is deemed the target object position in the image. As another example, if there are multiple target objects, a rule may specify that a center of the multiple target objects shown in an image is deemed the target object position in the image. For example, a particular image may include two target objects of the same size. One target object may be centered at the position (2, 4). The other target object may be centered at the position (4, 4). Then a center of the two target objects may be at (3, 4). Hence, the position (3, 4) may be deemed the target object position in the particular image.

One or more embodiments include determining a movement vector from the center of the captured image to the target object position in the captured image (Operation 208). A movement vector is drawn from the center of the captured image to the target object position in the captured image. The movement vector may be expressed as a magnitude and a direction. Additionally or alternatively, the movement vector may be expressed as a number of units in an *x*-axis and a number of units in a *y*-axis.

One or more embodiments include moving the field of view of the microscope, with respect to the specimen, according to the movement vector (Operation 210). The object tracking image acquisition system causes the field of view of the microscope to be moved according to the movement vector. The object tracking image acquisition system may transmit instructions to the microscope that instruct the field of view of the microscope to be moved according to the movement vector. The field of view may move in the same magnitude and direction as the movement vector. Alternatively, the field of view may move within a particular range of the magnitude of the movement vector and within a particular range of the direction of the movement vector. Based on the instructions, the microscope is reconfigured using another set of values for the positioning parameters.

In an embodiment, a position of an electron beam is moved by changing deflector settings and/or electromagnetic settings of the lenses. To move the field of view with respect to the specimen according to a movement vector, the electron beam is moved in the same magnitude and direction as the movement vector. A new value may be assigned to a positioning parameter such that the electron beam is moved in the same magnitude and direction as the movement vector.

In an embodiment, a stage on which the specimen is mounted is moved. To move the field of view with respect to the specimen according to a movement vector, the stage is moved in the same magnitude as the movement vector but in the opposite direction of the movement vector. A new value may be assigned to a positioning parameter such that the stage is moved in the same magnitude as the movement vector but in the opposite direction of the movement vector.

In an embodiment, a specimen is moved and mounted in a different position on the stage. To move the field of view with respect to the specimen according to a movement vector, the specimen is moved in the same magnitude and direction as the movement vector. A new value may be assigned to a positioning parameter such that the specimen is moved in the same magnitude and direction as the movement vector.

In an embodiment, a lens of the microscope are moved. To move the field of view with respect to the specimen according to a movement vector, the lens are moved in the same magnitude and direction as the movement vector. A new value may be assigned to a positioning parameter such that the lens are moved in the same magnitude and direction as the movement vector.

In an embodiment, a combination of movements of different components of the microscope may be performed. An electron beam, a stage, a specimen, and/or a lens may each be moved. The combination of movements move the field of view, with respect to the specimen, according to the movement vector.

One or more embodiments include obtaining another captured image of the first section surface of the specimen, centering on the target object (Operation 212). After moving the field of view of the microscope, the position corresponding to the target object is now at the center of the field of view. The object tracking image acquisition system causes the microscope to take another captured image of the first section surface. Both captured images, obtained at Operations 202 and 212, show the first section surface. However, the captured image obtained at Operation 202 is not necessarily centered on the target object. The captured image obtained at Operation 212 is substantially centered on the target object.

In an embodiment, Operation 212 is not performed. Even though the captured image obtained at Operation 202 is not necessarily centered on the target object, the captured image obtained at Operation 202 is accepted as the image of the first section surface for the 3D rendering of the specimen. Skipping Operation 212 reduces an amount of time and/or resources necessary for obtaining the 3D rendering of the specimen. The field of view of the microscope is moved at Operation 210 not for purposes of obtaining a captured image of the current section surface that centers on the target object, but for purposes of obtaining a captured image of the next section surface that tracks the target object.

One or more embodiments include setting a second section surface as the current section surface in preparation for obtaining a next captured image (Operation 214). The second section surface is prepared for observation under the microscope.

In an embodiment, block face scanning electron microscopy is used. The process begins with mounting the specimen on a stage of a microscope. The block face of the specimen is observed. The first observed block face constitutes the first section surface that is captured at Operation 202. Then a thin slice is cut off from the block face of the specimen. The removal of the thin slice removes the first section surface and exposes the second section surface. The second section surface is thereby ready for observation under the microscope.

In an embodiment, serial section scanning electron microscopy is used. The process begins with cutting the specimen into thin slices. A first slice is mounted on a stage of a microscope. The first slice is observed. The surface of the first slice constitutes the first section surface that is captured at Operation 202. Then the first slice is removed from the stage. A second slice is mounted onto the stage. The surface of the second slice, which is the second section surface, is thereby ready for observation under the microscope.

As described above at Operation 226, the field of view may be moved without moving the specimen with respect to the stage. In this case, the first slice and the second slice are mounted at the same position of the stage of the microscope. As an example, a first slice may be mounted such that the center of the first slice is at the center of the stage. Thus the surface of the first slice, which is the first section surface, may be observed. Then the field of view may be moved by moving the stage and/or moving the lens of the microscope. In preparing the second section surface for observation, the first slice may be removed from the stage. The second slice may be mounted such that the center of the second slice is also at the center of the stage. Hence, the first slice and the second slice are mounted at the same position of the stage of the microscope.

Also as described above at Operation 226, the field of view may be moved by moving the specimen with respect to the stage. In this case, the distance between the position of the first slice and the position of the second slice is equal to the distance that the specimen should be moved with respect to the stage. As an example, a first slice may be mounted such that the center of the first slice is at the center of the stage. Thus the surface of the first slice, which is the first section surface, may be observed. A movement vector may be determined as (4, 2). The field of view may be moved by moving the specimen, with respect to the stage, 4 units in the x direction and 2 units in the y direction. In preparing the second section surface for observation, the first slice may be removed from the stage. The second slice may be mounted such that the center of the second slice is 4 units in the x direction from the center of the first slice and 2 units in the y direction from the center of the first slice. Hence, the distance between the position of the first slice and the position of the second slice is equal to the distance that the specimen should be moved with respect to the stage.

One or more embodiments include obtaining a captured image of the current section surface of the specimen (Operation 216). The current section surface of the specimen is observed using the microscope. A captured image is generated showing a particular area of the current section surface that is within the field of view of the microscope. The object tracking image acquisition system obtains the captured image of the current section surface from the microscope.

One or more embodiments include generating a segmented image based on the captured image (Operation 218). The captured image, obtained at Operation 216, is analyzed to generate a segmented image.

In an embodiment, an ANN is applied to the captured image to generate the segmented image. The ANN receives the captured image as an input. The ANN determines a prediction value for each position within the captured image. As an example, a u-net convolution neural network may be applied to a captured image to identify neuronal structures within the captured image. The u-net convolution network may determine a likelihood that each position within the captured image shows at least a portion of a particular neuronal structure. The respective prediction values for the positions within the captured image constitute a prediction mask.

A thresholding algorithm is applied to the prediction mask. There may be a fixed threshold value for each position in the prediction mask. Alternatively, the threshold value may vary across the positions in the prediction mask. The threshold value for a particular position may be adjusted based on, for example, prediction values corresponding to surrounding positions and/or other factors.

A respective prediction value for each position is compared with a threshold value for the position. If the prediction value is above the threshold value, then the corresponding position in the captured image is determined as showing an object of interest. Conversely, if the prediction value is below the threshold value, then the corresponding position in the captured image is determined as not showing any object of interest. Hence, every position in the captured image is determined to be either showing an object of interest or not showing any object of interest. A segmented image is thus generated. The segmented image shows two types of segments: (a) segments including the positions in the captured image that show an object of interest and (b) segments including the positions in the captured image that do not show any object of interest.

In an embodiment, as described above, additional or alternative methods for performing image segmentation on the captured image to generate the segmented image may be used.

One or more embodiments include identifying an object of interest shown in the segmented image that is associated with a highest similarity score with the target object shown in the captured image of the previous section surface (Operation 220). Each separate segment in the segmented image that is labeled as showing an object of interest is determined as a separate object of interest. A similarity score between an object of interest shown in the segmented image and the target object shown in the captured image of the previous section surface may be determined in various ways.

In an embodiment, a similarity score is determined based on object positions. An object of interest that is closest to the target object position in the captured image of the previous section surface is associated with the highest similarity score.

A respective position in the segmented image corresponding to each object of interest is identified. Examples of operations for identifying a position in a particular image corresponding to a particular object are described above with reference to Operation 206. The same set of rules that are used at Operation 206 for determining the target object position in the captured image of the first section surface is used for determining the respective positions in the segmented image corresponding to the objects of interest.

As an example, a rule may specify that a center of an object shown in an image is deemed a target object position in the image. Applying the rule, a center of a target object shown in a captured image of a first section surface is deemed a target object position in the captured image. Applying the same rule, a center of an object of interest shown in a segmented image of a particular section surface is deemed a position in the segmented image corresponding to the object of interest.

For each object of interest, the object tracking image acquisition system determines a distance between (a) a target object position in the captured image of the previous section surface and (b) the position in the segmented image of the current section surface corresponding to the object of interest. Iterating the computation for each object of interest, the object tracking image acquisition system hence determines a set of distances. The object tracking image acquisition system identifies the smallest distance of the set of distances. A particular object of interest corresponding to the smallest distance is the object of interest that is closest to the target object position in the captured image of the previous section surface. The object tracking image acquisition system identifies the particular object of interest as the target object.

As an example, a target object position in a captured image of a previous section surface may be (3, 2). A segmented image of a current section surface may include two objects of interest. A position in the segmented image corresponding to a first object of interest may be (4, 5). A position in the segmented image corresponding to a second object of interest may be (6, 7). A distance between (a) the target object position in the captured image of the previous section surface and (b) the position in the segmented image of the current section surface corresponding to the first object of interest is (4, 5) - (3, 2) = $\sqrt{(4-3)^2 + (5-2)^2} = 3.16$. A distance between (a) the target object position in the captured image of the previous section surface and (b) the position in the segmented image of the current section surface corresponding to the second object of interest is (6, 7) - (3, 2) = $\sqrt{(6-3)^2 + (7-2)^2} = 5.83$. The smallest distance is 3.16, which corresponds to the first object of interest. Therefore, the first object of interest may be identified as the target object.

In an embodiment, a similarity score is determined based on object shapes. An object of interest that is most similar in shape to the target object shown in the captured image of the previous section surface is associated with the highest similarity score.

As an example, a particular type of object of interest may be associated with a particular geometric shape. Mitochondria, for example, may be modelled as ellipses. Hence, ellipse parameters (such as, eccentricity, direction of major axis, surface) of a target object shown in a captured image of a previous section surface may be determined. Ellipse parameters of each object of interest shown in a segmented image may be determined. The ellipse parameters of the target object and each object of interest may be compared. An object of interest associated with a least difference in ellipse parameters with the target object may be determined as being most similar in shape, and therefore the target object.

As another example, a shape of a target object shown in a captured image of a previous section surface may be identified. A shape of each object of interest shown in a segmented image may be identified. The shape of the target object may be overlaid on top of the shape of each object of interest. The area of where the two shapes do not overlap is determined for each object of interest. An object of interest associated with a least non-overlapping area may be determined as being most similar in shape, and therefore the target object.

As another example, a bounding box (such as a rectangle that most closely fits the shape of the object) may be drawn around a target object shown in a captured image of a previous section surface. A bounding box may be drawn around each object of interest shown in a segmented image. A difference between (a) the area of the bounding box around the target object and (b) the area of the bounding box around each object of interest may be computed. An object of interest associated with a least difference in bounding box area may be determined as being most similar in shape, and therefore the target object.

As another example, an area and circumference of a target object shown in a captured image of a previous section surface may be determined. An area-to-circumference ratio for the target object may be determined. An area and circumference of each object of interest shown in a segmented image may be determined. An area-to-circumference ratio for each object of interest may be determined. A difference between (a) the area-to-circumference ratio for the target object and (b) the area-to-circumference ratio for each object of interest may be computed. An object of interest associated with a least difference in area-to-circumference ratio may be determined as being most similar in shape, and therefore the target object.

As another example, a similarity score between a target object shown in a captured image of a previous section surface and an object of interest shown in a segmented image may be determined based on a combination of the factors described above, such as ellipse parameters, non-overlapping areas, bounding box areas, object areas, and/or circumferences. Additionally or alternatively, a similarity score between a target object shown in a captured image of a previous section surface and an object of interest shown in a segmented image may be determined based on other factors.

In an embodiment, a similarity score is determined based on a combination of object positions, object shapes, and/or other factors. Each factor may be weighted the same or weighted differently.

In an embodiment, the object tracking image segmentation system may perform Operation 220 using the segmented image of the previous section surface rather than the captured image of the previous section surface. Hence, the object tracking image segmentation system identifies an object of interest shown in the segmented image of the current section surface that is associated with a highest similarity score with the target object shown in the segmented image of the previous section surface.

One or more embodiments include identifying a target object position in the segmented image of the current section surface (Operation 222). As described above at Operation 220, a particular object of interest shown in the segmented image, of the current section surface, is identified as the target object. Examples of operations for identifying a position in a particular image corresponding to a particular object are described above with reference to Operation 206. The same set of rules that are used at Operation 206 for determining the target object position in the captured image of the first section surface is used for determining the target object position in the segmented image.

One or more embodiments include determining a movement vector from the target object position in the captured image of the previous section surface to the target object position in the segmented image of the current section surface (Operation 224). Examples of operations for determining a movement vector from one position in an image to another position in an image are described above with reference to Operation 208.

In an embodiment, the object tracking image segmentation system may perform Operation 224 using the segmented image of the previous section surface rather than the captured image of the previous section surface. Hence, the object tracking image segmentation system determines a movement vector from the target object position in the segmented image of the previous section surface to the target object position in the segmented image of the current section surface.

One or more embodiments include moving the field of view of the microscope according to the movement vector (Operation 226). Examples of operations for moving a field of view of a microscope according to a movement vector are described above with reference to Operation 210.

One or more embodiments include obtaining another captured image of the current section surface of the specimen (Operation 228). Examples of operations for obtaining another captured image of a particular section surface after moving the field of view of the microscope to center on the target object in the particular section surface are described above with reference to Operation 212.

In an embodiment, Operation 228 is not performed. Even though the captured image of the current section surface, obtained at Operation 216, is not necessarily centered on the target object, the captured image obtained at Operation 216 is accepted as the image of the current section surface for the 3D rendering of the specimen.

One or more embodiments include determining whether there are any additional section surfaces to be observed (Operation 230).

In an embodiment, block face scanning electron microscopy is used. The object tracking image acquisition system determines whether to perform another slicing of the specimen. If there is still sufficient depth remaining in the specimen, another slicing may be performed. But if there is not sufficient depth remaining in the specimen, then another slicing is not performed. Additionally or alternatively, if the number of section surfaces observed is insufficient, another slicing may be performed. But if the number of section surfaces observed is sufficient, then another slicing is not performed. Additional or alternative criteria may be used for determining whether to perform another slicing to expose additional section surface for observation under the microscope.

In an embodiment, serial section scanning electron microscopy is used. The specimen is initially cut into a set of slices. The object tracking image acquisition system determines whether there are any slices of the specimen not yet observed.

If there is an additional section surface to be observed, one or more embodiments include setting the next section surface as the current section surface in preparation for obtaining a next captured image (Operation 232). Examples of operations for preparing a next section surface for observation under the microscope are described above with reference to Operation 214.

Operations 216-230 are iterated with respect to the current section surface. Hence, the object tracking image acquisition system traverses through each section surface of the specimen. The object tracking image acquisition system moves the field of view of the microscope after obtaining a captured image of a particular section surface in preparation for obtaining a captured image of a next section surface. The object tracking image acquisition system thus tracks the target object through multiple section surfaces of a specimen.

After all section surfaces are observed, one or more embodiments include compiling a 3D rendering of the specimen that tracks the target object (Operation 234).

In an embodiment, Operations 212 and 230 are performed. At Operations 212 and 230, the captured images are obtained after the field of view of the microscope has been moved to center on the target object. The captured images at Operations 212 and 230 are compiled to generate a 3D rendering of the specimen. However, the captured images obtained at Operations 202 and 216 are not necessarily centered on the target object. At Operations 202 and 216, the captured images are obtained for purposes of determining how much the target object has moved, as compared to a previous section surface. Therefore, the captured images at Operations 202 and 216 are not compiled when generating the 3D rendering of the specimen.

In an embodiment, Operations 212 and 230 are not performed. Even though the captured images obtained at Operations 202 and 216 are not necessarily centered on the target object, the captured images obtained at Operations 202 and 216 are accepted as sufficiently tracking the target object. It is assumed that the target object does not significantly change position from section surface to section surface. Based on the assumption, a field of view for capturing an image of a particular section surface may be positioned based on a target object position for a previous section surface. Therefore, the captured images at Operations 202 and 216 are compiled to generate a 3D rendering of the specimen. In an embodiment, every captured image of every section surface is compiled for generating the 3D rendering of the specimen.

In an embodiment, the captured images selected for compilation are used to generate an animation. The captured image associated with the first section surface is placed first in the animation. The captured image associated with the second section surface is placed second in the animation. Thus, all captured images are ordered in the animation. A user may play the animation. A user interface may successively present the ordered captured images. The animation appears to move through a cross section of the specimen, while tracking the target object.

In an embodiment, the captured images selected for compilation are used to generate an interactive 3D model. A user may rotate the 3D model, or zoom in or zoom out on the 3D model. The 3D model may track the target object through a cross section of the specimen.

In an embodiment, additional or alternative 3D renderings may be generated.

Figures 3A-3B illustrate an example set of operations for obtaining successive specimen images that track a target object, in accordance with one or more embodiments. One or more operations illustrated in Figures 3A-3B may be modified, rearranged, or omitted all together. Accordingly, the particular sequence of operations illustrated in Figures 3A-3B should not be construed as limiting the scope of one or more embodiments.

One or more embodiments include obtaining a captured image of a specimen at a first time interval (Operation 302). A microscope is configured using a first set of values for one or more positioning parameters. A specimen is mounted to a stage for observation under the microscope. A stimulus may stimulate the specimen, causing the specimen to change over time. As an example, chemical reactions may occur within the specimen. Bubbles may be generated within the specimen. Various elements and/or compounds may be generated in the specimen.

A surface of the specimen is observed using the microscope. A captured image is generated showing a particular area of the specimen that is within the field of view of the microscope. An object tracking image acquisition system obtains the captured image of the specimen from the microscope.

One or more embodiments include identifying a target object in the captured image (Operation 304). Examples of operations for identifying a target object in a captured image are described above with reference to Operation 204.

One or more embodiments include identifying a target object position in the captured image (Operation 306). Examples of operations for identifying a target object position in a captured image are described above with reference to Operation 206.

One or more embodiments include determining a movement vector from the center of the captured image to the target object position in the captured image (Operation 308). Examples of operations for determining a movement vector from one position in an image to another position in an image are described about with reference to Operation 208.

One or more embodiments include moving the field of view of the microscope, with respect to the specimen, according to the movement vector (Operation 310). Examples of operations for moving a field of view of a microscope according to a movement vector are described above with reference to Operation 210. The field of view is moved in real time. As the field of view is moved, the specimen continues to change over time. It is not possible to obtain another captured image of the specimen at the first time interval, as the first time interval has already passed, and the specimen has already changed in appearance.

One or more embodiments, not forming part of the invention, include obtaining a captured image of the specimen at the current time interval (Operation 312). A time interval between obtaining captured images of the specimen may be specified by a user and/or another application. The time intervals between each captured image may be the same or different. As an example, a user may specify that specimen images are to be captured every 0.1 seconds. A first specimen image may be captured at 9:00:00.100, which is referred to as a "first time interval." A second time interval for capturing a second specimen image would then be 9:00:00.200. A third time interval for capturing a third specimen image would then be 9:00:00.300. As another example, a user may specify that a microscope is to capture successive specimen images at irregular time intervals. The microscope is to capture a first specimen image at 9:00:00.100, a second specimen image at 9:00:00.300, and a third specimen image at 9:00:00.400. When a time interval for capturing another specimen image occurs, the microscope captures another specimen image.

The surface of the specimen is observed using the microscope. A captured image is generated showing a particular area of the specimen that is within the field of view of the microscope. The object tracking image acquisition system obtains the captured image of the specimen from the microscope.

One or more embodiments include generating a segmented image based on the captured image (Operation 314). Examples of operations for generating a segmented image based on a captured image are described above with reference to Operation 218.

One or more embodiments, not forming part of the invention, include identifying an object of interest shown in the segmented image that is associated with a highest similarity score with the target object shown in a captured image for a previous time interval (Operation 316). Examples of operations for identifying an object of interest shown in a segmented image that is associated with a highest similarity score with a target object shown in another image are described above with reference to Operation 220.

In an embodiment, the captured image for the immediately preceding time interval is used. An object of interest shown in the segmented image that is associated with a highest similarity score with the target object shown in the captured image for the immediately preceding time interval is identified. In another embodiment, the captured image for a previous time interval that is earlier than the immediately preceding time interval is used. This may be necessary due to insufficient processing speed. As an example, images may be captured every 0.1 seconds, but processing time may require 1 second. In this case, a captured image for 10 time intervals prior to the current time interval may be used.

One or more embodiments include identifying a target object position in the segmented image for the current time interval (Operation 318). Examples of operations for identifying a target object position in a segmented image are described above with reference to Operation 222.

One or more embodiments include determining a movement vector from the target object position in the captured image for the previous time interval to the target object position in the segmented image for the current time interval (Operation 320). Examples of operations for determining a movement vector from one position in an image to another position in an image are described above with reference to Operation 208.

One or more embodiments include moving the field of view of the microscope according to the movement vector (Operation 226). Examples of operations for moving a field of view of a microscope according to a movement vector are described above with reference to Operation 210.

One or more embodiments include determining whether the current time is still within a time period of interest (Operation 324). A time period of interest may be specified by a user and/or another application. As an example, a user may specify that a time period of interest is 3 minutes. The user may specify that specimen images are to be captured every 0.5 seconds. Based on the user input, successive specimen images may be captured every 0.5 seconds for a total of 3 minutes. At 3 minutes after the capturing of the first specimen image, the time period of interest has passed. As another example, a user may specify that a time period of interest is the time needed to capture 1000 specimen images. The user may specify that specimen images are to be captured every 0.8 seconds. Successive specimen images may be captured every 0.8 seconds, until 1000 specimen images have been captured. After capturing the 1000th specimen image, the time period of interest has passed.

If the time period of interest has not passed, Operations 312-322 are iterated with respect to each time interval. Hence, the object tracking image acquisition system obtains captured specimen images through the time period of interest. The object tracking image acquisition system moves the field of view of the microscope after obtaining a captured image at each time interval in preparation for obtaining a captured image at a next time interval. The object tracking image acquisition system thus tracks the target object through the time intervals within the time period of interest.

After the time period of interest has passed, one or more embodiments include compiling successive specimen images that track the target object over time (Operation 326). The captured images at Operations 302 and 312 are compiled as a set of successive specimen images that track the target object. In an embodiment, every captured image at every time interval is compiled into the set of successive specimen images.

Even though the captured images obtained at Operations 302 and 312 are not necessarily centered on the target object, the captured images obtained at Operations 302 and 312 are accepted as sufficiently tracking the target object.

In an embodiment, the captured images are compiled to generate an animation. The captured images are chronologically ordered into the animation based on the time at which the captured images were generated. A user may play the animation. A user interface may successively present the ordered captured images. The animation shows the change of the specimen over time, while tracking the target object.

In an embodiment, additional or alternative compilations of the successive images may be generated.

## 4. EXAMPLE EMBODIMENTS

Detailed examples are described below for purposes of clarity. Components and/or operations described below should be understood as specific examples which may not be applicable to certain embodiments. Accordingly, components and/or operations described below should not be construed as limiting the scope of any of the claims.

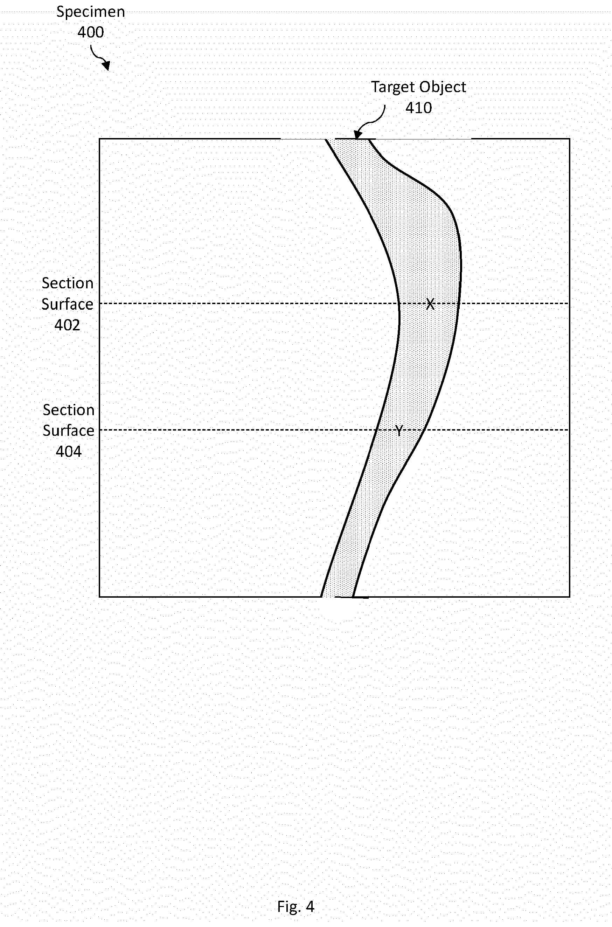

Figures 4 illustrates an example cross-section of a specimen, in accordance with one or more embodiments. Specimen 400 includes a target object 410 that runs through the cross-section of the specimen 400. Specimen 400 also includes other objects (not drawn). Various section surfaces 402-404 of the specimen may be observed under a microscope. At section surface 402, the target object 410 is located at *Position X*. At section surface 404, the target object 410 is located at *Position Y*.

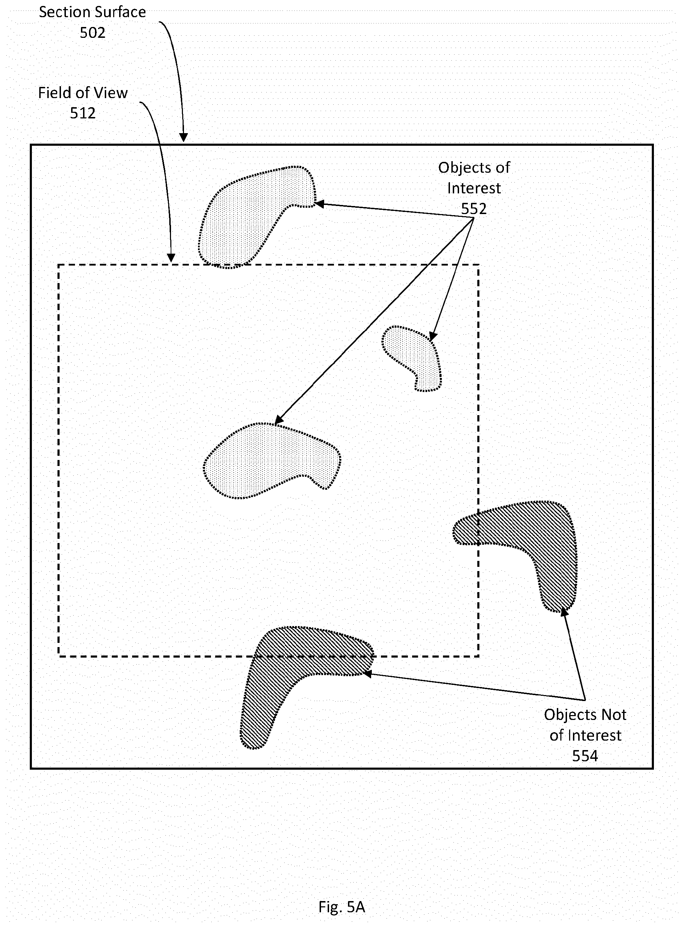

Figures 5A-5J illustrate an example for obtaining a 3D specimen rendering that tracks a target object, in accordance with one or more embodiments.

Figure 5A shows section surface 502 of a specimen. Several objects appear on section surface 502, including objects of interest 552 and objects not of interest 554. As an example, the objects of interest may be mitochondria, while the objects not of interest are other biological structures within the specimen. A first set of values for the positioning parameters of a microscope results in field of view 512 with respect to section surface 502. Hence, the region of section surface 502 within field of view 512 is observable by the microscope; the region outside of field of view 512 is not observable by the microscope.

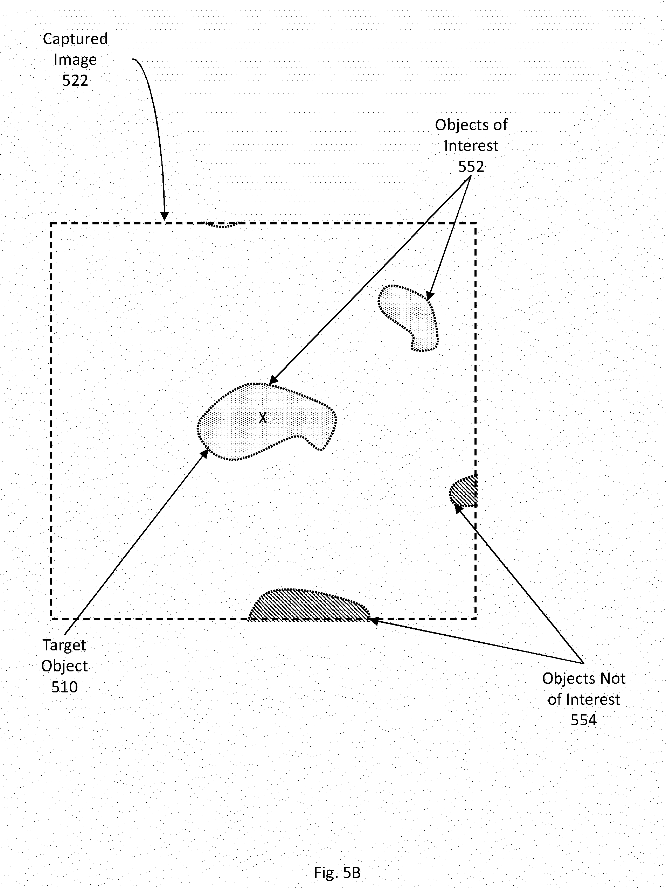

Figure 5B shows captured image 522 of section surface 502. Captured image 522 shows the region of section surface 502 that is within field of view 512. Captured image 522 shows both objects of interest 552 and objects not of interest 554.

A user views captured image 522. The user enters in user input identifying target object 510. A center of target object 510 is identified at *Position X. Position X* may be associated with the coordinates (5, 5). *Position X* is deemed a target object position in the captured image 522.

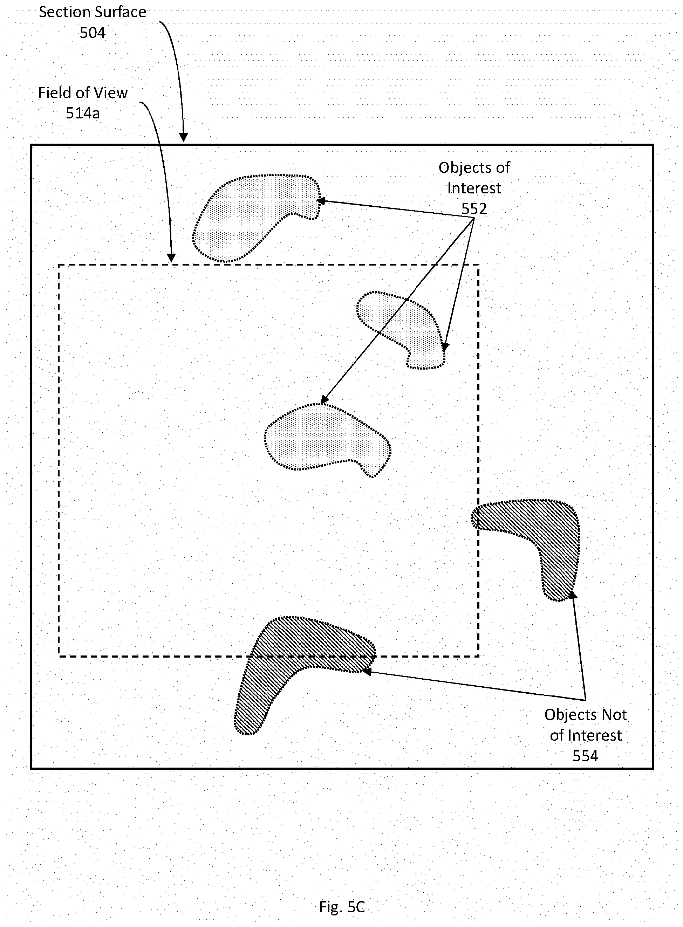

A next section surface 504 is prepared for observation under the microscope. Figure 5C shows section surface 504 of the specimen. Objects of interest 552 and objects not of interest 554 that appear on section surface 502 also appear on section surface 504.

However, the objects may appear in a different shape and/or different position. The first set of values for the positioning parameters is still being used for configuring the microscope. The first set of values for the positioning parameters results in field of view 514a with respect to section surface 504. Hence, the region of section surface 504 within field of view 514a is observable by the microscope; the region outside of field of view 514a is not observable by the microscope.

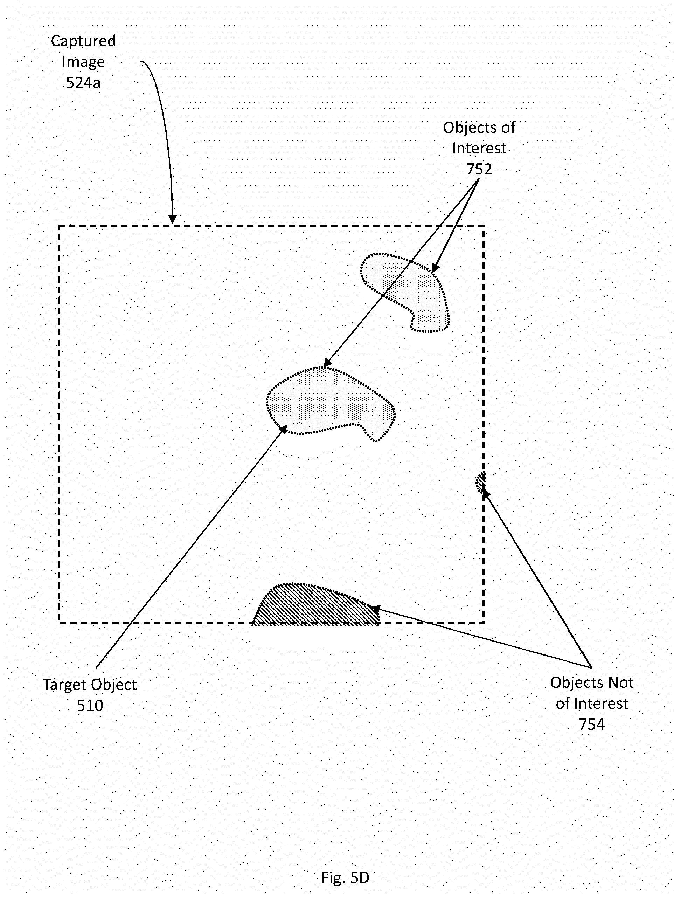

Figure 5D shows captured image 524a of section surface 504. The captured image 524a shows the region of section surface 504 that is within field of view 514a. Captured image 524a shows both objects of interest 552 and objects not of interest 554. Note that target object 510 is not necessarily at the center of captured image 524a.

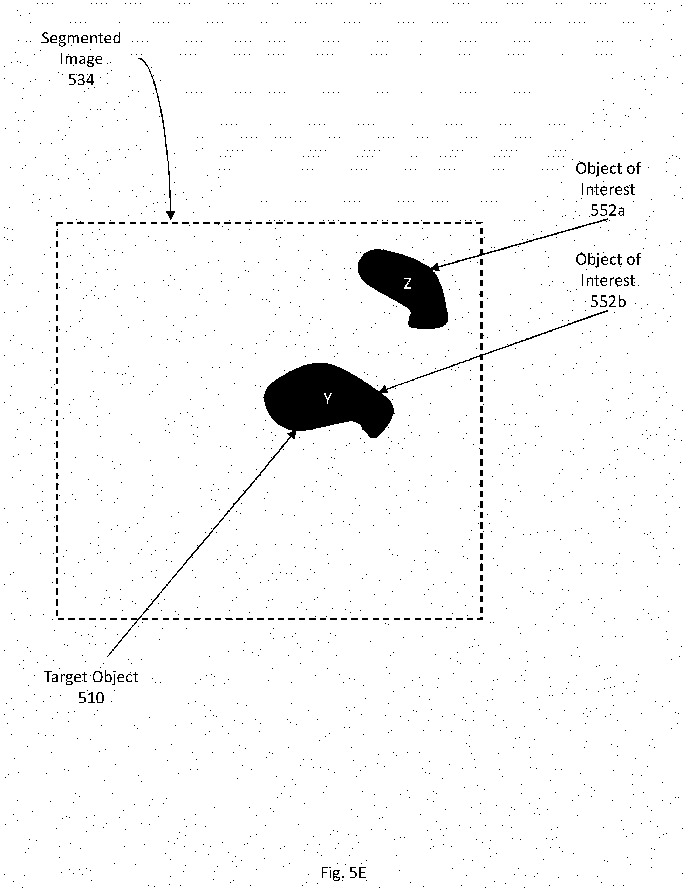

Figure 5E shows segmented image 534 generated based on captured image 524a of section surface 504. Segmented image 534 indicates particular segments showing objects of interest 552a-b. Segmented image 534 indicates that any area outside of the particular segments do not show any objects of interest.

A center of object of interest 552a is identified at *Position Z. Position Z* is deemed a position in segmented image 534 corresponding to object of interest 552a.

*Position Z* may be associated with the coordinates (9, 9). A distance between *Position X* (the target object position) in captured image 522 and *Position Z* in segmented image 534 is computed as

$$\sqrt{(9-5)^2 + (9-5)^2} = 5.66.$$

A center of object of interest 552b is identified at *Position Y. Position Y* is deemed a position in segmented image 534 corresponding to object of interest 552b. *Position Y* may be associated with the coordinates (7, 6). A distance between *Position X* (the target object position) in captured image 522 and *Position Y* in segmented image 534 is computed as

$$\sqrt{(7-5)^2 + (6-5)^2} = 2.24.$$

Therefore, the smallest distance is determined as 2.24. The smallest distance corresponds to object of interest 552b. Object of interest 552b is identified as target object 510. *Position Y* is deemed a target object position in segmented image 534.

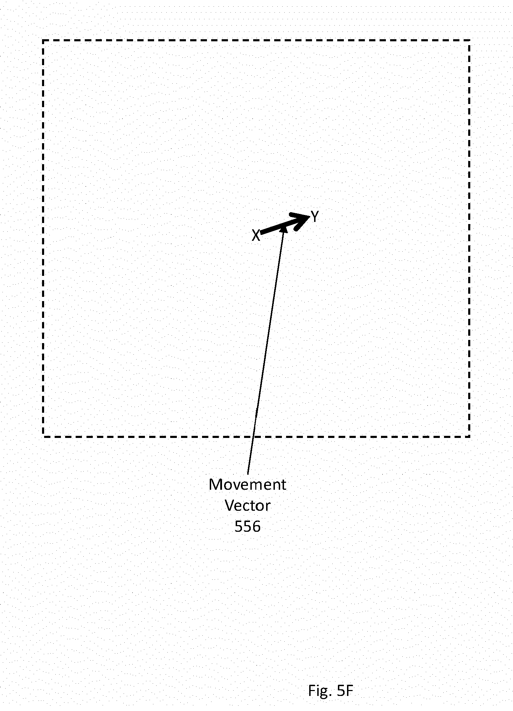

Figure 5F shows a movement vector 556 from the target object position in captured image 522 (*Position X*) to the target object position in segmented image 534 (*Position Y*). The movement vector may be expressed as (2, 1). The movement vector is 2 units long in the x-direction and 1 unit long in the y-direction.

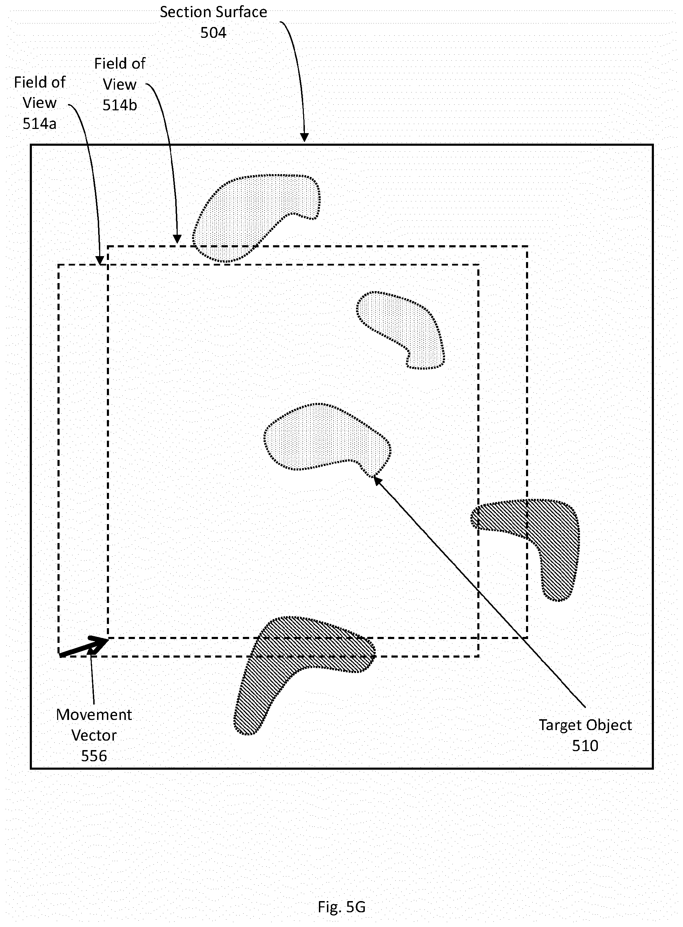

Figure 5G shows section surface 504 of the specimen. A second set of values for the positioning parameters is configured for the microscope. The second set of values for the positioning parameters moves the field of view according to the movement vector 556. In particular, the distance between the previously-used field of view 514a and the current field of view 514b is equal to the movement vector 556. Hence, the region of section surface 504 within field of view 514b is observable by the microscope; the region outside of field of view 514b is not observable by the microscope. As illustrated, target object 510 is now in the center of field of view 514b.

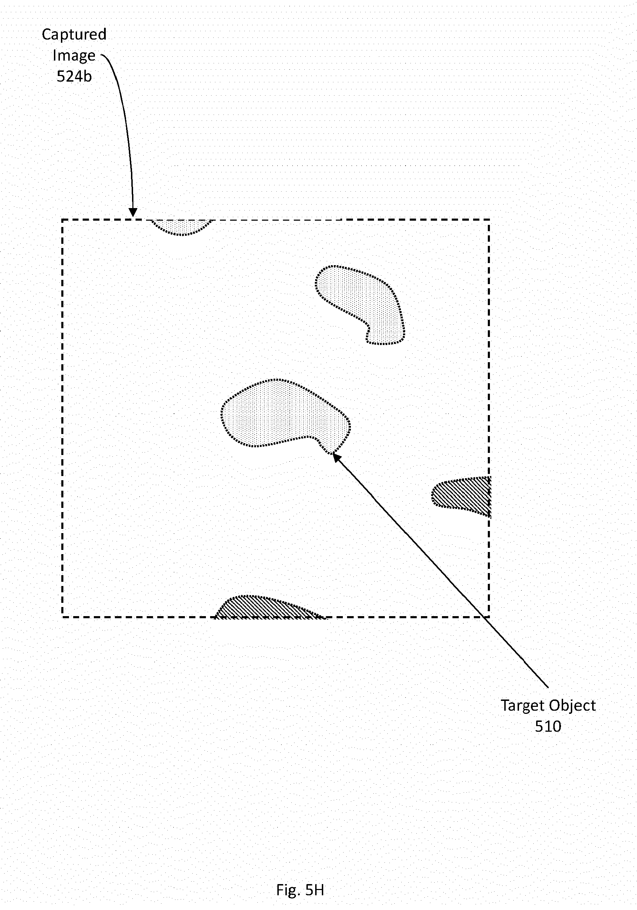

Figure 5H shows captured image 524b of section surface 504. The captured image 524b shows the region of section surface 504 that is within field of view 514b. Captured image 524a and captured image 524b are similar except that captured image 524b is centered on target object 510.

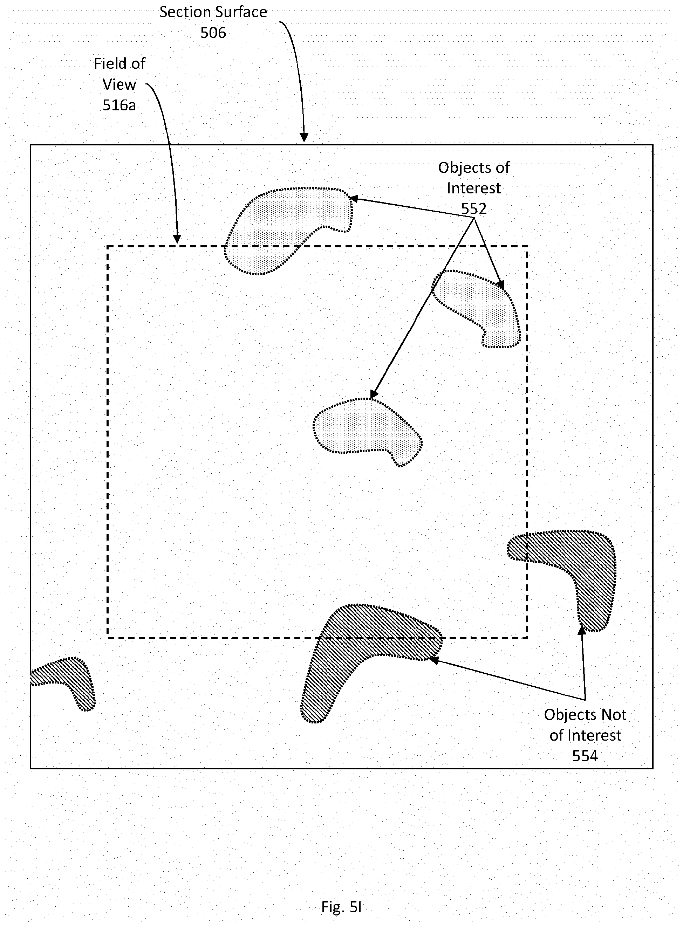

A next section surface 506 is prepared for observation under the microscope. The process is iterated for section surface 506. Figure 5I shows section surface 506 of the specimen. Objects of interest 552 and objects not of interest 554 that appear on section surface 502 and section surface 504 also appear on section surface 506. However, the objects may appear in a different shape and/or different position. The second set of values for the positioning parameters is still being used for configuring the microscope. The second set of values for the positioning parameters results in field of view 516a with respect to section surface 506. Hence, the region of section surface 506 within field of view 516a is observable by the microscope; the region outside of field of view 516a is not observable by the microscope.

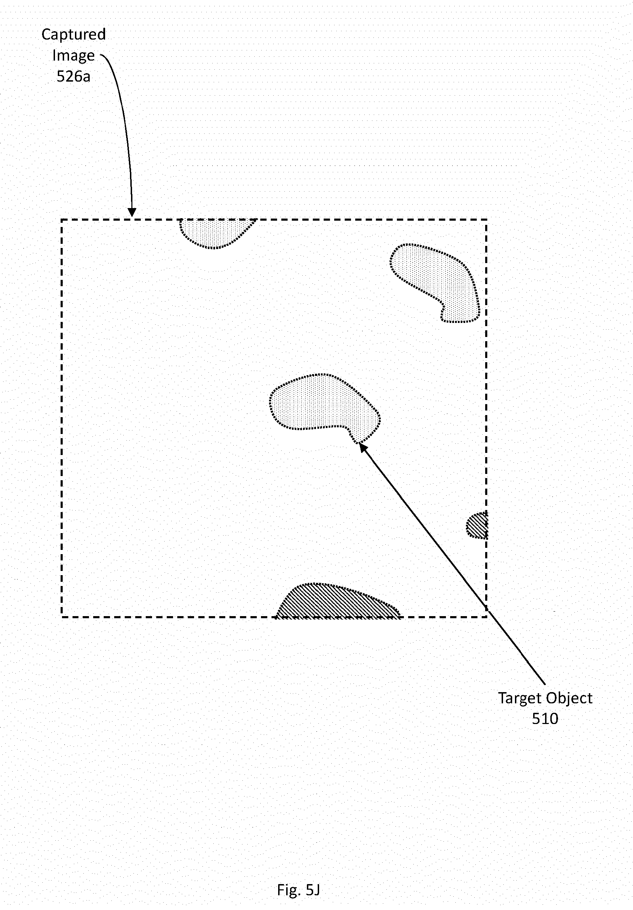

Figure 5J shows captured image 526a of section surface 506. The captured image 526a shows the region of section surface 506 that is within field of view 516a. Captured image 526a shows both objects of interest 552 and objects not of interest 554. Note that target object 510 is not necessarily at the center of captured image 526a.

Hence, the process may continue to be iterated for each section surface of the specimen. Captured images that center on target object 510 (such as captured images 524b, but not captured images 524a and 526a) are compiled to generate a 3D rendering of the specimen.

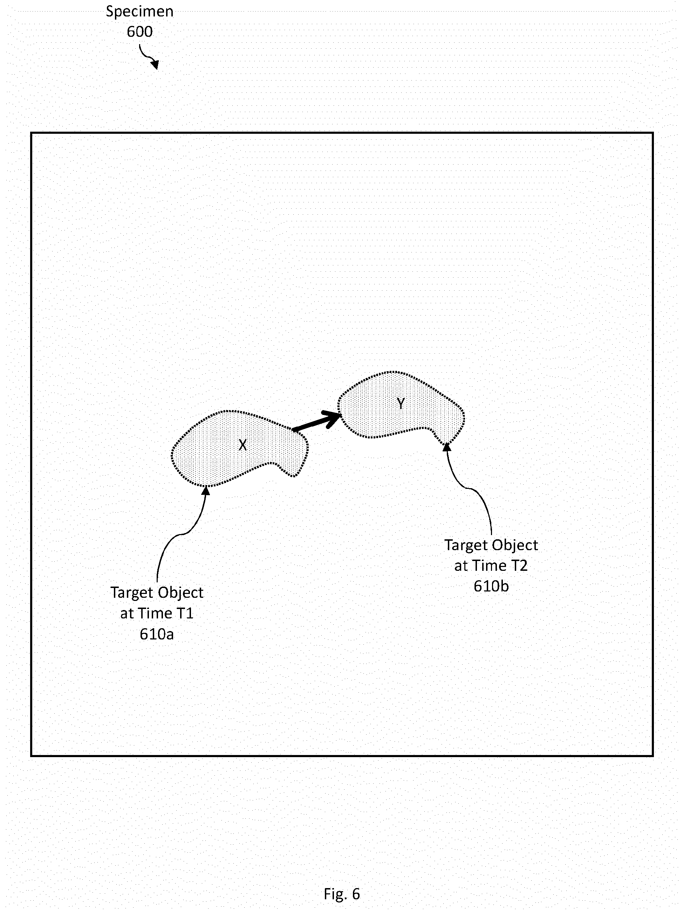

Figure 6 illustrates an example specimen that changes over time, in accordance with one or more embodiments, not forming part of the invention. Specimen 600 includes a target object that moves and changes over time. Specimen 600 also includes other objects (not drawn). At time T1, the target object 610a may be located at *Position X.* At time T2, the same target object 610b may be located at *Position Y.*

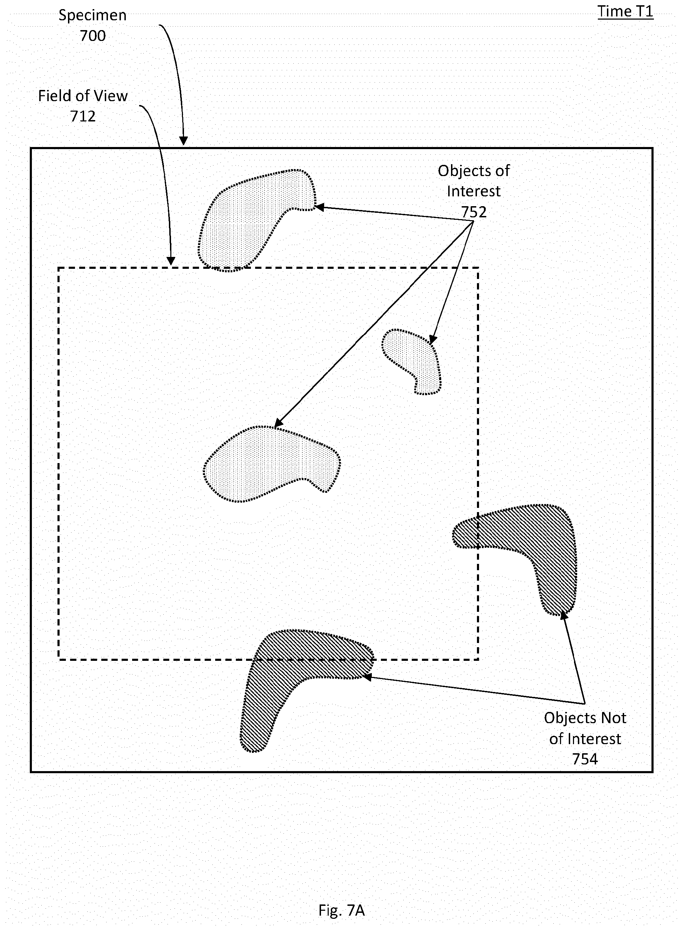

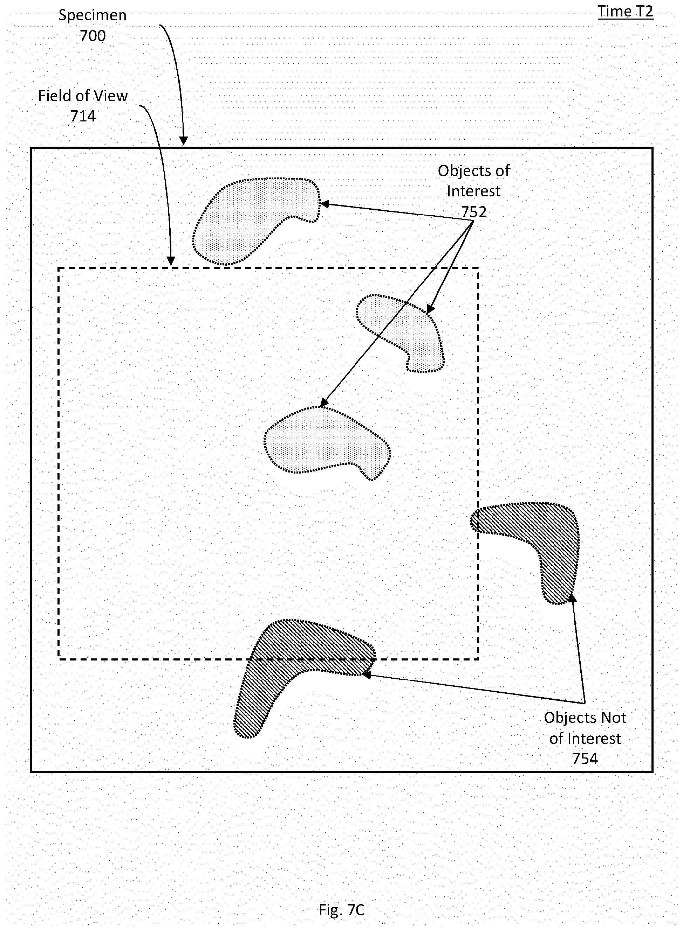

Figures 7A-7H illustrate an example for obtaining successive specimen images that track a target object, in accordance with one or more embodiments.

Figure 7A shows specimen 700 at time T1. Several objects appear on a surface of specimen 700, including objects of interest 752 and objects not of interest 754. A first set of values for the positioning parameters of a microscope results in field of view 712 with respect to specimen 700. Hence, the region of specimen 700 within field of view 712 is observable by the microscope; the region outside of field of view 712 is not observable by the microscope.

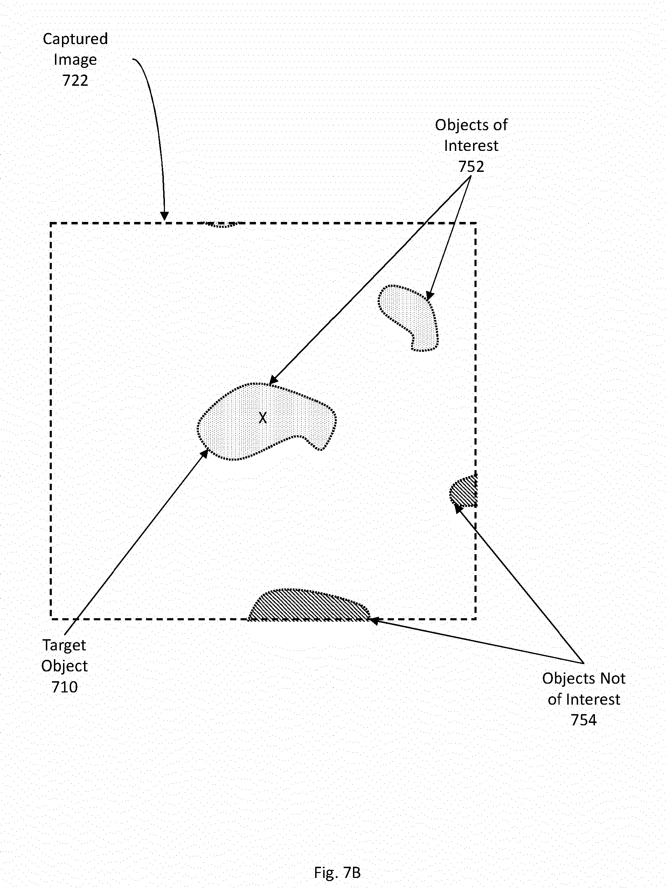

Figure 7B shows captured image 722 of specimen 700 at time T1. Captured image 722 shows the region of specimen 700 that is within field of view 712. Captured image 722 shows both objects of interest 752 and objects not of interest 754.

A user views captured image 722. The user enters in user input identifying target object 710. A center of target object 710 is identified at *Position X. Position X* may be associated with the coordinates (5, 5). *Position X* is deemed a target object position in the captured image 722.

A time interval has passed, and it is currently time T2. Figure 5C shows specimen 700 at time T2. Objects of interest 752 and objects not of interest 754 that appeared on specimen at time T1 also appear on specimen at time T2. However, the objects may appear in a different shape and/or different position. The first set of values for the positioning parameters is still being used for configuring the microscope. The first set of values for the positioning parameters results in field of view 714 with respect to specimen 700. Hence, the region of specimen 700 within field of view 714 is observable by the microscope; the region outside of field of view 714 is not observable by the microscope.

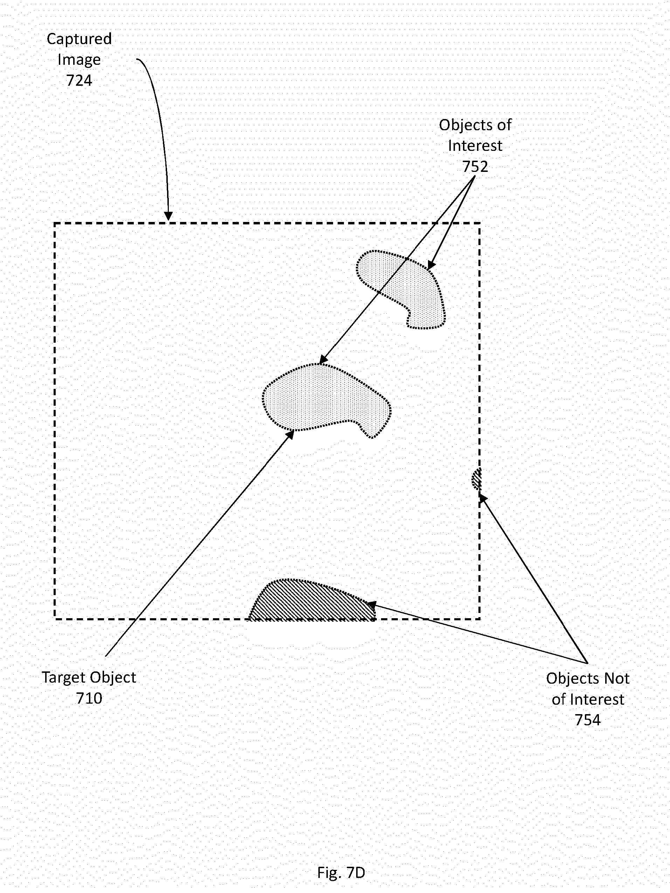

Figure 7D shows captured image 724 of specimen 700 at time T2. The captured image 724 shows the region of specimen 700 that is within field of view 714. Captured image 724 shows both objects of interest 752 and objects not of interest 754. Note that target object 710 is not necessarily at the center of captured image 724.

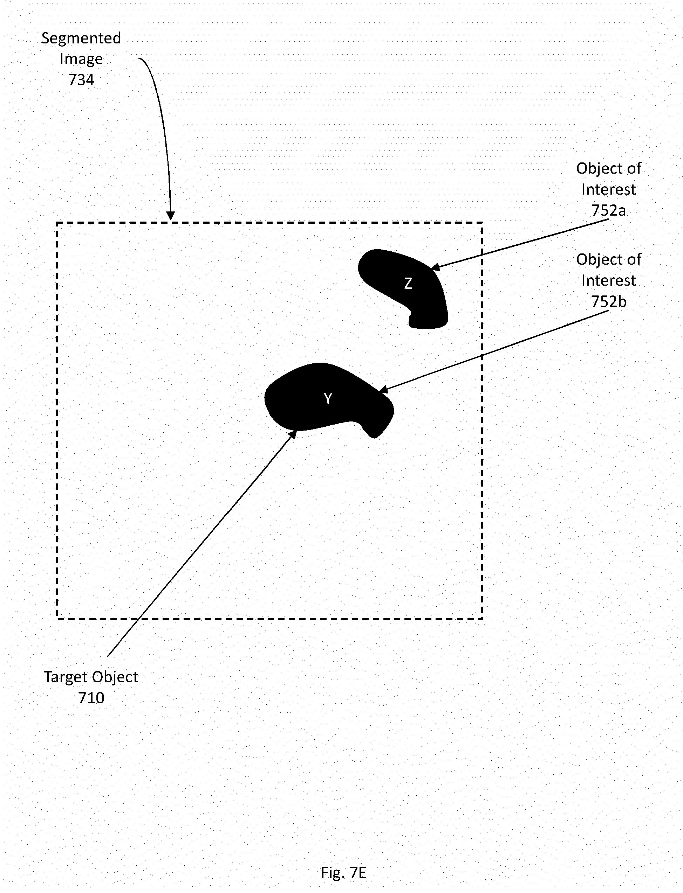

Figure 7E shows segmented image 734 generated based on captured image 724 of specimen 700 at time T2. Segmented image 734 indicates particular segments showing objects of interest 752a-b. Segmented image 734 indicates that any area outside of the particular segments do not show any objects of interest.

A center of object of interest 752a is identified at *Position Z. Position Z* is deemed a position in segmented image 734 corresponding to object of interest 752a. *Position Z* may be associated with the coordinates (9, 9). A distance between *Position X* (the target object position) in captured image 722 and *Position Z* in segmented image 734 is computed as

$$\sqrt{(9-5)^2 + (9-5)^2} = 5.66.$$

A center of object of interest 752b is identified at *Position Y. Position Y* is deemed a position in segmented image 734 corresponding to object of interest 752b. *Position Y* may be associated with the coordinates (7, 6). A distance between *Position X* (the target object position) in captured image 722 and *Position Y* in segmented image 734 is computed as

$$\sqrt{(7-5)^2 + (6-5)^2} = 2.24.$$

Therefore, the smallest distance is determined as 2.24. The smallest distance corresponds to object of interest 752b. Object of interest 752b is identified as target object 710. *Position Y* is deemed a target object position in segmented image 734.

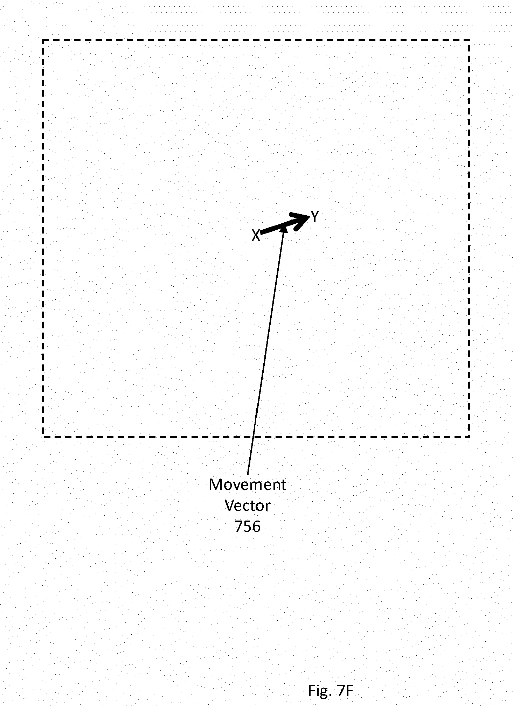

Figure 7F shows a movement vector 756 from the target object position in captured image 722 (*Position X*) to the target object position in segmented image 734 (*Position Y*). The movement vector may be expressed as (2, 1). The movement vector is 2 units long in the x-direction and 1 unit long in the y-direction.

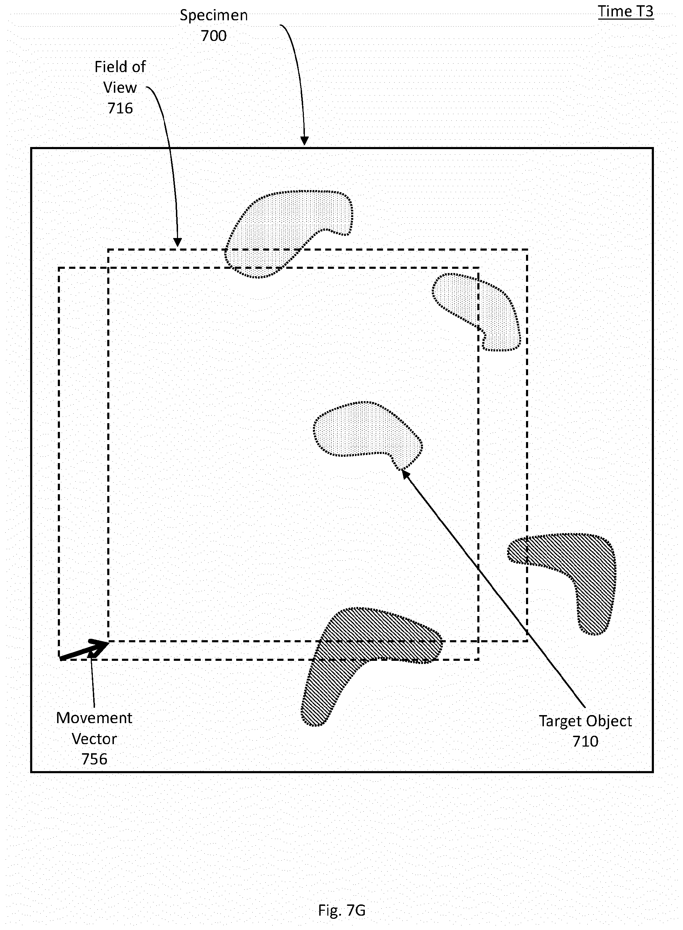

A time interval has passed, and it is currently time T3. The process is iterated for specimen 700 at time T3. Figure 7G shows specimen 700 at time T3. Objects of interest 752 and objects not of interest 754 that appear on specimen 700 at times T1 and T2 also appear on specimen 700 at time T3. However, the objects may appear in a different shape and/or different position.

A second set of values for the positioning parameters is configured for the microscope. The second set of values for the positioning parameters moves the field of view according to the movement vector 756. In particular, the distance between the previously-used field of view 714 and the current field of view 716 is equal to the movement vector 756. Hence, the region of specimen 700 within field of view 716 is observable by the microscope; the region outside of field of view 716 is not observable by the microscope.

The field of view of the microscope is moved in real time. As the field of view of the microscope is moving, specimen 700 continues to change. Hence, from time T2 to time T3, target object 710 has changed in shape and/or position. Therefore, even though the field of view has been updated according to movement vector 756, target object 510 is not necessarily at the center of the current field of view 716.

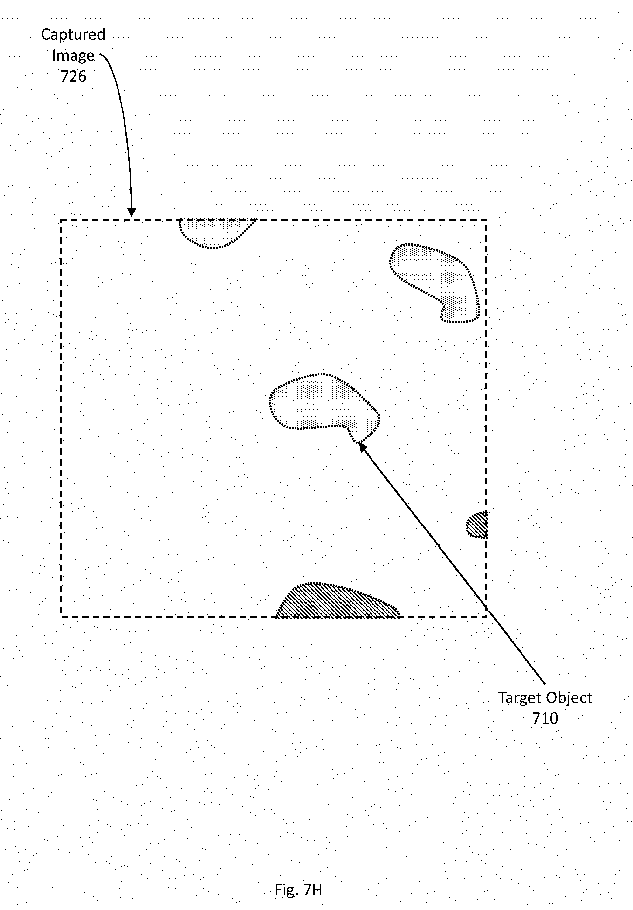

Figure 7H shows captured image 726 of specimen 700 at time T3. The captured image 726 shows the region of specimen 700 that is within field of view 716. Captured image 726 shows both objects of interest 752 and objects not of interest 754. Note that target object 710 is not necessarily at the center of captured image 726.

Hence, the process may continue to be iterated for each time interval within a time period of interest. Each captured image (such as captured images 722, 724, 726) are compiled to generate an animation showing the change of the specimen over time.

## 5. OBJECT TRACKING BASED ON COMPARATIVE CONNECTING VECTORS ASSOCIATED WITH OBJECTS OF INTEREST IN A SEGMENTED IMAGE

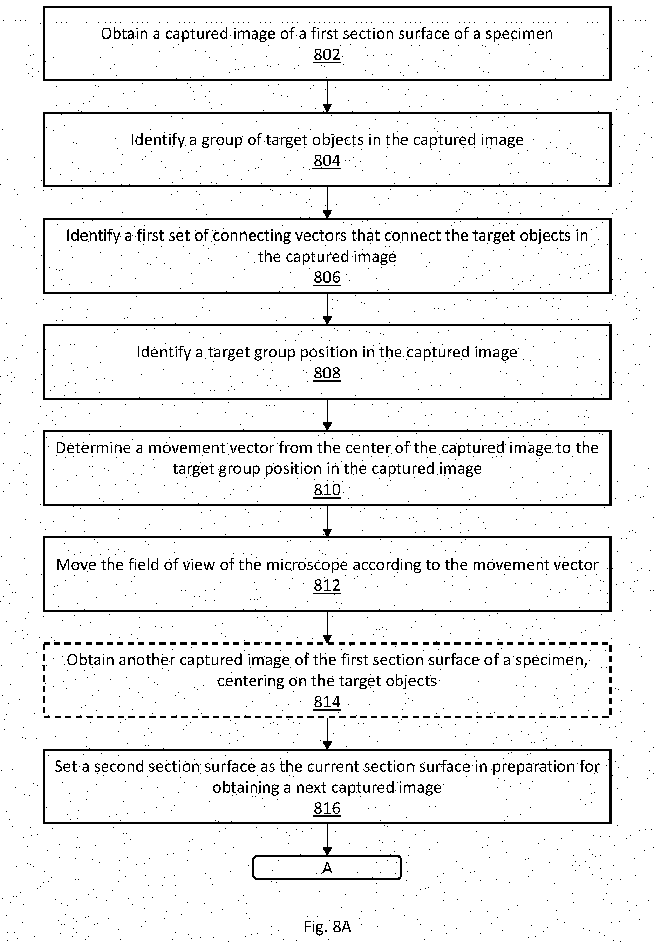

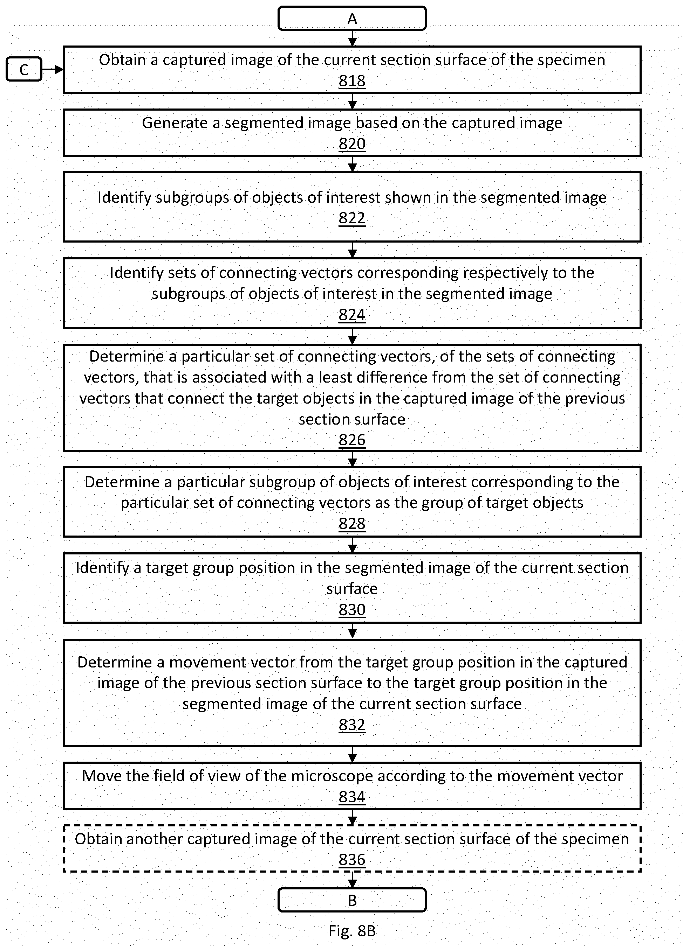

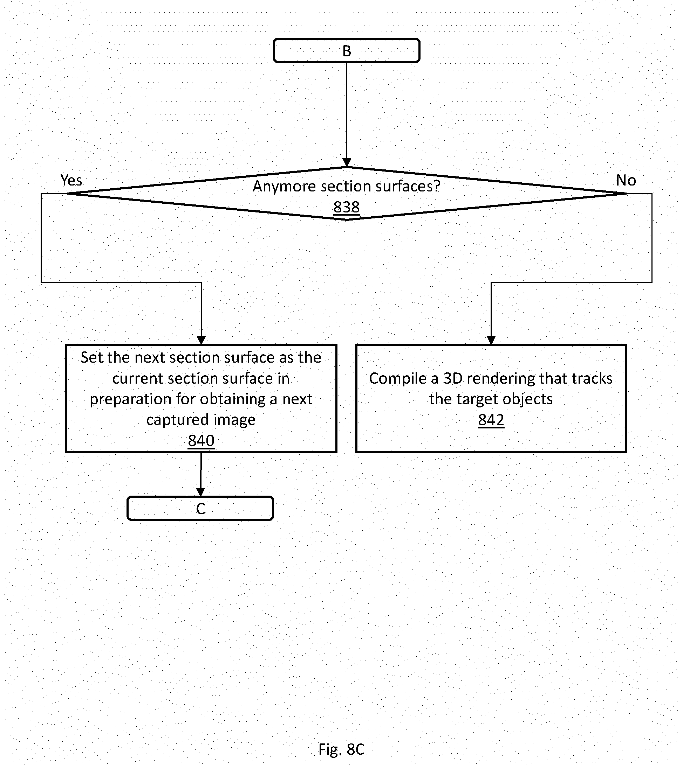

Figures 8A-8C illustrate an example set of operations for obtaining a 3D specimen rendering that tracks a plurality of target objects, in accordance with one or more embodiments. One or more operations illustrated in Figures 8A-8C may be modified, rearranged, or omitted all together. Accordingly, the particular sequence of operations illustrated in Figures 8A-8C should not be construed as limiting the scope of one or more embodiments.

One or more embodiments include obtaining a captured image of a first section surface of a specimen (Operation 802). Examples of operations for obtaining a captured image of a first section surface of a specimen are described above with reference to Operation 202.

One or more embodiments include identifying a group of target objects in the captured image (Operation 804). Examples of operations for identifying a target object in a captured image are described above with reference to Operation 204.

One or more embodiments include identifying a first set of connecting vectors that connect the target objects in the captured image (Operation 806). The object tracking image acquisition system identifies a position corresponding to each target object within the group. A position corresponding to each target object may be, for example, a center of each target object. A vector may be drawn between each two target objects within the group. A set of connecting vectors for the target objects includes at least the vectors that are sufficient for connecting to each target object at least once.

As an example, a group of target objects may include *Object A, Object B,* and *Object C. Position A* (2, 2) may correspond to *Object A. Position B* (4, 2) may correspond to *Object B. Position C* (2, 5) may correspond to *Object C.*

A set of connecting vectors for the target objects may include: (a) a vector from *Position A* (2, 2) to *Position B* (4, 2); and (b) a vector from *Position A* (2, 2) to *Position C* (2, 5). Each vector connects two target objects. The set of connecting vectors connects to each of *Object A, Object B,* and *Object C* at least once.

Alternatively, a set of connecting vectors for the target objects may include: (a) a vector from *Position A* (2, 2) to *Position B* (4, 2); (b) a vector from *Position A* (2, 2) to *Position C* (2, 5). Each vector connects two target objects; and (c) a vector from *Position B* (4, 2) to *Position C* (2, 5).

One or more embodiments include identifying a target group position in the captured image (Operation 808). The object tracking image acquisition system identifies a position in the captured image corresponding to the group of target objects. A position in an image corresponding to a group of target objects may also be referred to herein as a "target group position in the image." A target group position in a particular image may be expressed as a pair of coordinates. As an example, a target group position of (3, 2) may indicate that the target group position is located at 3 units to the right of the lower-left corner of the image and 2 units above the lower-left corner of the image.

A target group position in a particular image may be determined based on various rules. As an example, a rule may specify that a center of a group of target objects shown in an image is deemed the target group position in the image. For example, a particular image may include two target objects of the same size. One target object may be centered at the position (2, 4). The other target object may be centered at the position (4, 4). Then a center of the two target objects may be at (3, 4). Hence, the position (3, 4) may be deemed the target group position in the particular image. As another example, a rule may specify that an upper-right point of a group of target objects shown in an image is deemed the target group position in the image. As another example, a rule may specify that a center of an upper-right point of each target object within the group is deemed the target group position in the image. For example, a particular image may include two target objects. An upper-right point of a first target object is at the position (2, 5). An upper-right point of a second target object is at the position (4, 5). Then a center of the two upper-right points is at (3, 5). Hence, the position (3, 5) may be deemed the target group position in the particular image.

One or more embodiments include determining a movement vector from the center of the captured image to the target group position in the captured image (Operation 810). A movement vector is drawn from the center of the captured image to the target group position in the captured image. The movement vector may be expressed as a magnitude and a direction. Additionally or alternatively, the movement vector may be expressed as a number of units in an x-axis and a number of units in a y-axis.

One or more embodiments include moving the field of view of the microscope, with respect to the specimen, according to the movement vector (Operation 812). Examples of operations for moving a field of view of a microscope according to a movement vector are described above with reference to Operation 210.

One or more embodiments include obtaining another captured image of the first section surface of the specimen, centering on the target objects (Operation 814). Examples of operations for obtaining another captured image of a particular section surface after moving the field of view of the microscope to center on the group of target objects in the particular section surface are described above with reference to Operation 212.

In an embodiment, Operation 814 is not performed. Even though the captured image of the first section surface, obtained at Operation 802, is not necessarily centered on the target objects, the captured image obtained at Operation 802 is accepted as the image of the first section surface for the 3D rendering of the specimen.

One or more embodiments include setting a second section surface as the current section surface in preparation for obtaining a next captured image (Operation 816). Examples of operations for preparing a next section surface for observation under the microscope are described above with reference to Operation 214.

One or more embodiments include obtaining a captured image of the current section surface of the specimen (Operation 818). Examples of operations for obtaining a captured image of a current section surface of a specimen are described above with reference to Operation 216.

One or more embodiments include generating a segmented image based on the captured image (Operation 820). Examples of operations for generating a segmented image based on a captured image are described above with reference to Operation 218.

One or more embodiments include identifying subgroups of objects of interest shown in the segmented image (Operation 822). Each separate segment in the segmented image that is labeled as showing an object of interest is determined as a separate object of interest. The object tracking image acquisition system identifies subgroups of objects of interest shown in the segmented image. Each subgroup includes a number of objects of interest equal to the number of target objects.

As an example, a group of target objects identified by a user may include three objects. A segmented image may show five segments that are labeled as showing an object of interest. Each of the five segments is determined as a separate object of interest, including *Object A, Object B, Object C*, *Object D,* and *Object E*. An object tracking image acquisition system may identify subgroups of the objects of interest, each subgroup including three objects of interest. For example, a subgroup may include *Object A, Object B, Object C.* Another subgroup may include *Object B, Object C*, *Object D.* Another subgroup may include *Object A, Object D, Object E.*

One or more embodiments include identifying sets of connecting vectors corresponding respectively to the subgroups of objects of interest in the segmented image (Operation 824). For each subgroup identified at Operation 822, the object tracking image acquisition system draw vectors connecting the objects within the subgroup. Examples of operations for identifying a set of connecting vectors that connect a particular group of objects are described above with reference to Operation 806. The number of vectors drawn for each subgroup of objects of interest, at Operation 824, is the same as the number of vectors drawn for the group of target objects, at Operation 806. One or more set of connecting vectors may be drawn for each subgroup of objects of interest.

As an example, a group of target objects identified by a user may include three target objects. An object tracking image acquisition system may draw a set of two connecting vectors that connect the three target objects.

A segmented image may show five segments that are labeled as showing an object of interest. Each of the five segments is determined as a separate object of interest, including *Object A, Object B, Object C, Object D,* and *Object E. Position A* (2, 2) may correspond to *Object A. Position B* (4, 2) may correspond to *Object B. Position C* (2, 5) may correspond to *Object C. Position D* (5, 5) may correspond to *Object D. Position E* (5, 4) may correspond to *Object E.*

The object tracking image acquisition system may identify subgroups of the objects of interest, each subgroup including three objects of interest. For example, a first subgroup may include *Object A, Object B, Object C*. A second subgroup may include *Object B, Object C, Object D*. A third subgroup may include *Object A, Object D, Object E.*

The object tracking image acquisition system may identify a set of connecting vectors for the first subgroup, *Object A, Object B, Object C*. The connecting vectors include: (a) a vector from *Position A* (2, 2) to *Position B* (4, 2); and (b) a vector from *Position A* (2, 2) to *Position C* (2, 5).

The object tracking image acquisition system may identify another set of connecting vectors for the first subgroup, *Object A, Object B, Object C*. The connecting vectors include: (a) a vector from *Position A* (2, 2) to *Position B* (4, 2); and (b) a vector from *Position B* (4, 2) to *Position C* (2, 5).

The object tracking image acquisition system may identify a set of connecting vectors for the second subgroup, *Object B, Object C, Object D.*. The connecting vectors include: (a) a vector from *Position B* (4, 2) to *Position C* (2, 5); and (b) a vector from *Position D* (5, 5) to *Position C* (2, 5).

The object tracking image acquisition system may identify a set of connecting vectors for the third subgroup, *Object A, Object D, Object E.* The connecting vectors include: (a) a vector from *Position D* (5, 5) to *Position A* (2, 2); and (b) a vector from *Position D* (5, 5) to *Position E* (5, 4).

One or more embodiments include determining a particular set of connecting vectors, of the sets of connecting vectors, that is associated with a least difference from the set of connecting vectors that connect the target objects in the captured image of the previous section surface (Operation 826). The object tracking image acquisition system compares each set of connecting vectors, identified at Operation 824, with the set of connecting vectors that connect the target objects in the captured image of the previous section surface. For each set of connecting vectors identified at Operation 824, the object tracking image acquisition system determines a difference value between (a) the set of connecting vectors connecting the target objects in the captured image of the previous section surface and (b) the set of connecting vectors identified at Operation 824. Iterating the computation for each set of connecting vectors identified at Operation 824, the object tracking image acquisition system hence determines a set of difference values. The object tracking image acquisition system identifies the smallest difference value of the set of difference values. The object tracking image acquisition system identifies a particular set of connecting vectors that connect a particular subgroup of objects of interest, shown in the segmented image, as being associated with a least difference from the set of connecting vectors that connect the target objects in the captured image of the previous section surface.

In an embodiment, a difference value between a first set of connecting vectors and a second set of connecting vectors is determined first by identifying pairs of vectors for comparison with each other. Each pair of vectors includes (a) a vector from the first set of connecting vectors and (b) a vector from the second set of connecting vectors. Each vector within the first set of connecting vectors and the second set of connecting vectors is included in a single pair of vectors. The sum of the absolute values of the differences between each pair of vectors constitutes the difference value between the first set of connecting vectors and the second set of connecting vectors.

As an example, a set of connecting vectors that connect a group of target objects shown in a captured image of a previous section surface include *Vector A* (1, 1) and *Vector B* (4, 3). A set of connecting vectors that connect a first subgroup of objects of interests shown in a segmented image a current section surface include *Vector C* (1, 2) and *Vector D* (3, 3). A set of connecting vectors that connect a second subgroup of objects of interests shown in a segmented image a current section surface include *Vector E* (2, 2) and *Vector F* (3, 3).

First, a difference value between (a) connecting vectors for the target objects and (b) connecting vectors for the first subgroup of objects of interests is determined. The pairs of vectors used for computing the difference value are:

> A first pair of vectors: *Vector A* (1, 1) and *Vector C* (1, 2); and
> A second pair of vectors: *Vector B* (4, 3) and *Vector D* (3, 3).

For the first pair of vectors, a difference between *Vector A* (1, 1) and *Vector C* (1, 2) is computed as (0, -1). An absolute value of (0, -1) is 1.

For the second pair of vectors includes, a difference between *Vector B* (4, 3) and *Vector D* (3, 3) is computed as (1, 0). An absolute value of (1, 0) is 1.

A sum of the absolute values of the differences between each pair of vectors is computed as 1 + 1 = 2. Therefore, the difference value between (a) connecting vectors for the target objects and (b) connecting vectors for the first subgroup of objects of interests is 2.

Second, a difference value between (a) connecting vectors for the target objects and (b) connecting vectors for the second subgroup of objects of interests is determined. The pairs of vectors used for computing the difference value are:

> A first pair of vectors: *Vector A* (1, 1) and *Vector E* (2, 2); and
> A second pair of vectors: *Vector B* (4, 3) and *Vector F* (3, 3).

For the first pair of vectors, a difference between *Vector A* (1, 1) and *Vector E* (2, 2) is computed as (-1, -1). An absolute value of (-1, -1) is 1.41.

For the second pair of vectors includes, a difference between *Vector B* (4, 3) and *Vector F* (3, 3) is computed as (1, 0). An absolute value of (1, 0) is 1.

A sum of the absolute values of the differences between each pair of vectors is computed as 1.41 + 1 = 2.41. Therefore, the difference value between (a) connecting vectors for the target objects and (b) connecting vectors for the second subgroup of objects of interests is 2.41.

Comparing the difference values, the difference value of 2 is smaller than the difference value of 2.41. Therefore, the set of connecting vectors, for the first subgroup of objects of interest, is associated with a least difference from the set of connecting vectors for the target objects in the captured image of the previous section surface.

One or more embodiments include determining a particular subgroup of objects of interest corresponding to the particular set of connecting vectors, identified at Operation 826, as the group of target objects (Operation 828). As described above, the object tracking image acquisition system identifies a particular set of connecting vectors that is associated with a least difference from the set of connecting vectors that connect the target objects in the captured image of the previous section surface at Operation 826. The object tracking image acquisition system identifies a particular subgroup of objects of interest corresponding to the particular set of connecting vectors. The particular subgroup of objects of interest is identified as the group of target objects.

One or more embodiments include identifying a target group position in the segmented image of the current section surface (Operation 830). As described above at Operation 828, a particular subgroup of objects of interest shown in the segmented image, of the current section surface, is identified as the group of target objects. A position in the segmented image of the current section surface corresponding to the group of target objects is identified. Examples of operations for identifying a target group position in a particular image are described above with reference to Operation 808.

One or more embodiments include determining a movement vector from the target group position in the captured image of the previous section surface to the target group position in the segmented image of the current section surface (Operation 832). Examples of operations for determining a movement vector from one position in an image to another position in an image are described above with reference to Operation 208.

One or more embodiments include moving the field of view of the microscope according to the movement vector (Operation 834). Examples of operations for moving a field of view of a microscope according to a movement vector are described above with reference to Operation 210.

One or more embodiments include obtaining another captured image of the current section surface of the specimen (Operation 836). Examples of operations for obtaining another captured image of a particular section surface after moving the field of view of the microscope to center on the group of target objects in the particular section surface are described above with reference to Operation 212.

In an embodiment, Operation 836 is not performed. Even though the captured image of the current section surface, obtained at Operation 818, is not necessarily centered on the target objects, the captured image obtained at Operation 818 is accepted as the image of the current section surface for the 3D rendering of the specimen.

One or more embodiments include determining whether there are any additional section surfaces to be observed (Operation 838). Examples of operations for determining whether there are any additional section surfaces to be observed are described above with reference to Operation 230.

If there is an additional section surface to be observed, one or more embodiments include setting the next section surface as the current section surface in preparation for obtaining a next captured image (Operation 840). Examples of operations for preparing a next section surface for observation under the microscope are described above with reference to Operation 214.

Operations 818-836 are iterated with respect to the current section surface. Hence, the object tracking image acquisition system traverses through each section surface of the specimen. The object tracking image acquisition system moves the field of view of the microscope after obtaining a captured image of a particular section surface in preparation for obtaining a captured image of a next section surface. The object tracking image acquisition system thus tracks the group of target objects through multiple section surfaces of a specimen.

After all section surfaces are observed, one or more embodiments include compiling a 3D rendering of the specimen that tracks the target objects (Operation 842).

In an embodiment, Operations 814 and 836 are performed. The captured images at Operations 814 and 836 are compiled to generate a 3D rendering of the specimen. However, the captured images at Operations 802 and 818 are not compiled when generating the 3D rendering of the specimen.

In an embodiment, Operations 814 and 836 are not performed. Therefore, the captured images at Operations 802 and 818 are compiled to generate a 3D rendering of the specimen.

Examples of operations for compiling a 3D rendering of the specimen that tracks the target objects are described above with reference to Operation 234.

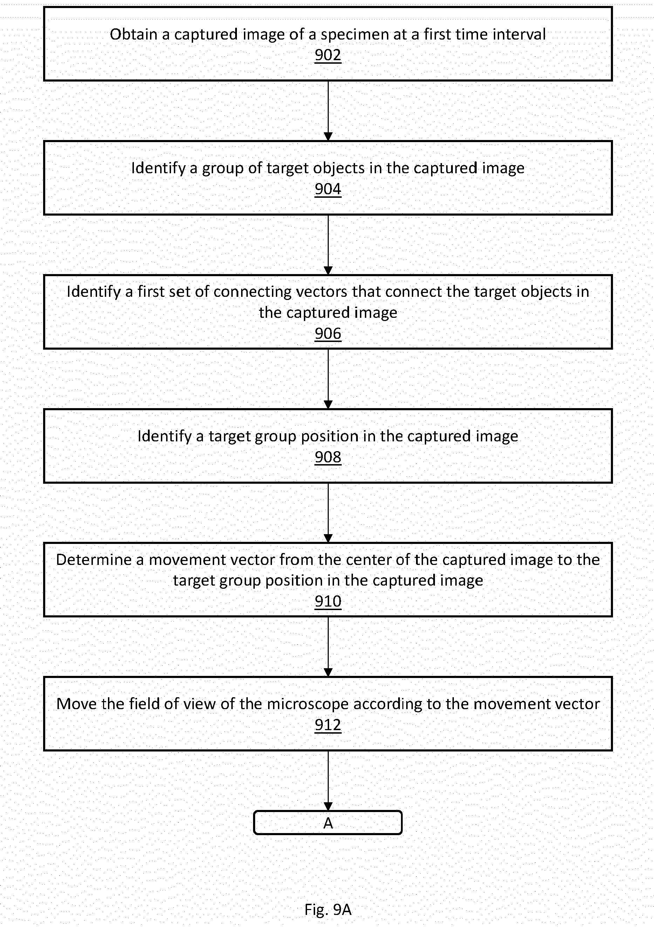

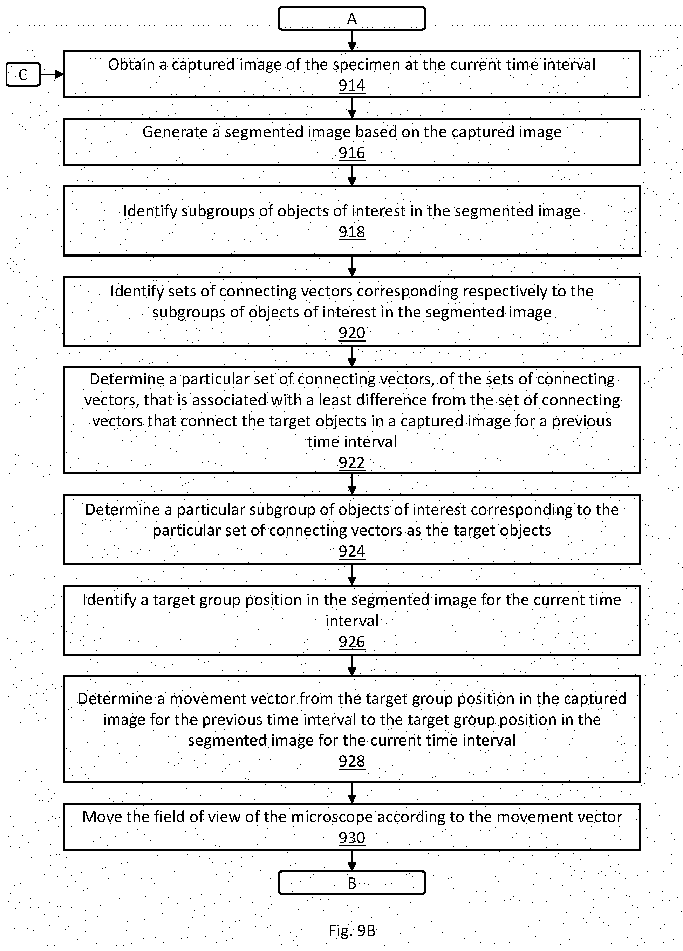

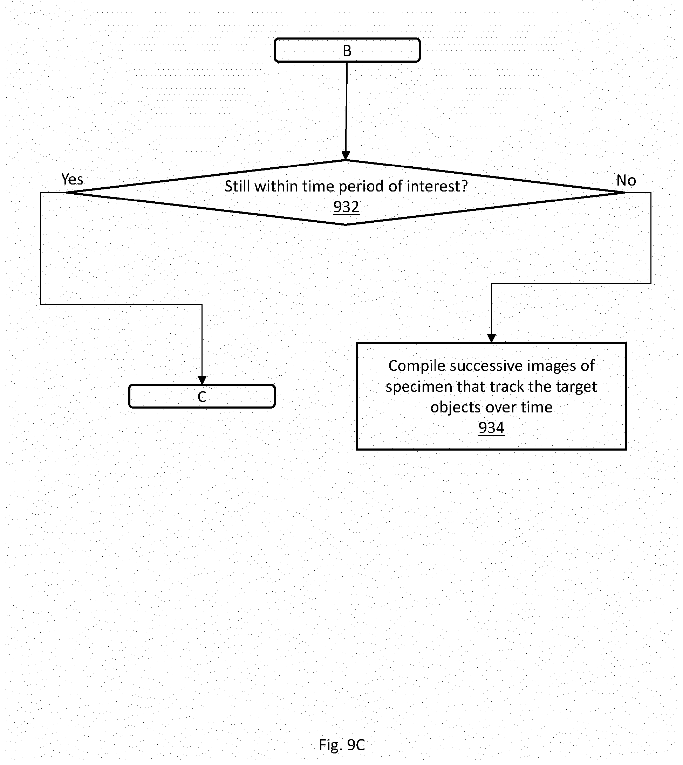

Figures 9A-9C illustrate an example set of operations for obtaining successive specimen images that track a plurality of target objects, in accordance with one or more embodiments. One or more operations illustrated in Figures 9A-9C may be modified, rearranged, or omitted all together. Accordingly, the particular sequence of operations illustrated in Figures 9A-9C should not be construed as limiting the scope of one or more embodiments.

One or more embodiments include obtaining a captured image of a specimen at a first time interval (Operation 902). Examples of operations for obtaining a captured image of a specimen at a first time interval are described above with reference to Operation 302.

One or more embodiments include identifying a group of target objects in the captured image (Operation 904). Examples of operations for identifying a target object in a captured image are described above with reference to Operation 204.

One or more embodiments include identifying a first set of connecting vectors that connect the target objects in the captured image (Operation 906). Examples of operations for identifying a set of connecting vectors that connect a particular group of objects are described above with reference to Operation 806.

One or more embodiments include identifying a target object position in the captured image (Operation 908). Examples of operations for identifying a target group position in a particular image are described above with reference to Operation 808.

One or more embodiments include determining a movement vector from the center of the captured image to the target object position in the captured image (Operation 910). Examples of operations for determining a movement vector from one position in an image to another position in an image are described about with reference to Operation 208.

One or more embodiments include moving the field of view of the microscope, with respect to the specimen, according to the movement vector (Operation 912). Examples of operations for moving a field of view of a microscope according to a movement vector are described above with reference to Operation 210. The field of view is moved in real time. As the field of view is moved, the specimen continues to change over time. It is not possible to obtain another captured image of the specimen at the first time interval, as the first time interval has already passed, and the specimen has already changed in appearance.

One or more embodiments include obtaining a captured image of the specimen at the current time interval (Operation 914). Examples of operations for obtaining a captured image of the specimen at a current time interval are described above with reference to Operation 312.

One or more embodiments include generating a segmented image based on the captured image (Operation 916). Examples of operations for generating a segmented image based on a captured image are described above with reference to Operation 218.

One or more embodiments include identifying subgroups of objects of interest shown in the segmented image (Operation 918). Examples of operations for identifying subgroups of objects of interest shown in the segmented image are described above with reference to Operation 822.

One or more embodiments include identifying sets of connecting vectors corresponding respectively to the subgroups of objects of interest in the segmented image (Operation 920). Examples of operations for identifying sets of connecting vectors corresponding respectively to the subgroups of objects of interest in the segmented image are described above with reference to Operation 824.

One or more embodiments include determining a particular set of connecting vectors, of the sets of connecting vectors, that is associated with a least difference from the set of connecting vectors that connect the target objects in a captured image for a previous time interval (Operation 922). Examples of operations for determining a particular set of connecting vectors that is associated with a least difference from the set of connecting vectors that connect the target objects in a previous captured image are described above with reference to Operation 826.

In an embodiment, the captured image for the immediately preceding time interval is used. A particular set of connecting vectors that is associated with a least difference from the set of connecting vectors that connect the target objects in the captured image for the immediately preceding time interval is determined. In another embodiment, the captured image for a previous time interval that is earlier than the immediately preceding time interval is used. This may be necessary due to insufficient processing speed. As an example, images may be captured every 0.1 seconds, but processing time may require 1 second. In this case, a captured image for 10 time intervals prior to the current time interval may be used.

One or more embodiments include determining a particular subgroup of objects of interest corresponding to the particular set of connecting vectors as the target objects (Operation 924). Examples of operations for determining a particular subgroup of objects of interest corresponding to the particular set of connecting vectors as the target objects are described above with reference to Operation 828.

One or more embodiments include identifying a target group position in the segmented image for the current time interval (Operation 926). Examples of operations for identifying a target group position in a particular image are described above with reference to Operation 830.

One or more embodiments include determining a movement vector from the target group position in the captured image for the previous time interval to the target group position in the segmented image for the current time interval (Operation 928). Examples of operations for determining a movement vector from one position in an image to another position in an image are described above with reference to Operation 208.

One or more embodiments include moving the field of view of the microscope according to the movement vector (Operation 930). Examples of operations for moving a field of view of a microscope according to a movement vector are described above with reference to Operation 210.

One or more embodiments include determining whether the current time is still within a time period of interest (Operation 932). Examples of operations for determining whether the current time is still within a time period of interest are described above with reference to Operation 324.

If the time period of interest has not passed, Operations 914-930 are iterated with respect to each time interval. Hence, the object tracking image acquisition system obtains captured specimen images through the time period of interest. The object tracking image acquisition system moves the field of view of the microscope after obtaining a captured image at each time interval in preparation for obtaining a captured image at a next time interval. The object tracking image acquisition system thus tracks the target object through the time intervals within the time period of interest.

After the time period of interest has passed, one or more embodiments include compiling successive specimen images that track the target objects over time (Operation 934). The captured images at Operations 902 and 914 are compiled as a set of successive specimen images that track the target object.

Examples of operations for compiling successive specimen images that track the target objects over time are described above with reference to Operation 326.

6. EXAMPLE EMBODIMENTS

Detailed examples are described below for purposes of clarity. Components and/or operations described below should be understood as specific examples which may not be applicable to certain embodiments. Accordingly, components and/or operations described below should not be construed as limiting the scope of any of the claims.

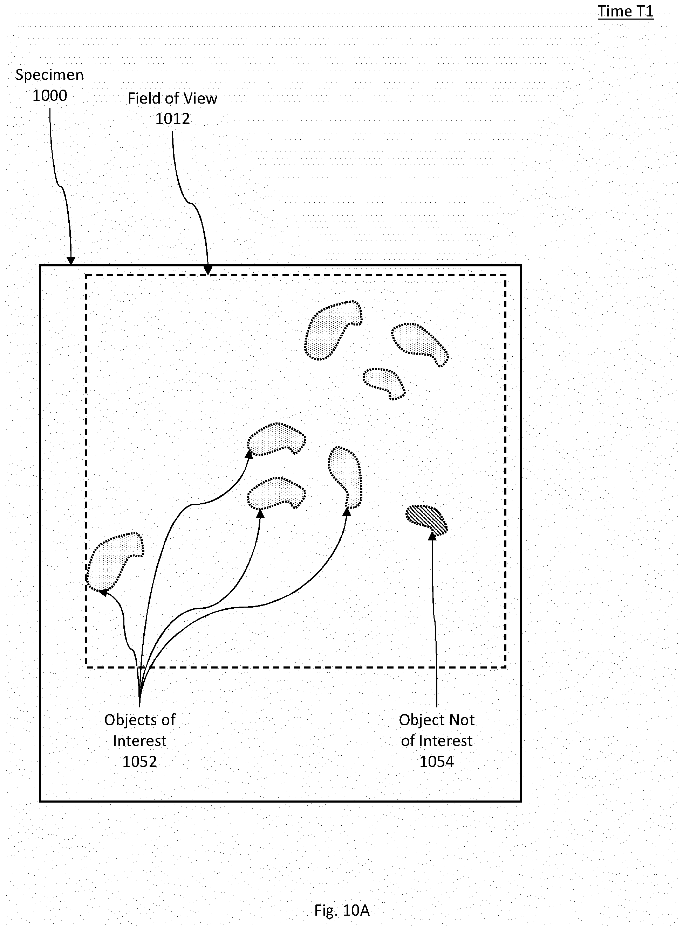

Figures 10A-10N illustrate an example for obtaining successive specimen images that track a plurality of target objects, in accordance with one or more embodiments.

Figure 10A shows specimen 1000 at time T1. Several objects appear on a surface of specimen 1000, including objects of interest 1052 and object not of interest 1054. A first set of values for the positioning parameters of a microscope results in field of view 1012 with respect to specimen 1000. Hence, the region of specimen 1000 within field of view 1012 is observable by the microscope; the region outside of field of view 1012 is not observable by the microscope.

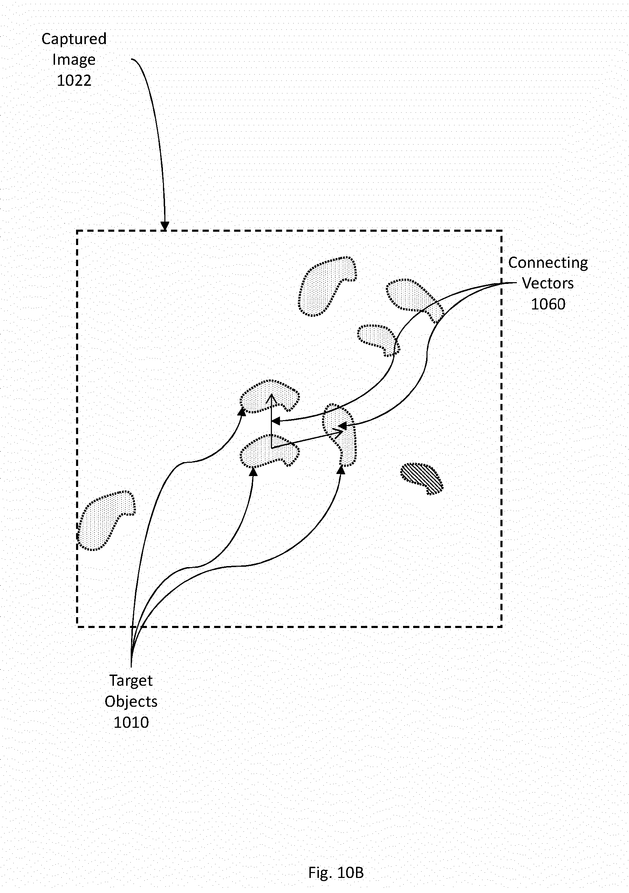

Figure 10B shows captured image 1022 of specimen 1000 at time T1. Captured image 1022 shows the region of specimen 1000 that is within field of view 1012. Captured image 1022 shows both objects of interest 1052 and object not of interest 1054.

A user views captured image 1022. The user enters in user input identifying a group of three target objects 1010. An object tracking image acquisition system identifies a set of connecting vectors 1060 that connect target objects 1010.

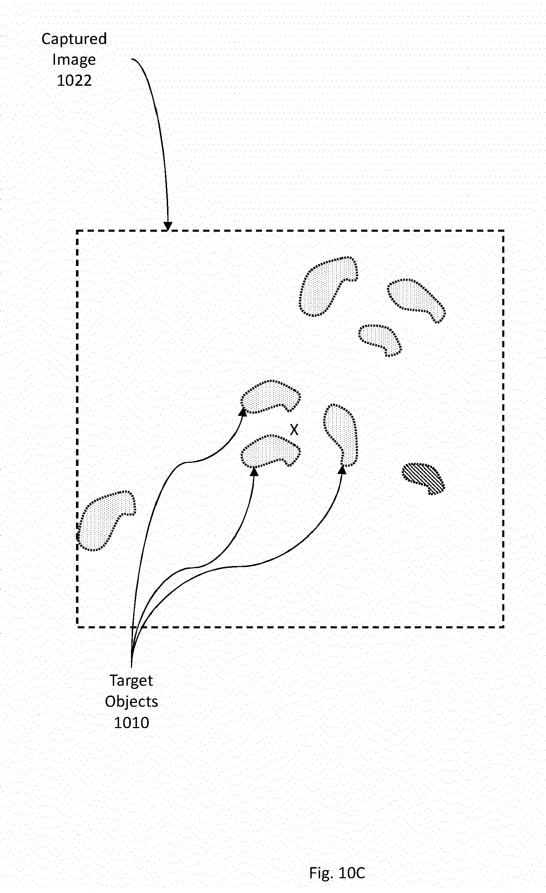

Figure 10C again shows captured image 1022 of specimen 1000 at time T1. The object tracking image acquisition system also determines that a center of target objects 1010 is at *Position X. Position X* may be associated with the coordinates (5, 5). *Position X* is deemed a target group position in the captured image 1022.

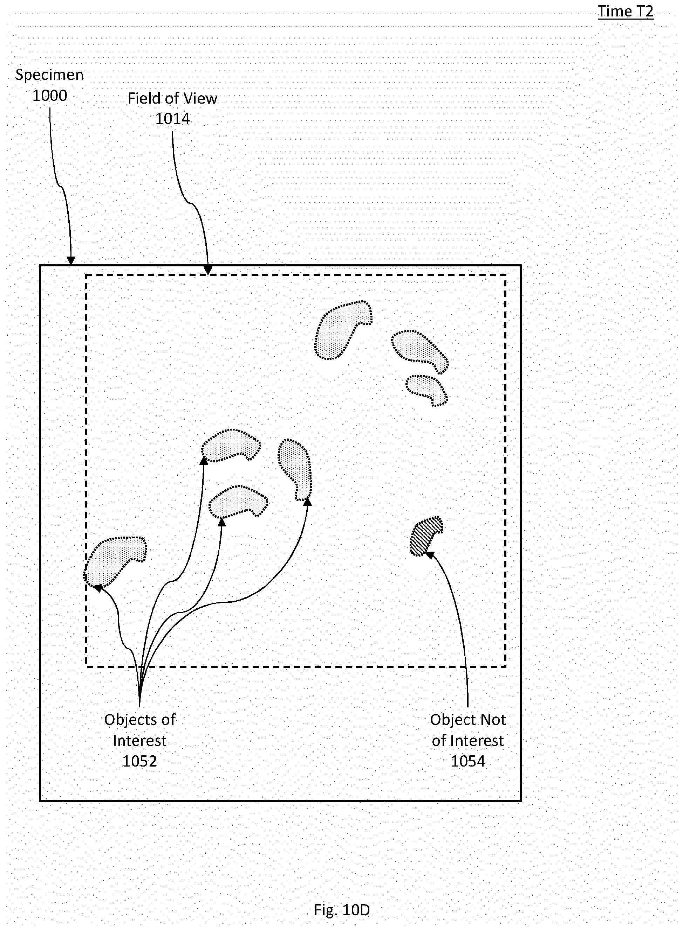

A time interval has passed, and it is currently time T2. Figure 10D shows specimen 1000 at time T2. Objects of interest 1052 and object not of interest 1054 that appeared on specimen at time T1 also appear on specimen at time T2. However, the objects may appear in a different shape and/or different position. The first set of values for the positioning parameters is still being used for configuring the microscope. The first set of values for the positioning parameters results in field of view 1014 with respect to specimen 1000. Hence, the region of specimen 1000 within field of view 1014 is observable by the microscope; the region outside of field of view 1014 is not observable by the microscope.

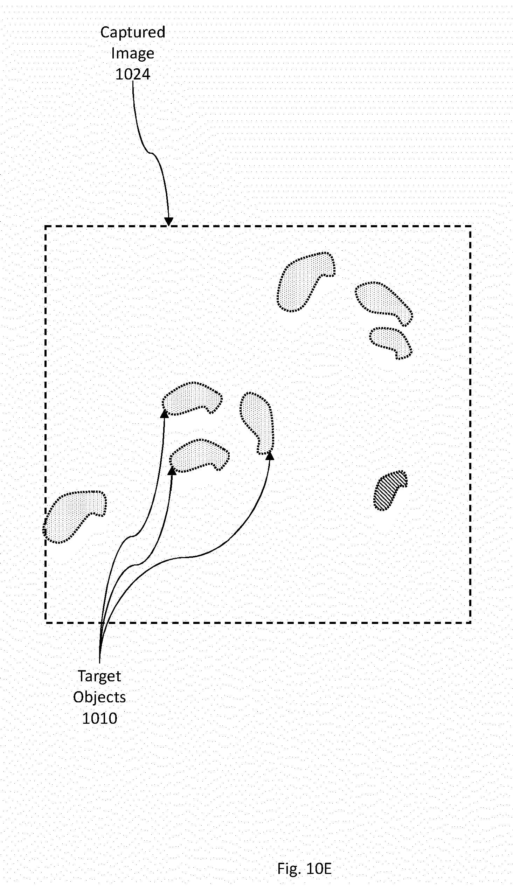

Figure 10E shows captured image 1024 of specimen 1000 at time T2. The captured image 1024 shows the region of specimen 1000 that is within field of view 1014. Captured image 1024 shows both objects of interest 1052 and object not of interest 1054. Note that the group of target objects 1010 is not necessarily at the center of captured image 1024.

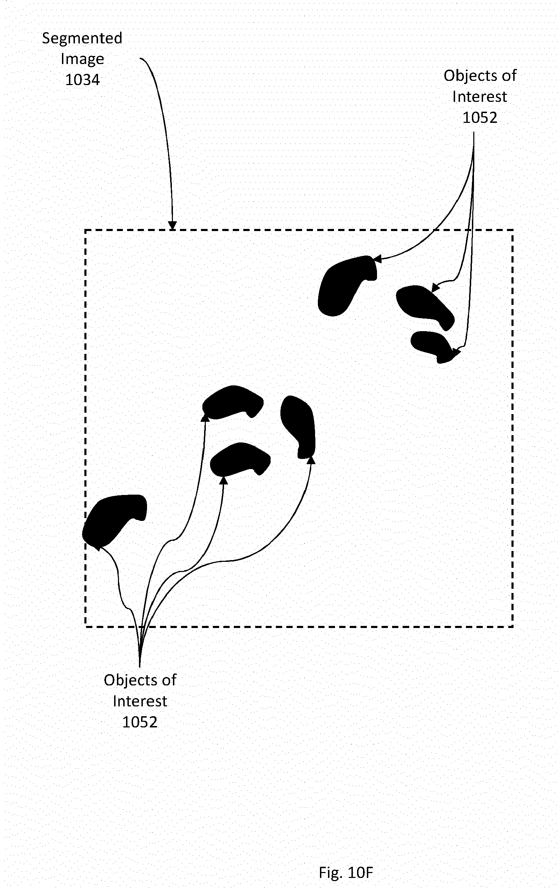

Figure 10F shows segmented image 1034 generated based on captured image 1024 of specimen 1000 at time T2. Segmented image 1034 indicates particular segments showing objects of interest 1052. Segmented image 734 indicates that any area outside of the particular segments do not show any objects of interest.

The object tracking image acquisition system identifies subgroups of the objects of interest 1052, wherein each subgroup has the same number of objects of interest as the number of target objects 1010 (which is three). The object tracking image acquisition system draws connecting vectors for each subgroup of objects of interest 1010.

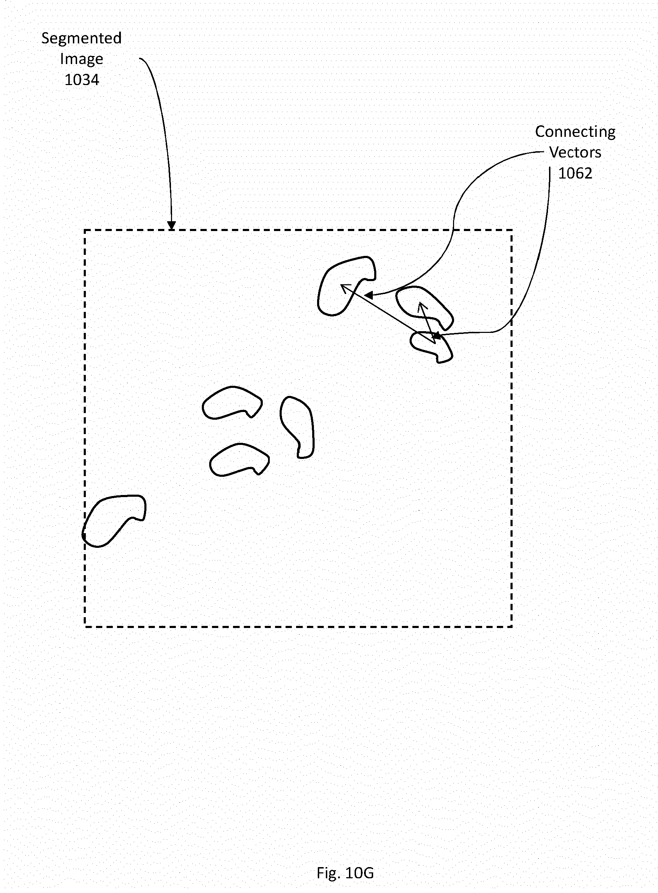

Figure 10G again shows segmented image 1034 generated based on captured image 1024 of specimen 1000 at time T2. Connecting vectors 1062 are drawn for a first subgroup of objects of interest 1010.

The object tracking image acquisition system determines a difference value between connecting vectors 1060 and connecting vectors 1062. The difference value may be, for example, 8.54.

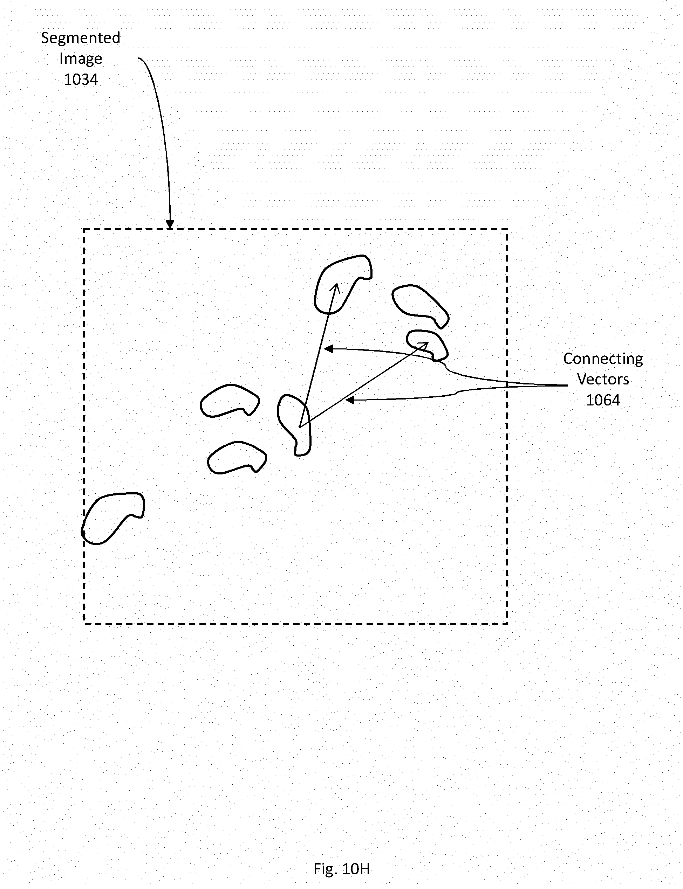

Figure 10H again shows segmented image 1034 generated based on captured image 1024 of specimen 1000 at time T2. Connecting vectors 1064 are drawn for a second subgroup of objects of interest 1010.

The object tracking image acquisition system determines a difference value between connecting vectors 1060 and connecting vectors 1064. The difference value may be, for example, 2.43.

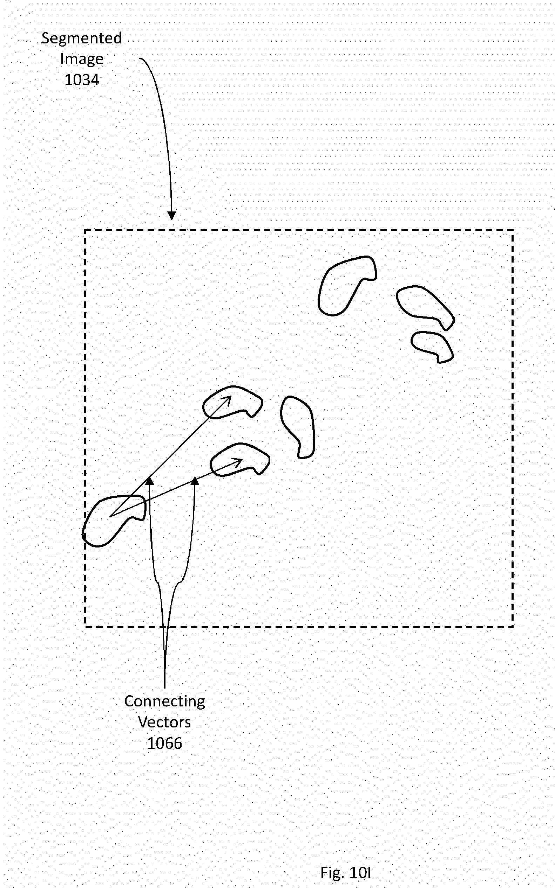

Figure 10I again shows segmented image 1034 generated based on captured image 1024 of specimen 1000 at time T2. Connecting vectors 1066 are drawn for a third subgroup of objects of interest 1010.

The object tracking image acquisition system determines a difference value between connecting vectors 1060 and connecting vectors 1064. The difference value may be, for example, 3.89.

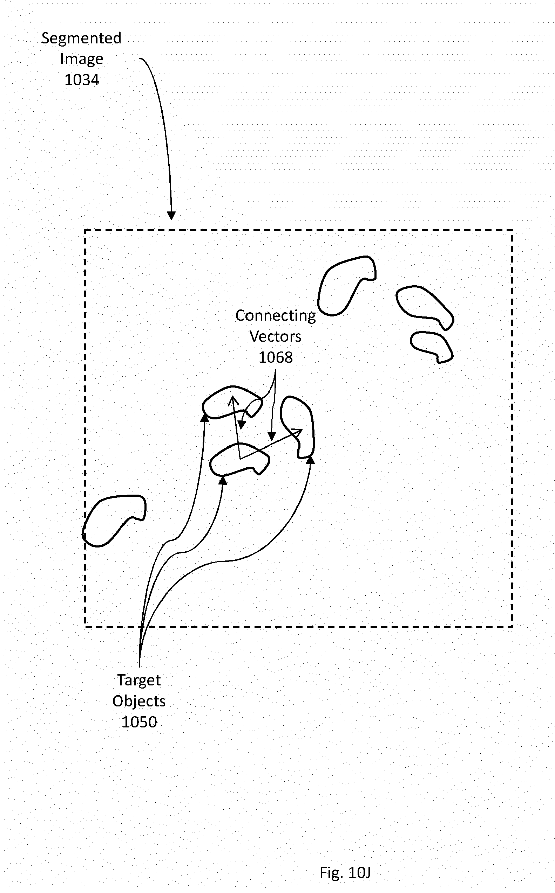

Figure 10J again shows segmented image 1034 generated based on captured image 1024 of specimen 1000 at time T2. Connecting vectors 1068 are drawn for a fourth subgroup of objects of interest 1010.

The object tracking image acquisition system determines a difference value between connecting vectors 1060 and connecting vectors 1068. The difference value may be, for example, 1.72.

Comparing the difference values, the difference value of 1.72 corresponding to connecting vectors 1068 is the smallest. Hence, the subgroup of objects of interest corresponding to connecting vectors 1068 is identified as the group of target objects 1050.

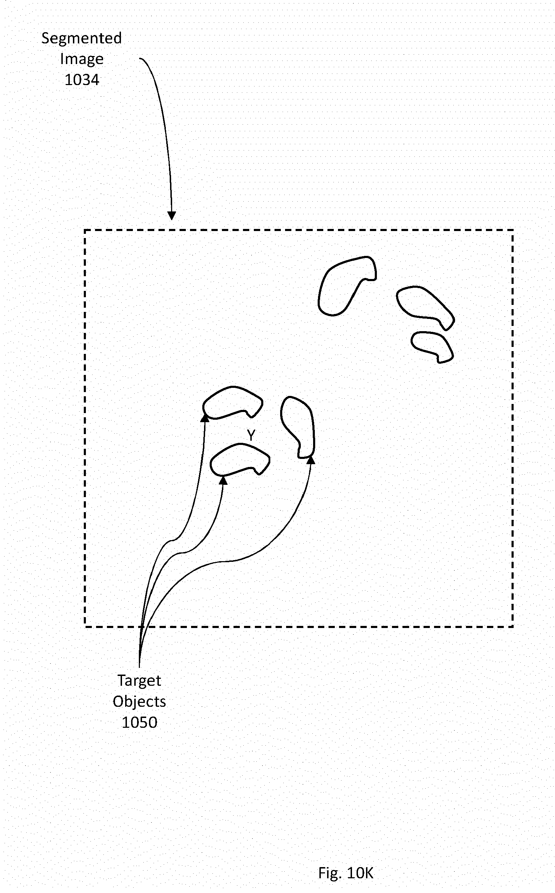

Figure 10K again shows segmented image 1034 generated based on captured image 1024 of specimen 1000 at time T2. The object tracking image acquisition system determines that a center of the target objects 1050 is at *Position Y*. *Position Y* may be associated with the coordinates (4, 4.5). *Position Y* is deemed a target group position in the segmented image 1034.

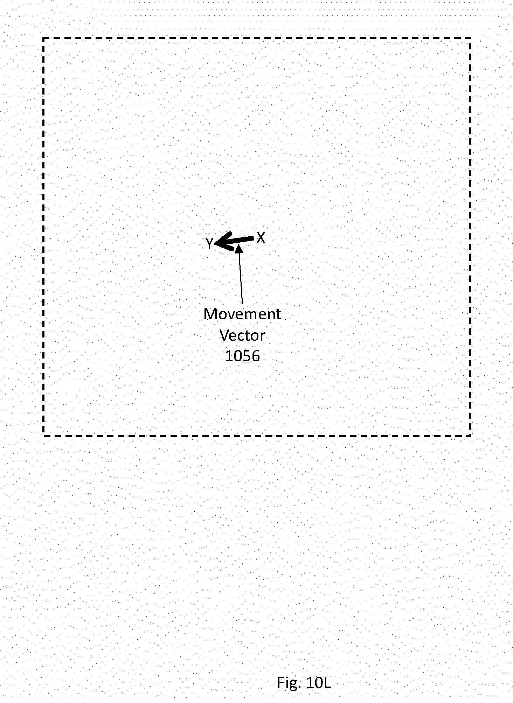

Figure 10L shows a movement vector 1056 from the target group position in captured image 1022 (*Position X*) to the target group position in segmented image 1034 (*Position Y*). The movement vector may be expressed as (-1, 0.5). The movement vector is -1 unit long in the x-direction and 1 unit long in the y-direction.

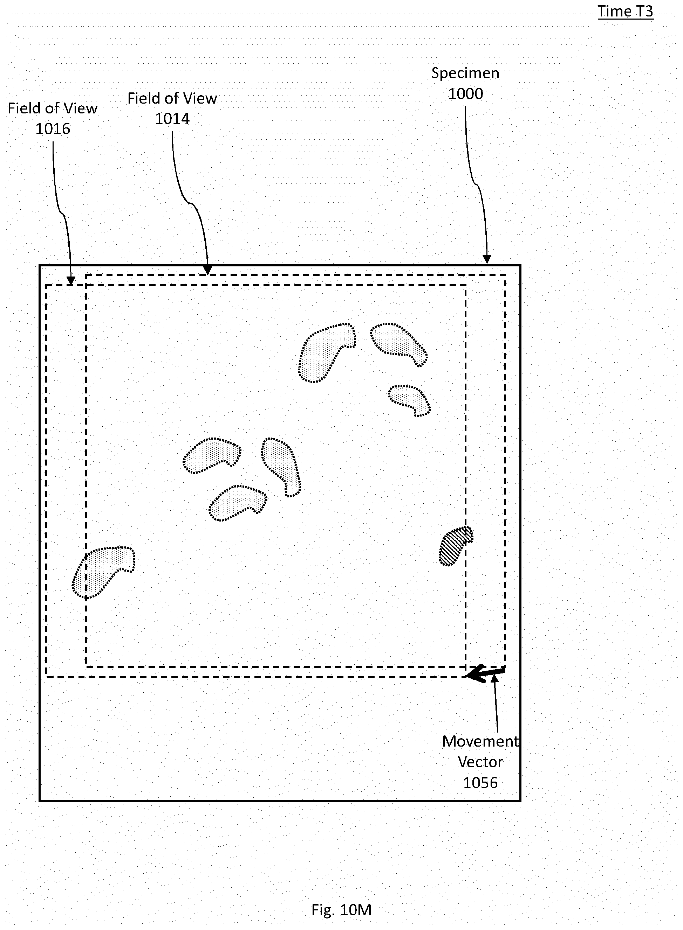

A time interval has passed, and it is currently time T3. The process is iterated for specimen 1000 at time T3. Figure 10M shows specimen 1000 at time T3. Objects of interest 1052 and object not of interest 1054 that appear on specimen 700 at times T1 and T2 also appear on specimen 700 at time T3. However, the objects may appear in a different shape and/or different position.

A second set of values for the positioning parameters is configured for the microscope. The second set of values for the positioning parameters moves the field of view according to the movement vector 1056. In particular, the distance between the previously-used field of view 1014 and the current field of view 1016 is equal to the movement vector 1056. Hence, the region of specimen 1000 within field of view 1016 is observable by the microscope; the region outside of field of view 1016 is not observable by the microscope.

The field of view of the microscope is moved in real time. As the field of view of the microscope is moving, specimen 1000 continues to change. Hence, from time T2 to time T3, target objects 1050 have changed in shape and/or position. Therefore, even though the field of view has been updated according to movement vector 1056, target objects 1050 are not necessarily at the center of the current field of view 1016.

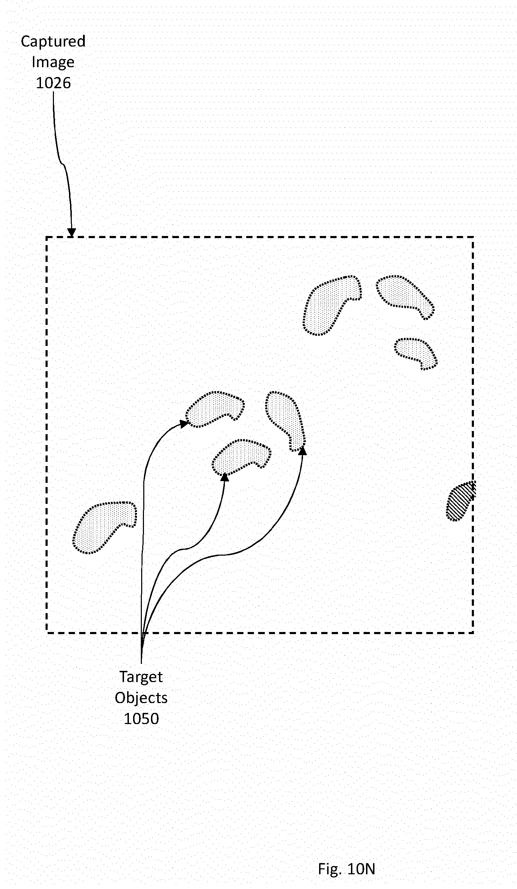

Figure 10N shows captured image 1026 of specimen 1000 at time T3. The captured image 1026 shows the region of specimen 1000 that is within field of view 1016. Captured image 1026 shows both objects of interest 1052 and object not of interest 1054. Note that target objects 1050 are not necessarily at the center of captured image 1026.

Hence, the process may continue to be iterated for each time interval within a time period of interest. Each captured image (such as captured images 1022, 1024, 1026) are compiled to generate an animation showing the change of the specimen over time.

## 7. HARDWARE OVERVIEW

According to one embodiment, the techniques described herein are implemented by one or more special-purpose computing devices. The special-purpose computing devices may be hard-wired to perform the techniques, or may include digital electronic devices such as one or more application-specific integrated circuits (ASICs), field programmable gate arrays (FPGAs), or network processing units (NPUs) that are persistently programmed to perform the techniques, or may include one or more general purpose hardware processors programmed to perform the techniques pursuant to program instructions in firmware, memory, other storage, or a combination. Such special-purpose computing devices may also combine custom hard-wired logic, ASICs, FPGAs, or NPUs with custom programming to accomplish the techniques. The special-purpose computing devices may be desktop computer systems, portable computer systems, handheld devices, networking devices or any other device that incorporates hard-wired and/or program logic to implement the techniques.

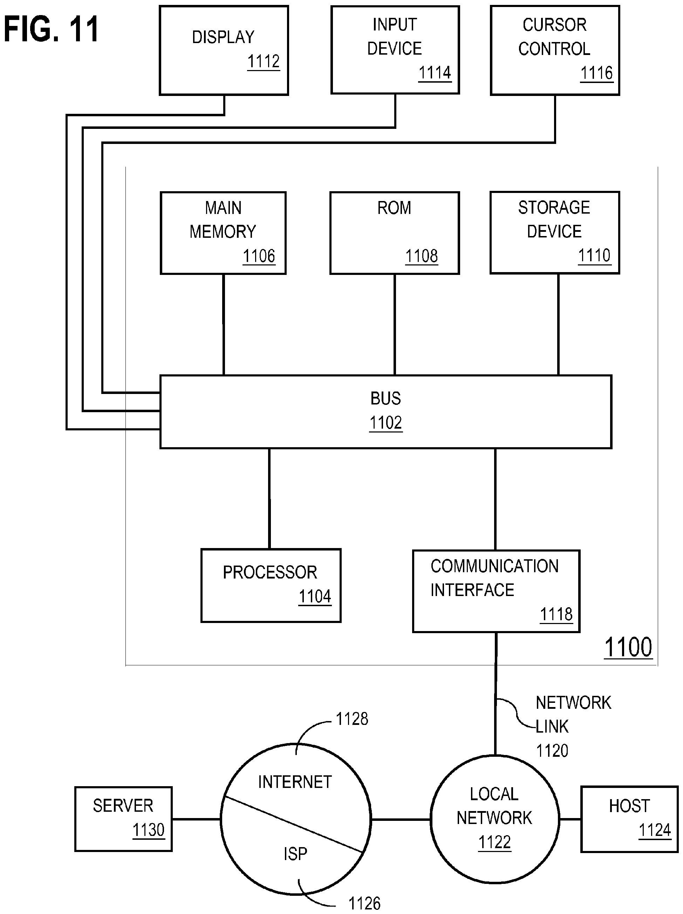

For example, Figure 11 is a block diagram that illustrates a computer system 1100 upon which an embodiment of the invention may be implemented. Computer system 1100 includes a bus 1102 or other communication mechanism for communicating information, and a hardware processor 1104 coupled with bus 1102 for processing information. Hardware processor 1104 may be, for example, a general purpose microprocessor.

Computer system 1100 also includes a main memory 1106, such as a random access memory (RAM) or other dynamic storage device, coupled to bus 1102 for storing information and instructions to be executed by processor 1104. Main memory 1106 also may be used for storing temporary variables or other intermediate information during execution of instructions to be executed by processor 1104. Such instructions, when stored in non-transitory storage media accessible to processor 1104, render computer system 1100 into a special-purpose machine that is customized to perform the operations specified in the instructions.

Computer system 1100 further includes a read only memory (ROM) 1108 or other static storage device coupled to bus 1102 for storing static information and instructions for processor 1104. A storage device 1110, such as a magnetic disk or optical disk, is provided and coupled to bus 1102 for storing information and instructions.

Computer system 1100 may be coupled via bus 1102 to a display 1112, such as a cathode ray tube (CRT), for displaying information to a computer user. An input device 1114, including alphanumeric and other keys, is coupled to bus 1102 for communicating information and command selections to processor 1104. Another type of user input device is cursor control 1116, such as a mouse, a trackball, or cursor direction keys for communicating direction information and command selections to processor 1104 and for controlling cursor movement on display 1112. This input device typically has two degrees of freedom in two axes, a first axis (e.g., x) and a second axis (e.g., y), that allows the device to specify positions in a plane.

Computer system 1100 may implement the techniques described herein using customized hard-wired logic, one or more ASICs or FPGAs, firmware and/or program logic which in combination with the computer system causes or programs computer system 1100 to be a special-purpose machine. According to one embodiment, the techniques herein are performed by computer system 1100 in response to processor 1104 executing one or more sequences of one or more instructions contained in main memory 1106. Such instructions may be read into main memory 1106 from another storage medium, such as storage device 1110. Execution of the sequences of instructions contained in main memory 1106 causes processor 1104 to perform the process steps described herein. In alternative embodiments, hard-wired circuitry may be used in place of or in combination with software instructions.

The term "storage media" as used herein refers to any non-transitory media that store data and/or instructions that cause a machine to operate in a specific fashion. Such storage media may comprise non-volatile media and/or volatile media. Non-volatile media includes, for example, optical or magnetic disks, such as storage device 1110. Volatile media includes dynamic memory, such as main memory 1106. Common forms of storage media include, for example, a floppy disk, a flexible disk, hard disk, solid state drive, magnetic tape, or any other magnetic data storage medium, a CD-ROM, any other optical data storage medium, any physical medium with patterns of holes, a RAM, a PROM, and EPROM, a FLASH-EPROM, NVRAM, any other memory chip or cartridge, content-addressable memory (CAM), and ternary content-addressable memory (TCAM).

Storage media is distinct from but may be used in conjunction with transmission media. Transmission media participates in transferring information between storage media. For example, transmission media includes coaxial cables, copper wire and fiber optics, including the wires that comprise bus 1102. Transmission media can also take the form of acoustic or light waves, such as those generated during radio-wave and infra-red data communications.

Various forms of media may be involved in carrying one or more sequences of one or more instructions to processor 1104 for execution. For example, the instructions may initially be carried on a magnetic disk or solid state drive of a remote computer. The remote computer can load the instructions into its dynamic memory and send the instructions over a telephone line using a modem. A modem local to computer system 1100 can receive the data on the telephone line and use an infra-red transmitter to convert the data to an infra-red signal. An infra-red detector can receive the data carried in the infra-red signal and appropriate circuitry can place the data on bus 1102. Bus 1102 carries the data to main memory 1106, from which processor 1104 retrieves and executes the instructions. The instructions received by main memory 1106 may optionally be stored on storage device 1110 either before or after execution by processor 1104.

Computer system 1100 also includes a communication interface 1118 coupled to bus 1102. Communication interface 1118 provides a two-way data communication coupling to a network link 1120 that is connected to a local network 1122. For example, communication interface 1118 may be an integrated services digital network (ISDN) card, cable modem, satellite modem, or a modem to provide a data communication connection to a corresponding type of telephone line. As another example, communication interface 1118 may be a local area network (LAN) card to provide a data communication connection to a compatible LAN. Wireless links may also be implemented. In any such implementation, communication interface 1118 sends and receives electrical, electromagnetic or optical signals that carry digital data streams representing various types of information.

Network link 1120 typically provides data communication through one or more networks to other data devices. For example, network link 1120 may provide a connection through local network 1122 to a host computer 1124 or to data equipment operated by an Internet Service Provider (ISP) 1126. ISP 1126 in turn provides data communication services through the world wide packet data communication network now commonly referred to as the "Internet" 1128. Local network 1122 and Internet 1128 both use electrical, electromagnetic or optical signals that carry digital data streams. The signals through the various networks and the signals on network link 1120 and through communication interface 1118, which carry the digital data to and from computer system 1100, are example forms of transmission media.

Computer system 1100 can send messages and receive data, including program code, through the network(s), network link 1120 and communication interface 1118. In the Internet example, a server 1130 might transmit a requested code for an application program through Internet 1128, ISP 1126, local network 1122 and communication interface 1118.

The received code may be executed by processor 1104 as it is received, and/or stored in storage device 1110, or other non-volatile storage for later execution.

8. MISCELLANEOUS; EXTENSIONS

Embodiments are directed to a system with one or more devices that include a hardware processor and that are configured to perform any of the operations described herein and/or recited in any of the claims below.

In an embodiment, a non-transitory computer readable storage medium comprises instructions which, when executed by one or more hardware processors, causes performance of any of the operations described herein and/or recited in any of the claims.

Any combination of the features and functionalities described herein may be used in accordance with one or more embodiments. In the foregoing specification, embodiments have been described with reference to numerous specific details that may vary from implementation to implementation. The specification and drawings are, accordingly, to be regarded in an illustrative rather than a restrictive sense. The sole and exclusive indicator of the scope of the invention, and what is intended by the applicants to be the scope of the invention, is the literal and equivalent scope of the set of claims that issue from this application, in the specific form in which such claims issue, including any subsequent correction.

**Claims**

1. A method, comprising:

    obtaining a first image (116) corresponding to a specimen (102), the first image (116) corresponding to the specimen (102) shows a first section surface (402) of the specimen (102);
    identifying a first position in the first image (116) corresponding to a target object (410);
    cutting a thin slice from the block face of the specimen (102);
    obtaining a second image (116b) corresponding to the specimen (102), wherein the second image (116b) is captured by a microscope, the second image (116b) corresponding to the specimen (102) shows a second section surface (403) of the specimen (102);
    **characterized by**
    applying an image segmentation technique to the second image (116b) to obtain a segmented image (534), wherein the segmented image (534) indicates (a) a first set of segments corresponding to objects of interest and (b) a second set of segments not corresponding to any objects of interest;
    determining a particular object of interest, of the objects of interest shown in the segmented image (534), that is associated with a highest similarity score with the target object (410) shown in the first image (116) as the target object (410) shown in the segmented image (534);
    identifying a second position in the segmented image (534) corresponding to the target object (410);
    determining a movement vector from the first position in the first image (116) to the second position in the segmented image (534);
    causing a field of view of the microscope to move, with respect to the specimen (102), according to the movement vector to capture a third image corresponding to the specimen (102);
    wherein the method is performed by at least one device including a hardware processor.

2. The method of Claim 1, further comprising:
    subsequent to moving the field of view of the microscope, with respect to the specimen (102), according to the movement vector: capturing the third image, corresponding to the specimen (102), showing the second section surface (403) of the specimen (102).

3. The method of Claim 1, further comprising:

    obtaining the third image, corresponding to the specimen (102), showing the second section surface (403) of the specimen (102);
    wherein the third image is captured by the microscope after the field of view of the microscope has moved, with respect to the specimen (102), according to the movement vector;
    compiling a set of images that track the target object (410), the set of images including the third image but not the second image.

4. The method of Claim 1, further comprising:
    subsequent to moving the field of view of the microscope, with respect to the specimen (102), according to the movement vector: capturing the third image, corresponding to the specimen (102), showing a third section surface (404) of the specimen (102).

5. The method of Claim 1, further comprising:

    obtaining the third image, corresponding to the specimen (102), showing a third section surface of the specimen (102);
    wherein the third image is captured by the microscope after the field of view of the microscope has moved, with respect to the specimen (102), according to the movement vector;
    compiling a set of images that track the target object (410), the set of images including the second image and the third image.

6. The method of Claim 1, wherein determining the particular object of interest, of the objects of interest shown in the segmented image (534), that is associated with the highest similarity score with the target object (410) shown in the first image (116) as the target object (410) shown in the segmented image (534) comprises:
    determining the particular object of interest is closest to the first position in the first image (116).

7. The method of Claim 1, wherein determining the particular object of interest, of the objects of interest shown in the segmented image (534), that is associated with the highest similarity score with the target object (410) shown in the first image (116) as the target object (410) shown in the segmented image (534) comprises:
    determining a first shape of the particular object of interest is most similar to a second shape of the target object (410) shown in the first image (116).

8. The method of Claim 1, wherein the first image (116) is captured by the microscope.

9.  The method of Claim 1, wherein the first image (116) is a segmented version of another image captured by the microscope.

10. The method of Claim 1, wherein the image segmentation technique comprises using an artificial neural network (ANN).

11. A method, comprising:

    obtaining a first image (116) corresponding to a specimen (102), the first image (116) corresponding to the specimen (102) shows a first section surface (402) of the specimen (102);
    cutting a thin slice from the block face of the specimen (102);
    obtaining a second image (116b) corresponding to the specimen (102), the second image (116b) corresponding to the specimen (102) shows a second section (403) surface of the specimen (102), wherein the second image (116b) is captured by a microscope;
    **characterized by**
    identifying a first set of vectors connecting a plurality of target objects (410) shown in the first image (116);
    identifying a first position in the first image (116) corresponding to the plurality of target objects (410);applying an image segmentation technique to the second image to obtain a segmented image (534), wherein the segmented image (534) indicates (a) a first set of segments corresponding to objects of interest and (b) a second set of segments not corresponding to any objects of interest;
    identifying subgroups of the objects of interest shown in the segmented image (534);
    identifying sets of vectors corresponding respectively to the subgroups of the objects of interest shown in the segmented image (534);
    determining a particular set of vectors, of the sets of vectors, that is associated with a least difference from the first set of vectors;
    determining a particular subgroup of the objects of interest, of the subgroups of the objects of interest, connected by the particular set of vectors as the plurality of target objects (410);
    identifying a second position in the segmented image (534) corresponding to the plurality of target objects (410);
    determining a movement vector from the first position in the first image (116) to the second position in the segmented image (534);
    causing a field of view of the microscope to move, with respect to the specimen (102), according to the movement vector to capture a third image corresponding to the specimen (102);
wherein the method is performed by at least one device including a hardware processor.

12. A non-transitory computer readable medium comprising instructions which, when executed by one or more hardware processors, cause the hardware processors to implement the method of any of Claims 1-11.

13. A system, comprising:

    at least one device including a hardware processor; and
    the system being configured to implement the method of any of Claims 1-11.

**Patentansprüche**

1.  Verfahren, umfassend:

    Erhalten eines ersten Bildes (116), das einer Probe (102) entspricht, wobei das erste Bild (116), das der Probe (102) entspricht, eine erste Schnittfläche (402) der Probe (102) zeigt;
    Identifizieren einer ersten Position im ersten Bild (116), die einem Zielobjekt (410) entspricht;
    Schneiden einer dünnen Scheibe aus der Blockfläche der Probe (102);
    Erhalten eines zweiten Bildes (116b), das der Probe (102) entspricht, wobei das zweite Bild (116b) durch ein Mikroskop aufgenommen wird, wobei das zweite Bild (116b), das der Probe (102) entspricht, eine zweite Schnittfläche (403) der Probe (102) zeigt;
    **gekennzeichnet durch**
    Anwenden einer Bildsegmentierungstechnik auf das zweite Bild (116b), um ein segmentiertes Bild (534) zu erhalten, wobei das segmentierte Bild (534) (a) einen ersten Satz von Segmenten angibt, die Objekten von Interesse entsprechen, und (b) einen zweiten Satz von Segmenten angibt, die keinen Objekten von Interesse entsprechen;
    Bestimmen eines bestimmten Objekts von Interesse unter den Objekten von Interesse, die in dem segmentierten Bild (534) gezeigt sind, dem ein höchster Ähnlichkeitswert mit dem im ersten Bild (116) gezeigten Zielobjekt (410) zugeordnet ist, als das im segmentierten Bild (534) gezeigte Zielobjekt (410);
    Identifizieren einer zweiten Position im segmentierten Bild (534), die dem Zielobjekt (410) entspricht;
    Bestimmen eines Bewegungsvektors von der ersten Position im ersten Bild (116) zur zweiten Position im segmentierten Bild (534);
Bewirken einer Bewegung eines Sichtfelds des Mikroskops in Bezug auf die Probe (102) entsprechend dem Bewegungsvektor, um ein drittes Bild aufzunehmen, das der Probe (102) entspricht;
wobei das Verfahren durch mindestens eine Vorrichtung ausgeführt wird, die einen Hardwareprozessor einschließt.

2. Verfahren nach Anspruch 1, ferner umfassend: nachfolgend dem Bewegen des Sichtfelds des Mikroskops in Bezug auf die Probe (102) entsprechend dem Bewegungsvektor: Aufnehmen des dritten Bildes, das der Probe (102) entspricht und die zweite Schnittfläche (403) der Probe (102) zeigt.

3. Verfahren nach Anspruch 1, ferner umfassend:

   Erhalten des dritten Bildes, das der Probe (102) entspricht und die zweite Schnittfläche (403) der Probe (102) zeigt;
   wobei das dritte Bild durch das Mikroskop aufgenommen wird, nachdem sich das Sichtfeld des Mikroskops in Bezug auf die Probe (102) entsprechend dem Bewegungsvektor bewegt hat;
   Zusammenstellen eines Satzes von Bildern, die das Zielobjekt (410) verfolgen, wobei der Satz von Bildern das dritte Bild, jedoch nicht das zweite Bild einschließt.

4. Verfahren nach Anspruch 1, ferner umfassend: nachfolgend dem Bewegen des Sichtfelds des Mikroskops in Bezug auf die Probe (102) entsprechend dem Bewegungsvektor: Aufnehmen des dritten Bildes, das der Probe (102) entspricht und eine dritte Schnittfläche (404) der Probe (102) zeigt.

5. Verfahren nach Anspruch 1, ferner umfassend:

   Erhalten des dritten Bildes, das der Probe (102) entspricht und eine dritte Schnittfläche der Probe (102) zeigt;
   wobei das dritte Bild durch das Mikroskop aufgenommen wird, nachdem sich das Sichtfeld des Mikroskops in Bezug auf die Probe (102) entsprechend dem Bewegungsvektor bewegt hat;
   Zusammenstellen eines Satzes von Bildern, die das Zielobjekt (410) verfolgen, wobei der Satz von Bildern das zweite Bild und das dritte Bild einschließt.

6. Verfahren nach Anspruch 1, wobei das Bestimmen des bestimmten Objekts von Interesse der im segmentierten Bild (534) gezeigten Objekte von Interesse, dem der höchste Ähnlichkeitswert mit dem im ersten Bild (116) gezeigten Zielobjekt (410) zugeordnet ist, als das im segmentierten Bild (534) gezeigte Zielobjekt (410) Folgendes umfasst: Bestimmen, dass das bestimmte Objekt von Interesse der ersten Position im ersten Bild (116) am nächsten ist.

7. Verfahren nach Anspruch 1, wobei das Bestimmen des bestimmten Objekts von Interesse der im segmentierten Bild (534) gezeigten Objekte von Interesse, dem der höchste Ähnlichkeitswert mit dem im ersten Bild (116) gezeigten Zielobjekt (410) zugeordnet ist, als das im segmentierten Bild (534) gezeigte Zielobjekt (410) umfasst:
   Bestimmen, dass eine erste Form des bestimmten Objekts von Interesse einer zweiten Form des Zielobjekts (410), das im ersten Bild (116) gezeigt ist, am ähnlichsten ist.

8. Verfahren nach Anspruch 1, wobei das erste Bild (116) durch das Mikroskop aufgenommen wird.

9. Verfahren nach Anspruch 1, wobei das erste Bild (116) eine segmentierte Version eines anderen, vom Mikroskop erfassten Bildes ist.

10. Verfahren nach Anspruch 1, wobei die Bildsegmentierungstechnik die Verwendung eines künstlichen neuronalen Netzwerks (KNN) umfasst.

11. Verfahren, umfassend:

    Erhalten eines ersten Bildes (116), das einer Probe (102) entspricht, wobei das erste Bild (116), das der Probe (102) entspricht, eine erste Schnittfläche (402) der Probe (102) zeigt;
    Schneiden einer dünnen Scheibe aus der Blockfläche der Probe (102);
    Erhalten eines zweiten Bildes (116b), das der Probe (102) entspricht, wobei das zweite Bild (116b), das der Probe (102) entspricht, eine zweite Schnittfläche (403) der Probe (102) zeigt, wobei das zweite Bild (116b) durch ein Mikroskop aufgenommen wird;
    **gekennzeichnet durch**
    Identifizieren eines ersten Satzes von Vektoren, die eine Vielzahl von Zielobjekten (410) verbinden, die im ersten Bild (116) gezeigt sind;
    Identifizieren einer ersten Position im ersten Bild (116), die der Vielzahl von Zielobjekten (410) entspricht; Anwenden einer Bildsegmentierungstechnik auf das zweite Bild, um ein segmentiertes Bild (534) zu erhalten, wobei das segmentierte Bild (534) (a) einen ersten Satz von Segmenten angibt, die Objekten von Interesse entsprechen, und (b) einen zweiten Satz von Segmenten, die keinen Objekten von Interesse entsprechen;
    Identifizieren von Untergruppen der im segmentierten Bild gezeigten Objekte von Interesse (534);

Identifizieren von Vektorsätzen, die jeweils den Untergruppen der im segmentierten Bild (534) gezeigten Objekte von Interesse entsprechen;

Bestimmen eines bestimmten Vektorsatzes unter den Vektorsätzen, der der geringsten Differenz zum ersten Vektorsatz zugeordnet ist;

Bestimmen einer bestimmten Untergruppe der Objekte von Interesse unter den Untergruppen der Objekte von Interesse, die durch den bestimmten Vektorsatz verbunden sind, als die Vielzahl von Zielobjekten (410);

Identifizieren einer zweiten Position im segmentierten Bild (534), die der Vielzahl von Zielobjekten (410) entspricht;

Bestimmen eines Bewegungsvektors von der ersten Position im ersten Bild (116) zur zweiten Position im segmentierten Bild (534);

Bewirken einer Bewegung eines Sichtfelds des Mikroskops in Bezug auf die Probe (102) entsprechend dem Bewegungsvektor, um ein drittes Bild aufzunehmen, das der Probe (102) entspricht;

wobei das Verfahren von mindestens einer Vorrichtung ausgeführt wird, die einen Hardwareprozessor einschließt.

**12.** Nicht-transitorisches, computerlesbares Medium, das Anweisungen umfasst, die, wenn sie von einem oder mehreren Hardwareprozessoren ausgeführt werden, bewirken, dass die Hardwareprozessoren das Verfahren nach einem der Ansprüche 1 bis 11 implementieren.

**13.** System, umfassend:

mindestens eine Vorrichtung, die einen Hardwareprozessor einschließt; und
wobei das System so konfiguriert ist, dass es das Verfahren nach einem der Ansprüche 1 bis 11 umsetzt.

**Revendications**

**1.** Procédé, comprenant :

l'obtention d'une première image (116) correspondant à un échantillon (102), la première image (116) correspondant à l'échantillon (102) montre une première surface de section (402) de l'échantillon (102) ;
l'identification d'une première position dans la première image (116) correspondant à un objet cible (410) ;
la découpe d'une fine tranche de la face de bloc de l'échantillon (102) ;

l'obtention d'une deuxième image (116b) correspondant à l'échantillon (102), dans lequel la deuxième image (116b) est capturée par un microscope, la deuxième image (116b) correspondant à l'échantillon (102) montre une deuxième surface de section (403) de l'échantillon (102) ;
**caractérisé par**
l'application d'une technique de segmentation d'image à la deuxième image (116b) pour obtenir une image segmentée (534), dans lequel l'image segmentée (534) indique (a) un premier ensemble de segments correspondant à des objets d'intérêt et (b) un second ensemble de segments ne correspondant pas à des objets d'intérêt quelconques ;
la détermination d'un objet d'intérêt particulier, parmi les objets d'intérêt montrés dans l'image segmentée (534), qui est associé à un score de similarité le plus élevé avec l'objet cible (410) montré dans la première image (116) en tant qu'objet cible (410) montré dans l'image segmentée (534) ;
l'identification d'une seconde position dans l'image segmentée (534) correspondant à l'objet cible (410) ;
la détermination d'un vecteur de déplacement de la première position dans la première image (116) à la seconde position dans l'image segmentée (534) ;
le fait d'amener un champ de vision du microscope à se déplacer, par rapport à l'échantillon (102), selon le vecteur de mouvement pour capturer une troisième image correspondant à l'échantillon (102) ;
dans lequel le procédé est réalisé par au moins un dispositif comportant un processeur matériel.

**2.** Procédé selon la revendication 1, comprenant en outre :
après le déplacement du champ de vision du microscope par rapport à l'échantillon (102), selon le vecteur de mouvement : la capture de la troisième image, correspondant à l'échantillon (102), montrant la deuxième surface de section (403) de l'échantillon (102).

**3.** Procédé selon la revendication 1, comprenant en outre :

l'obtention de la troisième image, correspondant à l'échantillon (102), montrant la deuxième surface de section (403) de l'échantillon (102) ;
dans lequel la troisième image est capturée par le microscope après le déplacement du champ de vision du microscope, par rapport à l'échantillon (102), selon le vecteur de mouvement ;
la compilation d'un ensemble d'images qui suivent l'objet cible (410), l'ensemble d'images comportant la troisième image mais pas la deuxième image.

4. Procédé selon la revendication 1, comprenant en outre :
après le déplacement du champ de vision du microscope, par rapport à l'échantillon (102), selon le vecteur de mouvement : la capture de la troisième image, correspondant à l'échantillon (102), montrant une troisième surface de section (404) de l'échantillon (102).

5. Procédé selon la revendication 1, comprenant en outre :

l'obtention de la troisième image, correspondant à l'échantillon (102), montrant une troisième surface de section de l'échantillon (102) ;
dans lequel la troisième image est capturée par le microscope après le déplacement du champ de vision du microscope, par rapport à l'échantillon (102), selon le vecteur de mouvement ;
la compilation d'un ensemble d'images qui suivent l'objet cible (410), l'ensemble d'images comportant la deuxième image et la troisième image.

6. Procédé selon la revendication 1, dans lequel la détermination de l'objet d'intérêt particulier, parmi les objets d'intérêt montrés dans l'image segmentée (534), qui est associé au score de similarité le plus élevé avec l'objet cible (410) montré dans la première image (116) en tant qu'objet cible (410) montré dans l'image segmentée (534) comprend : la détermination de l'objet d'intérêt particulier qui est le plus proche de la première position dans la première image (116).

7. Procédé selon la revendication 1, dans lequel la détermination de l'objet d'intérêt particulier, parmi les objets d'intérêt montrés dans l'image segmentée (534), qui est associé au score de similarité le plus élevé avec l'objet cible (410) montré dans la première image (116) en tant qu'objet cible (410) montré dans l'image segmentée (534) comprend : le fait de déterminer qu'une première forme de l'objet d'intérêt particulier est la plus similaire à une seconde forme de l'objet cible (410) montré dans la première image (116).

8. Procédé selon la revendication 1, dans lequel la première image (116) est capturée par le microscope.

9. Procédé selon la revendication 1, dans lequel la première image (116) est une version segmentée d'une autre image capturée par le microscope.

10. Procédé selon la revendication 1, dans lequel la technique de segmentation d'image comprend l'utilisation d'un réseau neuronal artificiel (RNA).

11. Procédé, comprenant :

l'obtention d'une première image (116) correspondant à un échantillon (102), la première image (116) correspondant à l'échantillon (102) montre une première surface de section (402) de l'échantillon (102) ;
la découpe d'une fine tranche de la face de bloc de l'échantillon (102) ;
l'obtention d'une deuxième image (116b) correspondant à l'échantillon (102), la deuxième image (116b) correspondant à l'échantillon (102) montre une deuxième surface de section (403) de l'échantillon (102), dans lequel la deuxième image (116b) est capturée par un microscope ;
**caractérisé par**
l'identification d'un premier ensemble de vecteurs reliant une pluralité d'objets cibles (410) montrés dans la première image (116) ;
l'identification d'une première position dans la première image (116) correspondant à la pluralité d'objets cibles (410) ; l'application d'une technique de segmentation d'image à la deuxième image pour obtenir une image segmentée (534), dans lequel l'image segmentée (534) indique (a) un premier ensemble de segments correspondant à des objets d'intérêt et (b) un second ensemble de segments ne correspondant pas à des objets d'intérêt quelconques ;
l'identification de sous-groupes des objets d'intérêt montrés dans l'image segmentée (534) ;
l'identification d'ensembles de vecteurs correspondant respectivement aux sous-groupes des objets d'intérêt montrés dans l'image segmentée (534) ;
la détermination d'un ensemble de vecteurs particulier, parmi les ensembles de vecteurs, qui est associé à une différence moindre par rapport au premier ensemble de vecteurs ;
la détermination d'un sous-groupe particulier d'objets d'intérêt, parmi les sous-groupes des objets d'intérêt, reliés par l'ensemble de vecteurs particulier, en tant que pluralité d'objets cibles (410) ;
l'identification d'une seconde position dans l'image segmentée (534) correspondant à la pluralité d'objets cibles (410) ;
la détermination d'un vecteur de déplacement de la première position dans la première image (116) à la seconde position dans l'image segmentée (534) ;
le fait d'amener un champ de vision du microscope à se déplacer, par rapport à l'échantillon (102), selon le vecteur de mouvement pour capturer une troisième image correspondant à l'échantillon (102) ;

dans lequel le procédé est réalisé par au moins un dispositif comportant un processeur matériel.

**12.** Support non transitoire lisible par ordinateur comprenant des instructions qui, lorsqu'elles sont exécutées par un ou plusieurs processeurs matériels, amènent les processeurs matériels à mettre en oeuvre le procédé selon l'une quelconque des revendications 1 à 11.

**13.** Système, comprenant :

au moins un dispositif comportant un processeur matériel ; et

le système étant configuré pour mettre en oeuvre le procédé selon l'une quelconque des revendications 1 à 11.

System
100

Data Repository
114

Captured
Specimen
Images
116

Segmented
Specimen
Images
118

Microscope
104

Positioning
Parameter(s)
106

Microscope
Positioning
Manager
112

Artificial Neural
Network
108

Prediction
Mask
110

Specimen
102

Fig. 1A

Next
Captured
Specimen
Image
116b

Current
Captured
Specimen
Image
116a

Segmented
Specimen
Image
118

Microscope
104

Positioning
Parameter(s)
106

Artificial Neural
Network
108

Microscope
Positioning
Manager
112

Fig. 1B

Specimen
102

Top surface
120

Section Surface
124

Bottom Surface
122

Specimen
102

Cross Section
126

Fig. 1C

Obtain a captured image of a first section surface of a specimen
202

Identify a target object in the captured image
204

Identify a target object position in the captured image
206

Determine a movement vector from the center of the captured image to the target object position in the captured image
208

Move the field of view of the microscope, with respect to the specimen, according to the movement vector
210

Obtain another captured image of the first section surface of the specimen, centering on the target object
212

Set a second section surface as the current section surface in preparation for obtaining a next captured image
214

A

Fig. 2A

A

Obtain a captured image of the current section surface of the specimen
216

Generate a segmented image based on the captured image
218

Identify an object of interest shown in the segmented image that is associated
with a highest similarity score with the target object shown in the captured
image of the previous section surface
220

Identify a target object position in the segmented image of the current
section surface
222

Determine a movement vector from the target object position in the captured
image of the previous section surface to the target object position in the
segmented image of the current section surface
224

Move the field of view of the microscope according to the movement vector
226

Obtain another captured image of the current section surface of the specimen
228

Yes — Anymore section surfaces? — No
230

Set the next section surface as the current section surface
in preparation for obtaining a next captured image
232

Compile a 3D rendering that
tracks the target object
234

Fig. 2B

Obtain a captured image of a specimen at a first time interval
302

Identify a target object in the captured image
304

Identify a target object position in the captured image
306

Determine a movement vector from the center of the captured image to the target object position in the captured image
308

Move the field of view of the microscope according to the movement vector
310

A

Fig. 3A

```
                    ┌─────────────────────┐
                    │          A          │
                    └─────────────────────┘
                              │
                              ▼
┌──────────────────────────────────────────────────────────────┐
│   Obtain a captured image of the specimen at the current time  │
│                          interval                              │
│                            312                                 │
└──────────────────────────────────────────────────────────────┘
                              │
                              ▼
┌──────────────────────────────────────────────────────────────┐
│       Generate a segmented image based on the captured image   │
│                            314                                 │
└──────────────────────────────────────────────────────────────┘
                              │
                              ▼
┌──────────────────────────────────────────────────────────────┐
│    Identify an object of interest shown in the segmented image │
│   that is associated with a highest similarity score with the  │
│   target object shown in a captured image for a previous time  │
│                          interval                              │
│                            316                                 │
└──────────────────────────────────────────────────────────────┘
                              │
                              ▼
┌──────────────────────────────────────────────────────────────┐
│   Identify a target object position in the segmented image for │
│                   the current time interval                    │
│                            318                                 │
└──────────────────────────────────────────────────────────────┘
                              │
                              ▼
┌──────────────────────────────────────────────────────────────┐
│    Determine a movement vector from the target object position │
│   in the captured image for the previous time interval to the  │
│  target object position in the segmented image for the current │
│                        time interval                           │
│                            320                                 │
└──────────────────────────────────────────────────────────────┘
                              │
                              ▼
┌──────────────────────────────────────────────────────────────┐
│  Move the field of view of the microscope according to the     │
│                      movement vector                           │
│                            322                                 │
└──────────────────────────────────────────────────────────────┘
                              │
                              ▼
            ◇─────────────────────────────────────◇
     Yes    ◇    Still within time period of interest?   ◇
   ◄────────◇                  324                   ◇
            ◇─────────────────────────────────────◇
                              │ No
                              ▼
┌──────────────────────────────────────────────────────────────┐
│  Compile successive specimen images that track the target      │
│                    object over time                            │
│                            326                                 │
└──────────────────────────────────────────────────────────────┘
```

Fig. 3B

Specimen
400

Target Object
410

Section
Surface
402

Section
Surface
404

Fig. 4

Section Surface
502

Field of View
512

Objects of
Interest
552

Objects Not
of Interest
554

Fig. 5A

Captured
Image
522

Objects of
Interest
552

X

Target
Object
510

Objects Not
of Interest
554

Fig. 5B

Fig. 5C

Captured
Image
524a

Objects of
Interest
752

Target Object
510

Objects Not
of Interest
754

Fig. 5D

Fig. 5E

Movement
Vector
556

Fig. 5F

Section Surface
504

Field of
View
514b

Field of
View
514a

Movement
Vector
556

Target Object
510

Fig. 5G

Captured
Image
524b

Target Object
510

Fig. 5H

Section Surface
506

Field of
View
516a

Objects of
Interest
552

Objects Not
of Interest
554

Fig. 5I

Captured
Image
526a

Target Object
510

Fig. 5J

Specimen
600

X

Y

Target Object
at Time T1
610a

Target Object
at Time T2
610b

Fig. 6

Specimen
700

Time T1

Field of View
712

Objects of
Interest
752

Objects Not
of Interest
754

Fig. 7A

Captured
Image
722

Objects of
Interest
752

Target
Object
710

Objects Not
of Interest
754

Fig. 7B

Specimen
700

Field of View
714

Objects of
Interest
752

Objects Not
of Interest
754

Fig. 7C

Captured
Image
724

Objects of
Interest
752

Target Object
710

Objects Not
of Interest
754

Fig. 7D

Fig. 7E

Movement
Vector
756

Fig. 7F

Specimen
700

Field of
View
716

Time T3

Movement
Vector
756

Target Object
710

Fig. 7G

Captured
Image
726

Target Object
710

Fig. 7H

Obtain a captured image of a first section surface of a specimen
802

Identify a group of target objects in the captured image
804

Identify a first set of connecting vectors that connect the target objects in the captured image
806

Identify a target group position in the captured image
808

Determine a movement vector from the center of the captured image to the target group position in the captured image
810

Move the field of view of the microscope according to the movement vector
812

Obtain another captured image of the first section surface of a specimen, centering on the target objects
814

Set a second section surface as the current section surface in preparation for obtaining a next captured image
816

A

Fig. 8A

```
                              ┌─────────────────────┐
                              │          A          │
                              └─────────────────────┘
                                         │
                                         ▼
┌───┐    ┌──────────────────────────────────────────────────────────────────┐
│ C ├───▶│   Obtain a captured image of the current section surface of the   │
└───┘    │                            specimen                               │
         │                              818                                  │
         └──────────────────────────────────────────────────────────────────┘
                                         │
                                         ▼
         ┌──────────────────────────────────────────────────────────────────┐
         │         Generate a segmented image based on the captured image    │
         │                              820                                  │
         └──────────────────────────────────────────────────────────────────┘
                                         │
                                         ▼
         ┌──────────────────────────────────────────────────────────────────┐
         │   Identify subgroups of objects of interest shown in the          │
         │                       segmented image                             │
         │                              822                                  │
         └──────────────────────────────────────────────────────────────────┘
                                         │
                                         ▼
         ┌──────────────────────────────────────────────────────────────────┐
         │   Identify sets of connecting vectors corresponding respectively  │
         │   to the subgroups of objects of interest in the segmented image  │
         │                              824                                  │
         └──────────────────────────────────────────────────────────────────┘
                                         │
                                         ▼
         ┌──────────────────────────────────────────────────────────────────┐
         │ Determine a particular set of connecting vectors, of the sets of  │
         │ connecting vectors, that is associated with a least difference    │
         │ from the set of connecting vectors that connect the target        │
         │ objects in the captured image of the previous section surface     │
         │                              826                                  │
         └──────────────────────────────────────────────────────────────────┘
                                         │
                                         ▼
         ┌──────────────────────────────────────────────────────────────────┐
         │ Determine a particular subgroup of objects of interest            │
         │ corresponding to the particular set of connecting vectors as the  │
         │ group of target objects                                           │
         │                              828                                  │
         └──────────────────────────────────────────────────────────────────┘
                                         │
                                         ▼
         ┌──────────────────────────────────────────────────────────────────┐
         │ Identify a target group position in the segmented image of the    │
         │ current section surface                                           │
         │                              830                                  │
         └──────────────────────────────────────────────────────────────────┘
                                         │
                                         ▼
         ┌──────────────────────────────────────────────────────────────────┐
         │ Determine a movement vector from the target group position in the │
         │ captured image of the previous section surface to the target      │
         │ group position in the segmented image of the current section      │
         │ surface                                                           │
         │                              832                                  │
         └──────────────────────────────────────────────────────────────────┘
                                         │
                                         ▼
         ┌──────────────────────────────────────────────────────────────────┐
         │ Move the field of view of the microscope according to the         │
         │ movement vector                                                   │
         │                              834                                  │
         └──────────────────────────────────────────────────────────────────┘
                                         │
                                         ▼
         ┌ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ┐
           Obtain another captured image of the current section surface of
         │ the specimen                                                      │
                                        836
         └ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ┘
                                         │
                                         ▼
                              ┌─────────────────────┐
                              │          B          │
                              └─────────────────────┘
```

Fig. 8B

B

Anymore section surfaces?
838

Yes

No

Set the next section surface as the current section surface in preparation for obtaining a next captured image
840

Compile a 3D rendering that tracks the target objects
842

C

Fig. 8C

Obtain a captured image of a specimen at a first time interval
902

Identify a group of target objects in the captured image
904

Identify a first set of connecting vectors that connect the target objects in the captured image
906

Identify a target group position in the captured image
908

Determine a movement vector from the center of the captured image to the target group position in the captured image
910

Move the field of view of the microscope according to the movement vector
912

A

Fig. 9A

```
                            ┌──────────────────────┐
                            │          A           │
                            └──────────────────────┘
                                       │
                                       ▼
┌───┐     ┌────────────────────────────────────────────────────────────────┐
│ C │────▶│   Obtain a captured image of the specimen at the current time   │
└───┘     │                          interval                               │
          │                            914                                  │
          └────────────────────────────────────────────────────────────────┘
                                       │
                                       ▼
          ┌────────────────────────────────────────────────────────────────┐
          │        Generate a segmented image based on the captured image   │
          │                            916                                  │
          └────────────────────────────────────────────────────────────────┘
                                       │
                                       ▼
          ┌────────────────────────────────────────────────────────────────┐
          │    Identify subgroups of objects of interest in the segmented   │
          │                           image                                 │
          │                            918                                  │
          └────────────────────────────────────────────────────────────────┘
                                       │
                                       ▼
          ┌────────────────────────────────────────────────────────────────┐
          │   Identify sets of connecting vectors corresponding respectively │
          │    to the subgroups of objects of interest in the segmented     │
          │                           image                                 │
          │                            920                                  │
          └────────────────────────────────────────────────────────────────┘
                                       │
                                       ▼
          ┌────────────────────────────────────────────────────────────────┐
          │  Determine a particular set of connecting vectors, of the sets   │
          │  of connecting vectors, that is associated with a least          │
          │  difference from the set of connecting vectors that connect the  │
          │  target objects in a captured image for a previous time interval │
          │                            922                                  │
          └────────────────────────────────────────────────────────────────┘
                                       │
                                       ▼
          ┌────────────────────────────────────────────────────────────────┐
          │ Determine a particular subgroup of objects of interest           │
          │ corresponding to the particular set of connecting vectors as the │
          │                    target objects                               │
          │                            924                                  │
          └────────────────────────────────────────────────────────────────┘
                                       │
                                       ▼
          ┌────────────────────────────────────────────────────────────────┐
          │  Identify a target group position in the segmented image for the │
          │                    current time interval                        │
          │                            926                                  │
          └────────────────────────────────────────────────────────────────┘
                                       │
                                       ▼
          ┌────────────────────────────────────────────────────────────────┐
          │ Determine a movement vector from the target group position in    │
          │ the captured image for the previous time interval to the target  │
          │ group position in the segmented image for the current time       │
          │ interval                                                         │
          │                            928                                  │
          └────────────────────────────────────────────────────────────────┘
                                       │
                                       ▼
          ┌────────────────────────────────────────────────────────────────┐
          │ Move the field of view of the microscope according to the        │
          │                    movement vector                              │
          │                            930                                  │
          └────────────────────────────────────────────────────────────────┘
                                       │
                                       ▼
                            ┌──────────────────────┐
                            │          B           │
                            └──────────────────────┘
```

Fig. 9B

B

Yes — Still within time period of interest?
932 — No

C

Compile successive images of specimen that track the target objects over time
934

Fig. 9C

Fig. 10A

Captured
Image
1022

Connecting
Vectors
1060

Target
Objects
1010

Fig. 10B

Captured
Image
1022

X

Target
Objects
1010

Fig. 10C

Time T2

Specimen
1000

Field of View
1014

Objects of
Interest
1052

Object Not
of Interest
1054

Fig. 10D

Fig. 10E

Segmented
Image
1034

Objects of
Interest
1052

Objects of
Interest
1052

Fig. 10F

Fig. 10G

Segmented
Image
1034

Connecting
Vectors
1064

Fig. 10H

Segmented
Image
1034

Connecting
Vectors
1066

Fig. 10I

Segmented
Image
1034

Connecting
Vectors
1068

Target
Objects
1050

Fig. 10J

Segmented
Image
1034

Y

Target
Objects
1050

Fig. 10K

Y ← X

Movement
Vector
1056

Fig. 10L

Fig. 10M

Captured
Image
1026

Target
Objects
1050

Fig. 10N

**FIG. 11**

**REFERENCES CITED IN THE DESCRIPTION**

**Patent documents cited in the description**

- US 2014192178 A1
- WO 2008153836 A2
- US 2009091566 A1

**Non-patent literature cited in the description**

- **RONNEBERGER et al.** U-Net: Convolutional Networks for Biomedical Image Segmentation. *MEDICAL IMAGE COMPUTING AND COMPUTER-ASSISTED INTERVENTION- MICCAI 2015,* 2015, 234-241